(19) Europäisches Patentamt
European Patent Office
Office européen des brevets

(11) EP 3 714 001 B1

(12) # EUROPÄISCHE PATENTSCHRIFT

(45) Veröffentlichungstag und Bekanntmachung des Hinweises auf die Patenterteilung:
**13.10.2021 Patentblatt 2021/41**

(21) Anmeldenummer: **18807986.7**

(22) Anmeldetag: **23.11.2018**

(51) Int Cl.:
***C08L 9/02*** (2006.01) ***B29B 7/48*** (2006.01)
***C08L 63/00*** (2006.01) ***B29B 7/74*** (2006.01)
***B29B 7/60*** (2006.01) ***B29B 7/84*** (2006.01)
***C08G 59/18*** (2006.01) ***C08G 59/50*** (2006.01)
***C09J 163/00*** (2006.01)

(86) Internationale Anmeldenummer:
**PCT/EP2018/082356**

(87) Internationale Veröffentlichungsnummer:
**WO 2019/101913 (31.05.2019 Gazette 2019/22)**

(54) **VERFAHREN ZUR HERSTELLUNG HAFTKLEBRIGER REAKTIVKLEBEBÄNDER**
PROCESS FOR PRODUCING PRESSURE-SENSITIVE REACTIVE ADHESIVE TAPES
PROCÉDÉ DE FABRICATION DE RUBANS ADHÉSIFS RÉACTIFS AUTO-ADHÉSIFS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.11.2017 DE 102017221072**

(43) Veröffentlichungstag der Anmeldung:
**30.09.2020 Patentblatt 2020/40**

(73) Patentinhaber: **TESA SE**
**22848 Norderstedt (DE)**

(72) Erfinder:
- **SCHUH, Christian**
**22767 Hamburg (DE)**
- **KIRPICENOK, Olga**
**25474 Ellerbek (DE)**
- **SCHÖNROCK, Julia**
**22527 Hamburg (DE)**

(74) Vertreter: **tesa SE**
**Hugo-Kirchberg-Straße 1**
**22848 Norderstedt (DE)**

(56) Entgegenhaltungen:
**EP-A1- 2 098 354**
**DE-A1-102006 007 108**
**DE-A1-102015 217 860**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zur Herstellung von haftklebrigen Klebemassen umfassend zumindest eine Elastomerkomponente sowie zumindest einen Reaktivklebstoff umfassend ein oder mehrere Epoxidharze sowie zumindest einen Härter für Epoxidharze.

In vielen Bereichen der konstruktiven Industrie kommen vermehrt Klebemassen statt bisheriger mechanischer Verbindungen, wie beispielweise Verschrauben und Vernieten, zum Einsatz. Klebemassen haben eine Reihe von Vorteilen, so können sie in Form von Klebefilmen etwa der genauen Verbindungsgeometrie angepasst werden. Weiterhin ist es möglich, die Verbindungsfestigkeiten durch Wahl der jeweiligen chemischen Systeme anzupassen - angefangen von wiederlösbaren (reversiblen) Verklebungen bis hin zu sehr festen Verklebungen, bei denen der Versuch, sie wieder zu lösen, zur Zerstörung der jeweiligen Substrate führt.

Haft- oder Selbstklebstoffe haben den Vorteil, bei Raumtemperatur bereits ohne erhöhten Druck an einer Vielzahl von Substraten anzuhaften und somit eine Verklebung zu bewirken. Mit doppelseitig klebenden Haftklebebändern können zwei Substrate miteinander verklebt werden. Die Verklebungskräfte, die durch Haftklebemassen erreicht werden, sind aber häufig für solche Anwendungen, in den sehr hohe Verklebungskräfte erzielt werden müssen, nicht ausreichend.

Für eine Vielzahl von Anwendungen werden daher sogenannte reaktive Klebstoffe eingesetzt, die aus miteinander reaktionsfähigen Komponenten aufgebaut sind, die bei Energiezufuhr zur Reaktion gebracht werden und aushärten. Mit solchen Klebmassen lassen sich sehr hohe Verklebungsfestigkeiten erzielen, deren Beständigkeiten Größenordnungen über denen von Selbstklebstoffen liegt. Da die Komponenten von Reaktivklebstoffe üblicherweise in flüssiger Form vorliegen, sind diese für Klebebänder schwierig nutzbar.

Reaktive Klebstoffe werden inzwischen jedoch auch bereits in Form von Klebefilmen oder Klebebändern eingesetzt: In einer Variante solcher Klebefilme reagieren die das Klebeband bildenden Polymere und weitere Komponenten miteinander unter Ausbildung chemischer Bindungen. In einer weiteren Variante wird das Klebeband an sich durch ein sogenanntes Matrixpolymer gebildet, das sich selbst im Wesentlichen inert verhält, in dem aber die zur Reaktion zu bringenden Komponenten homogen verteilt sind. Nach Energiezufuhr können diese zur Reaktion gebracht werden und ein semi-interpenetrierendes Netzwerk in dem Matrixpolymer ausbilden.

Ein Reaktiv-Klebstoffsystem der zweiten Art offenbart beispielsweise die WO 2007/093318 A. Die Schrift beschreibt eine nicht haftklebrige, hitzeaktivierbare Klebemasse auf Basis von Nitrilkautschuk, Epoxidharzen und Härtern, die in Filmform - also als Klebefilm, Klebeband beziehungsweise Klebefolie - angeboten und appliziert wird. Da der Film selbst nicht haftklebrig ist, findet in der Regel eine Vorfixierung auf zumindest einem der zu verklebenden Substrate durch Lamination bei gemäßigt erhöhten Temperaturen - unterhalb der Aktivierungstemperatur der Härtungsreaktion - statt.

Einen weiteren reaktiven Klebstoff mit Nitrilkautschuk als Matrixpolymerkomponente und Epoxiden und Härtern als Reaktivkomponenten zeigt die DE 10 2015 217 860 A. Diese Schrift beschreibt ein Klebeband mit einer Schicht einer Klebemasse enthaltend mindestens ein Polymer, das bevorzugt der genannte Nitrilkautschuk ist, und optional mindestens ein Klebharz, weiterhin enthaltend mindestens ein Reaktivharz, wobei die Klebemasse auf 100 Teile Polymer und Klebharz mindestens 104 Teile des mindestens einen Reaktivharzes enthält, sowie mindestens einen Initiator und/oder Härter.

Für die vorgenannten Klebesysteme wird in nacharbeitbarer Lehre die Herstellung beziehungsweise Verarbeitung aus der Lösung beschrieben. Dies entspricht dem üblichen Vorgehen bei der Herstellung von Haftklebmassen auf Basis von Acrylnitril-Butadien-Kautschuk: dabei werden das Basispolymer und die weiteren Bestandteile in einem geeigneten Lösemittel gelöst, und die erhaltene Mischung wird mittels beispielsweise Rasterwalzenauftrag, Kommarakelbeschichtung, Mehrwalzenbeschichtung oder in einem Druckverfahren auf eine Trägerfolie oder Trennfolie beschichtet und anschließend das Lösemittel in einem Trockenkanal oder -ofen entfernt.

Eine solche Vorgehensweise bedingt, dass die herstellbaren Filme nur begrenzte Dicken aufweisen.

Um in den erwähnten Industrieprozessen jedoch erweiterten Anforderungen zu genügen, ist es erforderlich, auch reaktive Klebesysteme in Form von Klebebändern mit größeren Schichtdicken zur Verfügung zu stellen. Mit relativ dicken Klebefilmen können beispielsweise größere Substratabstände oder Unregelmäßigkeiten in der Klebefuge ausgeglichen werden, ohne dass die Verklebungsfestigkeit hierunter leidet.

Für Klebstoffschichten höherer Dicke hat sich im Stand der Technik insbesondere die Verarbeitung der zugrundeliegenden Klebmassen aus der Schmelze, also lösemittelarm beziehungsweise -frei, bewährt. Solche Verfahren beinhalten Prozessschritte, bei denen die Klebemasse in geschmolzener Form, beispielsweise durch Düsenspalte, auf ein Substrat aufgelegt wird. Diese relativ hochviskosen Schmelzen lassen sich auch als dicke Produkte ausformen. Für solche Prozesse ist es jedoch erforderlich, dass die sich entsprechenden Polymersysteme zur Verarbeitung auch tatsächlich in die Schmelze bringen lassen, dass den Systemen also thermoplastische und somit schmelzbare Polymer zugrunde liegen.

Viele Aggregate zur kontinuierlichen Herstellung und Verarbeitung von lösemittelfreien Polymersystemen sind

bekannt. Zumeist finden Schneckenmaschinen wie Einschnecken- und Doppelschneckenextruder unterschiedlichster Verfahrenslänge und Bestückung Verwendung. Es werden aber auch kontinuierlich arbeitende Kneter verschiedenster Bauart, zum Beispiel auch Kombinationen aus Knetern und Schneckenmaschinen, oder auch Planetwalzenextruder für diese Aufgabe eingesetzt.

Aus dem Stand der Technik sind auch Verfahren bekannt, nach denen nicht-thermoplastische Elastomere durch lösemittelarme beziehungsweise lösemittelfreie Prozesse hergestellt und/oder verarbeitet werden können. Bei einem Teil dieser Verfahren läuft zumindest ein Teil der Verarbeitungsschritte in einem Extruder ab. Diese Verfahren zeigen aber Nachteile für die oben beschrieben Polymere.

In der DE 198 06 609 A wird ein mastikationsfreies Verfahren zum Aufschluss nicht-thermoplastischer Elastomere im Planetwalzenextruder (PWE) beschrieben. Kern der Offenbarung ist, dass die Klebharze bereits mit dem Elastomer zudosiert werden. Massetemperaturen von minimal 98°C sind offenbart. Es werden zusätzlich vernetzende Stoffe erwähnt, die die Kohäsion der Klebmasse steigern. Hierunter findet sich ein epoxidiertes Polyesterharz. Diese Vernetzer reagieren bereits im Prozess. Auch in dieser Schrift werden weder Nitrilkautschuk noch Reaktivharze erwähnt, somit legt auch diese Schrift nicht die Extrusionsverarbeitung solcher Reaktivsysteme nahe, die erst später - nach Verlassen des Extruders - zur Reaktion gebracht werden sollen.

Hiermit einher geht die Offenbarung der DE 10 2009 025 641 A, die eine hitzeaktivierbare reaktive Klebmasse auf Basis von Nitrilkautschuk-Novolkaharzen betrifft. Die Schrift lehrt explizit, dass ein Hotmelt-Prozess (also ein lösemittelfreier Verarbeitungsprozess, wie es die lösemittelarme oder -freie Extruderverarbeitung ist) nur "sehr schwierig möglich" wäre, da "eine frühzeitige Vernetzung während des Herstellungsprozesses vermieden werden" müsse. Die Schrift lehrt also gerade von der Verarbeitung solcher Reaktivsysteme als Hotmelt fort. Die US 8,741,094 B beschreibt reaktive Zweischichtklebebänder aus einer Epoxidkomponente und einer Elastomerkomponente. Als bevorzugt wird Nitrilkautschuk (NBR) beschrieben; auch eine Verarbeitung im Extruder findet Erwähnung. Die Verarbeitung im Extruder betrifft hier allerdings das Aufschmelzen des kalt polymerisierten NBRs, wiederum aber nicht die Verarbeitung eines Reaktivsystems, das seine Reaktivität für einen Zeitpunkt nach der Verarbeitung erhalten soll, als Ganzes.

Die WO 2007/093318 A beschreibet eine nicht haftklebrige, hitzeaktivierbare Klebemasse auf Basis von Nitrilkautschuk und Epoxidharzen. Es werden weder die Verarbeitung als Hotmelt noch eine Verarbeitung im Extruder erwähnt.

Auch die EP 1 819 794 A beschreibt nicht haftklebrige, hitzeaktivierbare Klebemasse auf Basis von Nitrilkautschuk und Epoxidharzen. Be- und Verarbeitungen werden ausschließlich als Lösungsmittelprozesse beschrieben. Vielmehr wird auch hier explizit auf die Schwierigkeit der Hotmeltverarbeitung von reaktiven Klebemassen hingewiesen. Bei Berücksichtigung dieser Schrift hätte es dem Fachmann also wiederum fern gelegen, eine lösemittelfreie Verarbeitung in einem Extruder in Betracht zu ziehen.

Die WO 2006/131214 A beschreibt reaktive, hitzeaktivierbare Klebemassen auf Basis zumindest zweier Nitrilkautschuke und Reaktivharzen, wobei auch Epoxidharze erwähnt sind. Die Schrift beschreibt weiterhin, dass die dort genannten Klebmassensysteme in einem Doppelschneckenextruder mit den zuzusetzenden Harzen vermischt werden könnten. Das dort beschrieben Verfahren fordert jedoch, dass die Klebemasse in der Schmelze hergestellt wird; sodann kann die Vermischung mit den Harzen im genannten Extruder geschehen. Zwingende Voraussetzung gemäß der Schrift sind also schmelzbare - somit thermoplastische - Polymere. Für nicht schmelzbare Nitrilkautschuke ist das dortige Verfahren weder beschrieben noch anwendbar.

Sofern es sich bei den genannten Harzen, die im Extruder der Schmelze beigemischt werden sollen, um die Reaktivharze handelt, setzt dies voraus, dass die Nitrilkautschuke bei einer Temperatur schmelzbar sein müssen, die unter der Aktivierungsenergie für die Reaktion des Reaktivsystems als Ganzes liegt, da dieses sonst in der Schmelze bereits abreagieren würde. Hinzu kommt, dass durch die in der Schmelze verminderte Viskosität des Klebmassensystems der mit der Extrusion verbundene Energieeintrag vergleichsweise niedrig ist.

Nicht thermoplastische Polymersysteme, die somit auch nicht schmelzbar sind, unterliegen somit gänzlich anderen Verfahrensvoraussetzungen. Hinweise darauf, dass sich das genannte Verarbeitungsprinzip im Doppelschneckenextruder auf nichtschmelzende Systeme ausweiten ließe, gibt die genannte Schrift nicht an, geschweige denn dass sie eine hierfür nacharbeitbare Lehre anbieten würde. Zudem zeigen auch die Beispiele ausschließlich eine Verarbeitung aus Lösung (im Kneter), aber keine im Extruder, auch nicht aus der Schmelze. Auch in Kenntnis der weiter oben erwähnten DE 198 06 609 A, die ein mastikationsfreies Aufschlussverfahren nicht-thermoplastischer Elastomere im Planetwalzenextruder (PWE) beschreibt, kommt der Fachmann nicht zu der Erkenntnis, die nicht-thermoplastischen Reaktivsysteme der WO 2006/131214 A im Planetwalzenextruder verarbeiten zu wollen. Denn die DE 198 06 609 A ihrerseits bietet keinerlei Lehre, dass sich reaktive Polymersysteme per Extrusion aufschließen ließen, sondern beschreibt dies nur für nicht-reaktive Selbstklebemassen, die chemisch naturgemäß sehr viel unempfindlicher - insbesondere wärmeunempfindlicher - sind. Kern der Offenbarung dieser Schrift ist, dass die dort eingesetzten Klebharze in die zuvor aufgeschlossene Polymermasse im Doppelschneckenextruder eingearbeitet werden könnten. Dass ein solcher Vorgang mit seinen drastischen Bedingungen jedoch auf reaktive Klebstoffsysteme übertragbar wäre, ohne dass diese ihre Reaktionsfähigkeit während des Prozesses verlieren beziehungsweise für die spätere Anwendung in einen nicht

mehr zufriedenstellenden Zustand überführt werden würden, lässt sich aus der DE 198 06 609 A weder ableiten, geschweige denn dass er nahegelegt werden würde. Zwar beschreibt die DE 198 06 609 A, dass unter geeigneter Verfahrensführung auch thermische Vernetzer eingearbeitet werden können. Bei der thermischen Vernetzung handelt es sich aber um die Kohäsionssteigerung durch Knüpfung von Brücken zwischen den einzelnen Nitrilkautschuk-Polymeren und Ausbau eines entsprechenden Polymernetzwerkes. Ein solches System ist nicht vergleichbar mit einer reaktiven Klebemasse auf Basis eines sich im Wesentlichen inert verhaltenden Nitrilkautschuks als filmbildendes Matrix-Polymer und einem darin getragenen, homogen verteilten Reaktivsystems auf Basis einer Epoxidharz-Komponente und einer Härterkomponente: Hierbei kommt es im Wesentlichen auf die Reaktivität des Reaktivsystems an, nicht jedoch auf die Beteiligung des Nitrilkautschuks. Ziel eines solchen Reaktivsystems ist nicht die eigentliche Kohäsionserhöhung des Basispolymers - also des Matrixpolymers -, sondern die Ausbildung eines hierin separat vorliegenden Netzwerkes, das durch das Reaktivharz und den Härter gebildet wird und regelmäßig chemisch gar nicht an das matrixpolymer gebunden ist. Hierdurch können sehr hohe Verklebungsfestigkeiten - viel höher als die eines vernetzten Nitrilkautschuk-Haftklebstoffs — erzielt werden. Wie und unter welchen Bedingungen ein solches Reaktivsystem in einem Extruder verarbeitet werden könnte, ohne dass es zu einer kompletten Verblockung des Extruders durch Aushärtung des Systems käme, lässt sich aus der DE 198 06 609 A nicht ableiten.
Ausgehend von der Lehre der WO 2006/131214 A, die sich ausschließlich auf schmelzfähige Polymere bezieht, findet der Fachmann auch mit Kenntnis der WO 2006/131214 A also kein Verarbeitungsverfahren für nicht-schmelzfähige, aber reaktive und daher chemisch sehr empfindliche Systeme.

EP 2 098 354 A1 hat ein Verfahren zur Herstellung einer hochkohäsiven nicht-thermoplastischen Haftklebemasse zum Gegenstand, bei dem in einem ersten Mischungsschritt Bestandteile der Haftklebemasse umfassend zumindest ein Elastomer mittels eines ersten Mischaggregats bei einer ersten Aggregattemperatur des ersten Mischaggregats zu einer Vormischung vermischt werden und

in einem zweiten Mischungsschritt die Bestandteile der Vormischung mittels eines zweiten Mischaggregats bei einer zweiten Aggregattemperatur des zweiten Mischaggregats homogen vermischt werden, wobei
die erste Aggregattemperatur und die Temperatur der Vormischung bei der ersten Aggregattemperatur höher ist als die zweite Aggregattemperatur, und
die Vormischung zwischen dem ersten Mischungsschritt und dem zweiten Mischungsschritt durch Zugabe eines Prozessmittels zu der Vormischung abgeschreckt wird, dessen Siedetemperatur niedriger ist als die erste Aggregattemperatur.

Aufgabe der Erfindung ist es, einen Herstell- beziehungsweise Verarbeitungsprozess für solche haftklebrigen Klebesysteme anzubieten, die zumindest teilweise auf nicht-thermoplastische Elastomere zurückzuführen sind, insbesondere für solche haftklebrigen Klebemassen, die eine polymere Filmbildner-Matrix und zumindest ein Reaktivklebstoff umfassen.
Dabei ist es angestrebt, dass die Klebesysteme nach der Verarbeitung - insbesondere nach einer Ausformung zum Film - eine gewisse Haftklebrigkeit aufweisen und zudem noch mittels Aktivierung reaktiv härtbar sind, so dass sie letztlich sehr hohe Verklebungsfestigkeiten ausbilden können. Die Möglichkeit langer Lagerzeiten der nicht gehärteten Klebmassen ohne signifikanten Verlust der Reaktivität wird dabei angestrebt. Es ist zudem gewünscht, dass sich mit dem Verfahren auch große Schichtdicken, etwa von 100 μm und mehr, realisieren lassen.

Gelöst wird die Aufgabe durch die Verwendung eines Planetwalzenextruders zum Aufschluss nicht-thermoplastischer Elastomere durch einen Teil der anwesenden Reaktivharze.

Dementsprechend betrifft der erste Anspruch ein Verfahren zur Herstellung von haftklebrigen Klebemassen, die eine polymere Filmbildner-Matrix und zumindest einen Reaktivklebstoff umfassen. Die Filmbildner-Matrix wird dabei zumindest teilweise durch solche Elastomere gebildet, die zumindest vor der Durchführung des Verfahrens nicht-thermoplastisch sind. Insbesondere bevorzugt umfassen die nicht-thermoplastischen Elastomere zumindest einen Nitrilkautschuk - sofern die polymere Filmbildner-Matrix nur ein nicht-thermoplastisches Elastomer umfasst oder aus einem solchen besteht, ist dieses dementsprechend bevorzugt ein Nitrilkautschuk. Der Reaktivklebstoff umfasst zumindest ein Epoxidharz und einen Härter für Epoxidharze. In dem erfindungsgemäßen Verfahren werden das beziehungsweise die nicht-plastischen Elastomere - insbesondere einschließlich der bevorzugt vorhandenen Nitrilkautschuke -mit zumindest einem Teil der Epoxidharze aufgeschlossen.

Als "nicht-thermoplastisch" im Sinne der vorliegenden Schrift werden solche Substanzen beziehungsweise Zusammensetzungen verstanden, die bei Erwärmung auf eine Temperatur von 150 °C, bevorzugt bei Erwärmung auf eine Temperatur von 200 °C, sehr bevorzugt bei Erwärmung auf eine Temperatur von 250 °C kein thermoplastisches Verhalten zeigen, insbesondere derart, dass sie im Thermoplastizitäts-Test (siehe Experimenteller Teil, Testmethode E) als nicht thermoplastisch gelten.

In Extrusionsprozessen sind nicht-thermoplastische Polymere regelmäßig schwieriger zu verarbeiten als thermoplastische Polymere. Das erfindungsgemäße Verfahren ist hervorragend dazu geeignet, die Problematik bei der

Verarbeitung nicht-thermoplastischer Elastomere zu lösen, ohne die Qualität der resultierenden Klebstoffe nachteilig zu beeinflussen. Durch den erfindungsgemäß durchgeführten Aufschluss können die resultierenden Elastomer-Reaktivharz-Blends selbst trotz Verwendung nicht-thermoplastischer Elastomere thermoplastische Klebstoffe sein.
Sofern im Rahmen dieser Schrift von ‚nicht-thermoplastischen Elastomeren' gesprochen wird, sind damit dementsprechend solche Elastomere gemeint, die zumindest vor dem Aufschluss mit einem Teil der Reaktivharze nicht-thermoplastischer Art sind, selbst wenn diese schlussendlich in einer thermoplastischen Klebmasse vorliegen.

Durch das Aufschließen wird das - üblicherweise granulatförnig eingesetzte - nicht-thermoplastische Elastomer beziehungsweise werden die - üblicherweise granulatförnig eingesetzten -nicht-thermoplastischen Elastomere, die an sich nicht schmelzbar und somit nicht homogeniersierbar wären, derart in eine verarbeitbare Form gebracht, dass schlussendlich ein homogenes Produkt entsteht. Insbesondere wird also in dem Verarbeitungsprozess eine homogene Schmelze erzeugt, die sich zu einem homogenen Film verarbeiten lässt.
Bei dem Aufschluss wird das - üblicherweise granulatförmig eingesetzte - Elastomer mit einer bestimmten Menge an Aufschlussmittel verknetet, mittels der Blend-Bildung kann eine Homogenisierung erzielt werden. Vorliegend wird als Aufschlussmittel zumindest ein Teil der Epoxidharze, die gleichzeitig als Reaktivharze für den Reaktivklebstoff dienen, verwendet.

Der Aufschluss des beziehungsweise der nicht-thermoplastischen Elastomere gilt als erfindungsgemäß bewirkt, wenn die resultierende Klebemasse die folgende Prüfung auf Homogenität besteht:
5 g der Haftklebemasse werden zwischen zwei Prozesslinern mithilfe einer Heißpresse bei 110 °C und 5 bar Druck verpresst. Als Prozesslinerwerden dabei beidseitig mit unterschiedlich abgestuften Silikonsystemen beschichtete PET-Folien einer Dicke von 75 µm eingesetzt. Nach dem Abkühlen wird der Pressling biaxial auseinandergezogen, so dass sich eine Dicke der sich ergebenden Haftklebemasseschicht von etwa 50 µm ergibt. Die Schicht wird vor eine Lampe gehalten. Sie wird als homogen bezeichnet, wenn auf einer gestreckten Fläche von 100 $cm^2$ mit dem Auge weniger als 10, bevorzugt weniger als 5, und insbesondere weniger als 2 unaufgeschlossene Elastomer-Partikel (insbesondere Nitrilkautschuk-Partikel) zu finden sind. Bei der genannten Prüfung sollte ferner kein nicht eingearbeitetes Reaktivharz zu sehen sein.
Anderweitig hergestellte erfindungsgemäße (einschichtige) Klebmasseschichten können entsprechend geprüft werden, indem sie ebenfalls derart biaxial gestreckt werden, bis die entsprechende Schichtdicke von 50 µm resultiert. Daraufhin wird die optische Prüfung wie vorstehend beschrieben durchgeführt.

Der Begriff ‚Nitrilkautschuk' steht wie üblich für ‚Acrylnitril-Butadien-Kautschuk', Kurzzeichen NBR, abgeleitet von nitrile butadiene rubber, und bezeichnet Synthesekautschuke, die durch Copolymerisation von Acrylnitril und Butadien in Masseverhältnissen von ungefähr 10 : 90 bis 52 : 48 (Acrylnitril: Butadien) gewonnen werden.

Klebstoffe sind (nach DIN EN 923: 2008-06) nichtmetallische Stoffe, die Fügeteile durch Flächenhaftung (Adhäsion) und innere Festigkeit (Kohäsion) verbinden. Klebstoffe können selbstklebrig sein und/oder erst durch bestimmte Aktivierung, etwa durch thermische Energie und/oder aktinische Strahlung ihre endgültige Klebkraft ausbilden.

Reaktivklebstoffe (die vor Aktivierung selbstklebrig oder nichtklebrig sein können) umfassen chemisch reaktive Systeme ("Reaktivsysteme"), die durch Aktivierung zu einer Härtungsreaktion führen und besonders hohe Klebkräfte zu den Substraten, auf denen sie verklebt werden, ausbilden können. Diese Reaktivsysteme bestehen häufig aus zwei oder mehreren Komponenten, die unter geeigneten Bedingungen - etwa von außen getriggerter Aktivierung - zur Reaktion miteinander gebracht werden können.

Die Härtung des Reaktivklebstoffs erfolgt dementsprechend insbesondere über die Reaktion eines oder mehrere Reaktivharze mit einem oder mehreren Härtern.

Reaktivharze sind vernetzbare Harze, nämlich funktionelle Gruppen umfassende, oligomere oder kurzkettig polymere Verbindungen, insbesondere mit einer zahlenmittleren Molmasse Mn von nicht mehr als 10 000 g/mol; und zwar insbesondere solche mit mehreren funktionellen Gruppen im Makromolekül. Da es sich bei den Harzen um eine Verteilung von Makromolekülen unterschiedlicher Einzelmassen handelt, können die Reaktivharze Fraktionen enthalten, deren zahlenmittlere Molmasse deutlich höher liegt, zum Beispiel bis etwa 100 000 g/mol, dies gilt insbesondere für polymermodifizierte Reaktivharze, wie beispielsweise elastomermodifizierte Reaktivharze.
Die funktionellen Gruppen der Reaktivharze sind derart, dass sie unter geeigneten Bedingungen - insbesondere nach einer Aktivierung beispielsweise durch erhöhte Temperatur (thermische Energie) und/oder durch aktinische Strahlung (wie Licht, UV-Strahlung, Elektronenstrahlung usw.) und/oder durch Initiierung und/oder Katalyse durch weitere chemische Verbindungen, wie etwa Wasser (feuchtigkeitshärtende Systeme) - mit einem Härtungsreagenz zu einer Aushärtung der die Reaktivharze und das Härtungsreagenz umfassenden Zusammensetzung führen, insbesondere im Sinne einer Vernetzungsreaktion. Härtungsreagenzien können beispielsweise aus einem Härter oder aus einer Mischung mehrere Härter oder aus einer Mischung eines oder mehrerer Härter mit Beschleunigern gebildet werden.

Als Epoxidharze werden im Rahmen dieser Schrift Epoxid-Gruppen umfassende Reaktivharze, insbesondere solche mit mehr als einer Epoxid-Gruppe pro Molekül, bezeichnet, also solche Reaktivharze, bei denen die funktionellen Gruppen oder zumindest ein Teil der funktionellen Gruppen Epoxidgruppen sind. Die Umwandlung der Epoxidharze während der Härtungsreaktion der härtbaren Zusammensetzung erfolgt insbesondere über Polyadditionsreaktionen mit

geeigneten Epoxid-Härtern beziehungsweise durch Polymerisation über die Epoxid-Gruppen. Je nach Wahl des Epoxid-Härters können auch beide Reaktionsmechanismen parallel stattfinden.

Als Härter bezeichnet wird im Rahmen dieser Schrift entsprechend DIN 55945: 1999-07 die - als Bindemittel wirkende(n) - chemische(n) Verbindung(en) bezeichnet, die den vernetzbaren Harzen zugesetzt wird (werden), um die Härtung (Vernetzung) der härtbaren Zusammensetzung, insbesondere in Form eines applizierten Films, zu bewirken. In den härtbaren Zusammensetzungen ist Härter dementsprechend die Bezeichnung für diejenige Komponente, die nach dem Vermischen mit den Reaktivharzen und entsprechender Aktivierung die chemische Vernetzung bewirkt.
Als Beschleuniger werden im Rahmen dieser Schrift solche chemischen Verbindungen bezeichnet, die bei Anwesenheit eines anderen Härters die Reaktionsgeschwindigkeit der Härtungsreaktion und/oder die Geschwindigkeit der Aktivierung der Härtung der Epoxidharze insbesondere im Sinne eines Synergismus erhöhen.
Die Listen zur Auswahl der als Härter beziehungsweise als Beschleuniger einsetzbaren Substanzen überschneiden sich dabei, wobei die einzelnen Vertreter auch gleichzeitig beide Funktionsweisen realisieren können, so dass der Übergang zwischen Härter und Beschleuniger in der Regel fließend ist. Weiterhin wirken häufig chemische Verbindungen, die im alleinigen Einsatz als Härter genutzt werden können, im Einsatz mit einem weiteren Härter als Beschleuniger. Härtungsreaktionen sind in der dynamischen Differenzkalometrie (DSC) grundsätzlich als Peak identifizierbar. Als Beschleuniger sind insbesondere solche Verbindungen zu verstehen, deren Zugabe den Härtungspeak eines bestimmten Härters zu niedrigeren Temperaturen verschiebt. Zusätzliche Härter sind hingegen insbesondere solche Verbindungen, die zu einem zweiten - im Wesentlichen isoliert vorliegenden, sich aber gegebenenfalls auch mit dem ersten Peak überlagernden - Peak einer Härtungsreaktion im DSC führen.

Mit dem Attribut "haftklebrig" - auch als Bestandteil von Substantiven wie etwa in Haftklebstoff -oder synonym mit dem Attribut "selbstklebrig" - ebenfalls auch als Bestandteil von Substantiven - werden im Rahmen dieser Schrift solche Zusammensetzungen bezeichnet, die bereits unter relativ schwachem Andruck - sofern nicht anders angegeben, bei Raumtemperatur, also 23 °C - eine dauerhafte Verbindung mit dem Haftgrund erlauben und nach Gebrauch im Wesentlichen rückstandsfrei vom Haftgrund wieder abgelöst werden können. Haftklebstoffe werden bevorzugt in Form von Klebebändern eingesetzt. Im Sinne der vorliegenden Erfindung besitzt ein haftklebriges Klebeband eine Klebkraft im unausgehärteten Zustand von wenigstens 1 N/cm. Die Klebkraft wird hierbei auf Stahl analog ISO 29862:2007 (Methode 3) bei 23 °C und 50 % relativer Luftfeuchte bei einer Abzugsgeschwindigkeit von 300 mm/min und einem Abzugswinkel von 180° bestimmt. Als Verstärkungsfolie wird eine geätzte PET-Folie mit einer Dicke von 36 $\mu$m verwendet, wie sie von der Firma Coveme (Italien) erhältlich ist. Die Verklebung eines 2 cm breiten Messstreifens wird dabei mittels einer Anrollmaschine mit 4 kg bei einer Temperatur von 23 °C vorgenommen. Das Klebeband wird eine Stunde nach der Applikation abgezogen. Der Messwert (in N/cm) ergibt sich als Mittelwert aus drei Einzelmessungen. Haftklebstoffe wirken somit bei Raumtemperatur permanent haftklebrig, weisen also eine hinreichend geringe Viskosität und eine hohe Anfassklebrigkeit auf, so dass sie die Oberfläche des jeweiligen Klebegrunds bereits bei geringem Andruck benetzen. Die Verklebbarkeit der Haftklebestoffe beruht auf ihren adhäsiven Eigenschaften und die Wiederablösbarkeit auf ihren kohäsiven Eigenschaften.

Erfindungsgemäß ist es gelungen, bei der Herstellung von Klebebändern den Aufschluss ansonsten schwierig verarbeitbarer nicht-thermoplastischer Elastomere - wie insbesondere Nitrilkautschuk - durch eine Komponente des Reaktivklebstoffs, nämlich zumindest einen Teil der Reaktivharze, zu bewirken. Dadurch konnte es zudem erreicht werden, auf die sonst üblicherweise eingesetzten Aufschlusskomponenten - wie Klebharze oder Weichmacher oder dergleichen - zu verzichten. Diese üblichen Aufschlusskomponenten haben erfahrungsgemäß einen nachteiligen - weil die eigentliche Rezeptur verfälschenden - Einfluss auf die schlussendlich bewirkten Klebkräfte, die mit der haftklebrigen, härtbaren Klebemasse bewirkt werden können.
Der Erfolg des erfindungsgemäß vorgeschlagenen Verfahrens war umso weniger zu erwarten, als dass nicht-thermoplastische Elastomere - wie etwa Nitrilkautschuke - regelmäßig schwieriger aufzuschließen sind als thermoplastische Elastomere. Insbesondere nicht-thermoplastische Elastomere mit erhöhter Polarität - wie etwa Nitrilkautschuke mit relativ hohem Acrylnitrilanteil - zeichnen sich durch eine abnehmende Elastizität und damit eine erschwerte Verarbeitbarkeit aus. Zudem wurde mit dem Reaktivharz hierzu ein chemisch empfindliches System verwendet, so dass zu erwarten gewesen wäre, dass es unter den Bedingungen während des Aufschlusses - nämlich hoher eingetragener Scherenergie - zu einem Verbrennen des Nitrilkautschuks oder zu anderen unerwünschten Reaktionen unter Beteiligung des Reaktivharzes, etwa zu erheblicher Vergelung, die eine gleichmäßige Beschichtung zum Klebefilm verhindern würde, kommen würde.
Erfindungsgemäß gelingt es mit dem erfindungsgemäßen Verfahren dabei, zwei Prozessschritte bei Compoundierung im Planetwalzenextruder und gegebenenfalls nachgeschalteten Aggregaten zu vereinen: Zum einen die Realisierung guter Verarbeitbarkeit des nicht-thermoplastischen Elastomers durch den Aufschluss des Elastomers in der ersten Compoundierzone des Planetwalzenextruders; zum anderen (ebenda sowie in den nachgeschalteten Compoundierzonen und gegebenenfalls weiteren Aggregaten) die für die resultierende Klebemasse gewünschte homogene Einbringung des Reaktivharzes in die Elastomer-Matrix.

Die mit dem erfindungsgemäßen Verfahren hergestellten Klebemassen umfassen eine Filmbildner-Komponente (im folgenden "Filmbildner-Matrix" genannt) und eine Reaktivkomponente (im folgenden "Reaktivklebstoff" genannt). Insbesondere werden die Klebemassen zum Klebefilm ausgeformt und dienen in dieser Form als Klebeband oder als Bestandteil eines Klebebandes.

Die Filmbildner-Matrix sorgt insbesondere dafür, dass ein formstabiler Film (die räumliche Ausdehnung in Dickenrichtung des Films ist in der Regel sehr viel kleiner als die räumlichen Ausdehnungen in Langs- und Querrichtung, also als in den zwei Raumrichtungen der Flächenausdehnung des Films) zur Verfügung gestellt werden kann, während die Reaktivkomponente zur Aushärtung des Klebebandes und damit zur Erzielung hoher Endklebfestigkeiten dient.

Bei den erfindungsgemäßen Klebebändern fungieren dementsprechend das beziehungsweise die aufgeschlossenen Elastomere - einschließlich dem beziehungsweise der bevorzugt vorhandenen Nitrilkautschuke - als polymere filmbildende Matrix (Filmbildner-Matrix), die in der Lage ist, einen formstabilen und/oder selbsttragenden Klebefilm auszubilden, insbesondere nach Beschichtung der haftklebrigen Klebemasse auf ein permanentes oder ein temporär verwendetes Trägermaterial.

In diese Filmbildner-Matrix ist der Reaktivklebstoff - insbesondere homogen verteilt - eingebettet, insbesondere so dass er im erfindungsgemäßen Klebefilm im Wesentlichen die gleiche (makroskopische) Raumverteilung einnimmt wie die Filmbildner-Matrix. Reaktivklebstoffe wären ohne die Matrix in der Regel nicht formstabil, sondern würden insbesondere flüssig vorliegen.

Bei der Aushärtung kann der Reaktivklebstoff ein separates Netzwerk zur Filmbildner-Matrix ausbilden, so dass dann insbesondere zwei unabhängige, sich durchdringende Netzwerke vorliegen. Während das Netzwerk des reagierten Reaktivklebstoffs dabei jedenfalls ein chemisch vernetztes System darstellt, kann das Netzwerk, das durch die Filmbildner-Matrix gebildet ist, entweder ebenfalls durch chemische Vernetzung, aber auch durch physikalische Vernetzung gebildet sein, etwa beispielsweise durch rein mechanische Verschlaufungen. In bevorzugter Vorgehensweise ist der Reaktivklebstoff derart gewählt, dass er sich - insbesondere unter Verarbeitungs- und Härtungsbedingungen - im Wesentlichen inert zu den Elastomeren verhält, also keinerlei chemische Bindungen zu den Makromolekülen der Filmbildner-Matrix aufbaut oder nur in nicht signifikantem Umfang.

In alternativer Vorgehensweise kann es aber auch gewünscht sein, eben solche chemischen Verknüpfungen zwischen dem durch den Reaktivklebstoff aufgebauten Netzwerk und der Filmbildner-Matrix zu bewirken, etwa um die schlussendliche Kohäsion des Gesamtsystems zu verbessern. Der Reaktivklebstoff und/oder die - insbesondere als nicht-thermoplastische Elastomere eingesetzten - Elastomere können beispielsweise durch entsprechende funktionelle Gruppen modifiziert sein, um eine solche Verknüpfung zu ermöglichen. Dabei ist jedoch darauf zu achten, dass bei der Verarbeitung im Planetwalzenextruder noch keine solche Reaktion in störendem Maße stattfindet, die den Verarbeitungsprozess erschweren würde.

## Klebebänder

Der allgemeine Ausdruck "Klebeband" umfasst einerseits ein Trägermaterial, welches ein- oder beidseitig mit einer Klebemasse - insbesondere Haftklebemasse - versehen ist und gegebenenfalls weitere, dazwischenliegende Schichten aufweisen kann.

Insbesondere umfasst der Ausdruck "Klebeband" im Sinne der vorliegenden Erfindung jedoch sogenannte "Transferklebebänder", das heißt ein Klebeband ohne Träger. Bei einem Transferklebeband ist die Klebemasse vielmehr vor der Applikation zwischen flexiblen Linern aufgebracht, die mit einer Trennschicht versehen sind und/oder antiadhäsive Eigenschaften aufweisen. Zur Applikation wird regelmäßig zunächst ein Liner entfernt, die Klebemasse appliziert und dann der zweite Liner entfernt. Die Klebemasse kann so direkt zur Verbindung zweier Oberflächen verwendet werden. Derartige trägerlose Transferklebebänder sind erfindungsgemäß besonders bevorzugt. Mit einem solchen erfindungsgemäßen trägerlosen Transferklebeband wird eine in Positionierung und Dosierung sehr genaue Verklebung ermöglicht.

Es sind auch Klebebänder möglich, bei denen nicht mit zwei Linern, sondern mit einem einzigen doppelseitig trennend ausgerüstet Liner gearbeitet wird. Die Klebebandbahn ist dann an ihrer Oberseite mit der einen Seite eines doppelseitig trennend ausgerüsteten Liners abgedeckt, ihre Unterseite mit der Rückseite des doppelseitig trennend ausgerüsteten Liners, insbesondere einer benachbarten Windung auf einem Ballen oder einer Rolle.

Klebebänder, die ein- oder beidseitig mit Klebstoffen beschichtet sind, werden am Ende des Herstellungsprozesses zumeist zu einer Rolle in Form einer archimedischen Spirale aufgewickelt oder kreuzgespult. Um bei doppelseitig klebenden - insbesondere haftklebrigen - Klebebändern zu verhindern, dass die Klebemassen miteinander in Kontakt kommen, oder um bei einseitig klebenden Klebebändern eine Verklebung der Klebemasse auf dem Träger zu verhindern, werden die Klebebänder vor dem Wickeln mit einem Abdeckmaterial (auch als Trennmaterial bezeichnet) eingedeckt, das zusammen mit dem Klebeband aufgewickelt wird. Dem Fachmann sind derartige Abdeckmaterialien unter den Namen Liner oder Releaseliner bekannt. Neben der Abdeckung von ein- oder doppelseitig klebenden Klebebändern werden Liner auch zur Eindeckung von reinen Klebemassen (Transferklebeband) und Klebebandabschnitten (z.B. Etiketten) eingesetzt. Diese Liner sorgen des Weiteren dafür, dass die Klebemasse vor der Anwendung nicht verschmutzt

wird.
Ein Liner ist nicht Bestandteil eines Klebebandes, sondern nur ein Hilfsmittel zu dessen Herstellung, Lagerung oder für die Weiterverarbeitung. Ebenso ist der Verbund nur temporär und nicht dauerhaft.

Die erfindungsgemäßen Klebebänder umfassen zumindest einen Klebefilm, der grundsätzlich ausgebildet ist aus einer polymeren filmbildenden Matrix (im Rahmen dieser Schrift kurz als "Filmbildner-Matrix" bezeichnet) mit einem darin eingebetteten Reaktivklebstoff. Die Filmbildner-Matrix bildet dabei einen selbsttragenden dreidimensionalen Film aus (wobei die räumliche Ausdehnung in Dickenrichtung des Films in der Regel sehr viel kleiner ist als die räumlichen Ausdehnungen in Langs- und Querrichtung, also als in den zwei Raumrichtungen der Flächenausdehnung des Films). In dieser Filmbildner-Matrix ist der Reaktivklebstoff, umfassend zumindest ein Reaktivharz sowie einen Härter für das Reaktivharz, verteilt, bevorzugt homogen verteilt, insbesondere so dass der Reaktivklebstoff - der ohne die Matrix in der Regel nicht selbsttragend wäre - im erfindungsgemäßen Klebefilm im Wesentlichen die gleiche (makroskopische) Raumverteilung einnimmt wie die Filmbildner-Matrix.

Erfindungsgemäß haben die erfindungsgemäßen Klebefilme zumindest vor der Härtungsreaktion haftklebrige Eigenschaften.

Die erfindungsgemäßen Klebstofffilme bestehen grundsätzlich aus einer Matrix, im Rahmen dieser Schrift kurz als "Filmbildner-Matrix" bezeichnet wird, in der die Reaktivharze enthalten sind. Aufgabe dieser Matrix ist es, ein insbesondere inertes Grundgerüst für die Reaktivharze zu bilden, so dass diese nicht - wie im Stand der Technik - flüssig vorliegen und damit die genannten Probleme auslösen können, sondern in einem Film oder einer Folie eingelagert sind. Auf diese Art und Weise wird eine einfachere Handhabung gewährleistet. Die der Filmbildner-Matrix zugrunde liegenden Polymere sind dabei durch hinreichende Wechselwirkungen der Makromoleküle untereinander in der Lage, einen selbsttragenden Film ausbilden zu können, beispielweise - ohne sich hierdurch im Erfindungsgedanken unnötig beschränken zu wollen - durch Ausbildung eines Netzwerks aufgrund physikalischer und/oder chemischer Vernetzung.

Inert bedeutet in diesem Zusammenhang, dass die Reaktivharze unter geeignet gewählten Bedingungen (z. B. bei ausreichend geringen Temperaturen) im Wesentlichen nicht mit der polymeren Filmbildner-Matrix reagieren. Insbesondere soll bei der Herstellung, Verarbeitung (wie etwa der Beschichtung) und Härtung des Klebefilmes keine solche Reaktion stattfinden.

Mit dem erfindungsgemäßen Verfahren ist es möglich, auch solche Klebemassen erfolgreich herzustellen und zu verarbeiten, deren polymere Filmbildner-Matrix durch solche Elastomere gebildet oder maßgeblich geprägt wird, die als nicht-thermoplastische Elastomere eingesetzt werden. Der Anteil an Polymeren an der Filmbildner-Matrix, die in Form nicht-thermoplastischer Elastomere eingesetzt werden, kann dabei grundsätzlich beliebig hoch sein, etwa beispielsweise mehr als 50 Gew.-%, mehr als 75 Gew.-%, mehr als 90 Gew.-% oder sogar 100 Gew.-%, wobei insbesondere gilt, dass die Klebemasse auf 100 Teile Polymer und Klebharz mindestens 104 Teile des mindestens einen Reaktivharzes enthält.
Bei den nicht-thermoplastischen Elastomeren kann es sich insbesondere um einen Nitrilkautschuk oder eine Mischung mehrerer Nitrilkautschuke oder eine Mischung eines oder mehrerer anderer nicht-thermoplastischer Elastomere mit einem oder mehreren Nitrilkautschuken handeln.

In einer besonderen Variante der Erfindung sind als nicht-thermoplastische Elastomere ausschließlich ein Nitrilkautschuk oder eine Mischung mehrerer Nitrilkautschuke eingesetzt, ohne dass weitere nicht-thermoplastische oder thermoplastische Elastomere zugegen wären.

In einer anderen besonderen Ausführung der Erfindung sind neben einem oder mehreren Nitrilkautschuken noch weitere nicht-thermoplastische Elastomere zugegen, beispielweise andere (nicht-thermoplastische) Kautschuke.

Die Herstellung von Nitrilkautschuken erfolgt praktisch ausschließlich in wässriger Emulsion. Im Stand der Technik werden die dabei resultierenden Emulsionen einerseits als solche (NBR-Latex) eingesetzt oder andererseits zum Festkautschuk aufgearbeitet.
Die Eigenschaften des Nitrilkautschuks hängen ab vom Verhältnis der Ausgangsmonomeren und von seiner Molmasse. Aus Nitrilkautschuk zugängliche Vulkanisate besitzen hohe Beständigkeit gegenüber Kraftstoffen, Ölen, Fetten und Kohlenwasserstoffen und zeichnen sich gegenüber solchen aus Naturkautschuk durch günstigeres Alterungsverhalten, niedrigeren Abrieb und verminderte Gasdurchlässigkeit aus.

Nitrilkautschuke sind in einer großen Bandbreite verfügbar. Neben dem Acrylnitril-Gehalt erfolgt die Unterscheidung der verschiedenen Typen insbesondere anhand der Viskosität des Kautschuks. Diese wird üblicherweise durch die Mooney-Viskosität angegeben. Diese wiederum wird zum einen durch die Anzahl der Kettenverzweigungen im Polymer und zum anderen durch die Molmasse bestimmt. Prinzipiell unterscheidet man bei der Polymerisation zwischen der sogenannten Kalt- und der Heißpolymerisation. Die Kaltpolymerisation erfolgt üblicherweise bei Temperaturen von 5 bis 15 °C und führt im Gegensatz zur Heißpolymerisation, die üblicherweise bei 30 bis 40 °C durchgeführt wird, zu einer geringeren Anzahl von Kettenverzeigungen.

Nitrilkautschuke sind von einer Vielzahl von Herstellern wie zum Beispiel Nitriflex, Zeon, LG Chemicals und Lanxess erhältlich.

Carboxylierte Nitrilkautschuk-Typen entstehen durch Terpolymerisation von Acrylnitril und Butadien mit kleinen

Anteilen an Acrylsäure und/oder Methacrylsäure in Emulsion. Sie zeichnen sich durch hohe Festigkeit aus. Die selektive Hydrierung der C=C-Doppelbindung von Nitrilkautschuk führt zu hydrierten Nitrilkautschuken (H-NBR) mit verbesserter Beständigkeit gegen Temperaturerhöhung (bis 150 °C in Heißluft oder Ozon) oder Quellmittel (zum Beispiel schwefelhaltige Rohöle, Brems- beziehungsweise Hydraulikflüssigkeiten). Die Vulkanisation erfolgt mit üblichen Schwefelvernetzern, Peroxiden oder mittels energiereicher Strahlung.

Neben carboxylierten oder hydrierten Nitrilkautschuken gibt es auch flüssige Nitrilkautschuke. Diese werden während der Polymerisation durch die Zugabe von Polymerisationsreglern in ihrer Molmasse begrenzt und werden daher als flüssige Kautschuke erhalten.

Zwecks verbesserter Verarbeitungsfähigkeit von Kautschuken, beispielsweise dem Granulieren von Granulat aus großen Kautschukballen vor der Weiterverarbeitung in Mischern, werden dem Kautschuken häufig inerte Trennhilfsmittel wie Talkum, Silicate (Talk, Ton, Glimmer), Zinkstearat und PVC-Puder zugesetzt.

Sehr positiv verläuft das erfindungsgemäße Verfahren auch für solche Klebemassen, bei denen als nicht-thermoplastische Elastomere teilweise oder ausschließlich solche Nitrilkautschuke eingesetzt werden, die einen Acrylnitrilantreil von mindestens 25 %, bevorzugt von mindestens 30 %, sehr bevorzugt von mindestens 35 % besitzen. Solche Nitrilkautschuke besitzen recht polare Eigenschaften. Umso erstaunlicher war die Feststellung, dass sich ebenfalls sehr polare Epoxide (im Sinne der eingesetzten Reaktivharze) als Aufschlussmittel verwenden lassen, ohne dass es zu ungewünschten Wechselwirkungen oder Nebenreaktionen während des Aufschlusses kommt, ohne dass also das schlussendlich erforderliche Reaktivsystem beeinträchtigt oder gar zerstört werden würde. In hervorragender Weise können mit dem erfindungsgemäßen Verfahren auch solche Klebmassen hergestellt werden, bei denen der Nitrilkautschuk ein heißpolymerisierter Nitrilkautschuk ist. Solche Nitrilkautschuke sind hochverzweigt, besitzen daher eine besonders hohen Neigung zur physikalischen Anvernetzung und zeigen somit besonders gute Scherfestigkeiten auch im unausgehärteten Zustand.

Reaktivharze unterscheiden sich von für Klebmassen, insbesondere für Haftklebemassen, häufig eingesetzten Klebharzen. Unter einem "Klebharz" wird entsprechend dem allgemeinen Fachmannverständnis ein oligomeres oder polymeres Harz verstanden, das lediglich die Adhäsion (den Tack, die Eigenklebrigkeit) der Haftklebemasse im Vergleich zu der keinen Klebharz enthaltenden, ansonsten aber identischen Haftklebemasse erhöht. Typischerweise enthalten Klebharze außer Doppelbindungen (im Fall der ungesättigten Harze) keine reaktiven Gruppen, da sich ihre Eigenschaften über die Lebensdauer des Haftklebstoffes nicht ändern sollen. Für eher unpolare Haftklebemassen werden als Klebharze beispielsweise partiell oder vollständig hydrierte Harze auf Basis von Kolophonium und Kolophoniumderivaten, hydrierte Polymerisate des Dicyclopentadiens, partiell, selektiv oder vollständig hydrierte Kohlenwasserstoffharze auf Basis von C5-, C5/C9- oder C9-Monomerströmen, Polyterpenharze auf Basis von a-Pinen und/oder ß-Pinen und/oder δ-Limonen und/oder Δ3-Caren, hydrierte Polymerisate von bevorzugt reinen C8- und C9-Aromaten. Vorgenannte Klebharze können sowohl allein als auch im Gemisch eingesetzt. Für polare Haftklebemassen sind polare Harze als kompatibel dem Fachmann bekannt, beispielsweise Terpenphenol oder Kolophonium basierende Harze. Die vorstehend erwähnten Kolophoniumharze schließen zum Beispiel natürliches Kolophonium, polymerisiertes Kolophonium, teilweise hydriertes Kolophonium, vollständig hydriertes Kolophonium, veresterte Produkte dieser Kolophoniumarten (wie Glycerinester, Pentaerythritester, Ethylenglycolester und Methylester) und Kolophoniumderivate (wie Disproportionierungs-Kolophonium, mit Fumarsäure modifiziertes Kolophonium und mit Kalk modifiziertes Kolophonium) ein. Auch Klebharze auf der Basis von Acrylaten und Methacrylaten sind bekannt. Auf die Darstellung des Wissensstandes im "Handbook of Pressure Sensitive Adhesive Technology" von Donatas Satas (van Nostrand, 1989) Kapitel 25 "Tackifier Resins" sei ausdrücklich hingewiesen.

Als Reaktivharz können dementgegen im Prinzip alle, dem Fachmann im Bereich der Haftklebemassen oder Reaktivklebstoffe bekannten, in einer Aufbaureaktion vernetzenden Makromoleküle bildenden reaktiven Konstituenten verwendet werden, wie sie zum Beispiel in Gerd Habenicht: Kleben -Grundlagen, Technologien, Anwendungen, 6. Auflage, Springer, 2009, beschrieben sind. Beispiel-haft tragen Reaktivharze Epoxid-, Hydroxy-, Amino-, Acrylat-, Methacrylat-, Styrol-, Thiol-, Isocyanat- oder Carboxylgruppen. Typischerweise werden zur Vernetzung von Reaktivharzen auf Basis von Polyaddition beziehungsweise Polykondensationsreaktionen andere reaktive Gruppen tragende Moleküle - also Härter - benötigt. Vernetzende Reaktivharze enthalten insbesondere mindestens 2 reaktive Gruppen pro Molekül. Als Reaktivharz zum Aufschluss der nicht-thermoplastischen Elastomere - insbesondere des oder der Nitrilkautschuke - in der ersten Compoundierzone kommt erfindungsgemäß zumindest ein Epoxidharz zum Einsatz.

Mit Epoxidharzen lassen sich Klebstoffe von besonders hoher Scherfestigkeit herstellen. Außerdem sind die Vernetzungsreaktionen gut initiier- und handhabbar. In ungehärtetem Zustand sind die unter Verwendung von Epoxidharzen hergestellten Klebemassen ausreichend lagerstabil. Dabei ist als Reaktivharz mindestens ein Epoxidharz auf Basis von Bisphenol-A, Bisphenol-S, Bisphenol-F, einem Epoxy-Novolak, einem Epoxy-Kresol-Novolak oder einem nitrilkautschukmodifizierten Epoxidharz besonders bevorzugt, insbesondere sind Mischungen aus Epoxy-Kresol-Novolaken und NBR-modifizierten Epoxidharzen aufgrund der besonders ausgewogenen haftklebrigen Eigenschaften des unausgehärteten Haftklebstoffs kombiniert mit sehr guten Verklebungsfestigkeiten im ausgehärteten Zustand ganz besonders hervorzuheben. Zum Einstellen der Aushärtegeschwindigkeit können solchen besonders bevorzugten Kombinationen bis zu

einem Drittel der Epoxidharzzusammensetzung flüssige Bisphenol-A-Diglycidylether begemischt werden.

Als besonders vorteilhaft hat es sich gezeigt, wenn die Reaktivharze, die in der ersten Compoundierzone zum Aufschluss der nicht-thermoplastischen Elastomere eingebracht werden, ganz oder zumindest zum wesentlichen Teil (insbesondere mehr als 50 %, mehr bevorzugt mehr als 75 %) solche Epoxidharze mit einer Erweichungstemperatur von mindestens 40 °C und/oder solche Reaktivharze mit einer Viskosität von mehr als 50 Pa·s bei Raumtemperatur sind. Diese Harze haben sich zum Aufschließen der nicht-thermoplastischen Elastomere - insbesondere der Nitrilkautschuke - als sehr vorteilhaft herausgestellt.

Epoxidharze, die in den Zusammensetzungen der Erfindung nützlich sind, sind beliebige organische Verbindungen mit wenigstens einem Oxiranring, die durch eine Ringöffnungsreaktion polymerisierbar sind. Solche Materialien, die allgemein als Epoxide bezeichnet werden, umfassen sowohl monomere als auch polymere Epoxide und können aliphatisch, cycloaliphatisch oder aromatisch sein. Diese Materialien weisen im Allgemeinen im Durchschnitt wenigstens zwei Epoxidgruppen pro Molekül, vorzugsweise mehr als zwei Epoxidgruppen pro Molekül, auf. Die "durchschnittliche" Anzahl an Epoxidgruppen pro Molekül wird als die Anzahl an Epoxidgruppen in dem epoxidhaltigen Material dividiert durch die Gesamtanzahl an vorliegenden Epoxidmolekülen definiert. Die polymeren Epoxide umfassen lineare Polymere mit endständigen Epoxidgruppen (z. B. ein Diglycidylether eines Polyoxyalkylenglycols), Polymere mit Gerüstoxiraneinheiten (z. B. Polybutadien-Polyepoxid) und Polymere mit Epoxidseitengruppen (z. B. ein Glycidylmethacrylatpolymer oder - copolymer). Die Molmasse (Zahlenmittel $M_n$) des epoxidhaltigen Materials kann von 58 bis etwa 100 000 g/mol oder mehr variieren. Mischungen aus verschiedenen epoxidhaltigen Materialien können auch in den Hotmelt-Zusammensetzungen der Erfindung verwendet werden. Nützliche epoxidhaltige Materialien umfassen jene, die Cyclohexenoxidgruppen, wie die Epoxycyclo-hexancarboxylate, die durch 3,4-Epoxycyclohexylmethyl-3,4-epoxycyclohexancarboxylat, 3,4-Epoxy-2-methylcyclohexylmethyl-3,4-epoxy-2-methylcyclohexancarboxylat und Bis(3,4-epoxy-6-methylcyclohexylme-thyl)adipat exemplifiziert sind, enthalten. Für eine detailliertere Liste von nützlichen Epoxiden dieser Art kann auf U.S. Patent Nr. 3,117,099 verwiesen werden.

Weitere epoxidhaltige Materialien, die bei der Anwendung dieser Erfindung besonders nützlich sind, umfassen Glycidylethermonomere. Beispiele sind die Glycidylether von mehrwertigen Phenolen, die durch Reaktion eines mehrwertigen Phenols mit einem Überschuss an Chlorhydrin, wie Epichlorhydrin (z. B. der Diglycidylether von 2,2-Bis-(2,3-epoxypropoxyphenol)propan), erhalten werden. Weitere Beispiele von Epoxiden dieses Typs, die bei der Anwendung dieser Erfindung verwendet werden können, sind in US 3,018,262 A beschrieben.

Es gibt eine Vielzahl an im Handel erhältlichen epoxidhaltigen Materialien, die in dieser Erfindung verwendet werden können. Insbesondere umfassen Epoxide, die leicht erhältlich sind, Octadecylenoxid, Epichlorhydrin, Styroloxid, Vinylcyclohexenoxid, Glycidol, Glycidylmethacrylat, Diglycidylether von Bisphenol A (z. B. jene, die unter den Handelsbezeichnungen EPON 828, EPON 1004 und EPON 1001F von Shell Chemical Co. und DER-332 und DER-334 von Dow Chemical Co. erhältlich sind), Diglycidylether von Bisphenol F (z. B. ARALDITE GY281 von Ciba-Geigy), Vinylcyclohexendioxid (z. B. ERL 4206 von Union Carbide Corp.), 3,4-Ep-oxycyclohexylmethyl-3,4-epoxycyclohexencarboxylat (z. B. ERL-4221 von Union Carbide Corp.), 2-(3,4-Epo-xycyclohexyl-5,5-spiro-3,4-epoxy)cyclohexan-metadioxan (z. B. ERL-4234 von Union Carbide Corp.), Bis(3,4-epoxycyclohexyl)adipat (z. B. ERL-4299 von Union Carbide Corp.), Dipentendioxid (z. B. ERL-4269 von Union Carbide Corp.), epoxidiertes Polybutadien (z. B. OXIRON 2001 von FMC Corp.), silikon-harzhaltige Epoxidfunktionalität, Epoxysilane (z. B. beta-(3,4-Epoxycyclohexyl)ethyltrimethoxysilan und gamma-Glycido-xypropyltrimethoxysilan, im Handel erhältlich von Union Carbide), feuerhemmende Epoxidharze (z. B. DER-542, ein bromiertes bisphenolartiges Epoxidharz, erhältlich von Dow Chemical Co.), 1,4-Butandioldiglycidylether (z. B. ARALDITE RD-2 von Ciba-Geigy), hydrierte, auf Bisphenol A-Epichlorhydrin basierende Epoxidharze (z. B. EPONEX 1510 von Shell Chemical Co.) und Polyglycidylether von Phenolformaldehyd-Novolak (z. B. DEN-431 und DEN-438 von Dow Chemical Co.).

Vorzugsweise ist das eine Epoxidharz oder mindestens eines der Epoxidharze ein Feststoff; insbesondere ein solcher mit einer Erweichungstemperatur von mindestens 45 °C oder ein solcher mit einer Viskosität bei 25 °C von mindestens 20 Pa s, bevorzugt 50 Pa s, insbesondere mindestens 150 Pa s (gemessen nach DIN 53019-1; 25 °C, Schergeschwindigkeit $1 \times s^{-1}$).

In einer günstigen Ausführung des erfindungsgemäßen Klebebandes umfassen die Epoxidharze eine Mischung von bei 25 °C flüssigen und bei 25 °C festen Epoxidharzen. Der Anteil der flüssigen Epoxidharze an den Epoxidherzen (E) liegt insbesondere bei 10 bis 90 Gew.-%, weiter bevorzugt bei 20 bis 75 Gew.-%. Die jeweilige Differenz auf 100 Gew.-% der Epoxidharze ist dann durch feste Epoxidharze gegeben. Klebebänder mit solchen Verhältnissen aus flüssigen und festen Epoxid-Komponenten zeigen im unausgehärteten Zustand besonders ausgewogene Klebeigenschaften. Wird ein Klebeband mit besonders guten Auffließeigenschaften gewünscht, so ist der Anteil an flüssigen Epoxidkomponenten bevorzugt 50 bis 80 Gew.-%. Für Anwendungen, bei denen die Klebebänder bereits im unausgehärteten Zustand eine höhere Last tragen müssen, ist ein Anteil von 15 bis 45 Gew.-% besonders bevorzugt. Es kann ein solches Harz oder auch eine Mischung verschiedener Harze eingesetzt werden.

Weiter bevorzugt umfassen die Epoxidharze wenigstens zwei unterschiedliche Epoxidharze (E-1) und (E-2), von denen

a. das erste Epoxidharz (E-1) bei 25 °C eine dynamische Viskosität von weniger als 500 Pa*s aufweist, gemessen nach DIN 53019-1 bei einer Messtemperatur von 25 °C und einer Schergeschwindigkeit $1 \times s^{-1}$, und

b. von denen das zweite Epoxidharz (E-2) eine Erweichungstemperatur von wenigstens 45 °C oder bei 25 °C eine dynamische Viskosität von wenigstens 1000 Pa*s aufweist, gemessen nach DIN 53019-1 bei einer Messtemperatur von 25 °C und einer Schergeschwindigkeit $1 \times S^{-1}$,

wobei insbesondere der Anteil des ersten Epoxidharzes (E-1) 10 bis 90 Gew.-%, bevorzugt 20 bis 75 Gew.-% und der Anteil des zweiten Epoxidharzes (E-2) 10 bis 90 Gew.-%, bevorzugt 25 bis 80 Gew.-% beträgt, bezogen auf die Gesamtheit an Epoxidharzen. Vorteilhaft besteht die Epoxidharz-Komponetne aus diesen beiden Epoxidharze (E-1) und (E-2), so dass sich der Anteil der beiden Epoxidharze (E-1) und (E-2) am gesamten Epoxidharz zu 100 Gew.-% addieren. Besonders gute Haftklebstoffe werden erhalten, wenn der Anteil von Epoxidharz (E2) im Bereich von 40 bis 80 Gew.-%, insbesondere 60 bis 75 Gew.-% ist. In einer speziellen Ausführungsform ist der Anteil an Epoxidharzen (E-2), die eine Erweichungstemperatur von wenigstens 45 °C haben, mindestens 35 Gew.-%, insbesondere im Bereich 40 bis 70 Gew.-%.

Die Kohäsion der unvernetzten Haftklebstoffe bei trotzdem ausreichender Haftklebrigkeit ist besonders gut, wenn der Anteil an Epoxidharzen mit einer Erweichungstemperatur von wenigstens 45 °C mindestens 15 Gew.-% beträgt, insbesondere im Bereich von 20 Gew.-% bis 75 Gew.-% liegt, bezogen auf das gesamte Epoxidharz. Das Auffließverhalten wird verbessert, wenn weniger als 55 Gew.-%, insbesondere zwischen 25 Gew.-% und 45 Gew.-% enthalten sind.

Als Epoxidharz oder als ein Teil der Gesamtheit der Epoxidharze vorteilhaft einzusetzende Epoxidharze sind beispielsweise elastomermodifizierte Epoxidharze, silanmodifizierte Epoxidharze oder fettsäuremodifizierte Epoxidharze.

Als elastomermodifizierte Epoxidharze im Sinne der vorliegenden Erfindung sind - insbesondere flüssige, in der Regel hochviskose - Epoxidharze mit einer mittleren Funktionalität von mindestens zwei und einem Elastomergehalt von bis zu 50 Gew.-%, vorzugsweise mit einem solchen von 5 bis 40 Gew. -%, zu verstehen. Die Epoxidgruppen können endständig und/oder in der Seitenkette des Moleküls angeordnet sein. Der elastomere Strukturanteil dieser flexibilisierten Epoxidharze besteht aus Polyenen, Dienmischpolymeren und Polyurethanen, vorzugsweise aus Polybutadien, Butadien-Styrol- oder Butadien-Acrylnitril-Mischpolymeren.

Ein durch Butadien-Acrylnitril-Copolymere (Nitrilkautschuk) modifizierte Epoxidharz ist beispielweise ein Epoxid-Vorpolymer, das durch Modifizierung eines Epoxidharzes, mit mindestens zwei Epoxidgruppen in den Molekülen, mit einem Nitrilkautschuk erhalten wird. Als Epoxidbasis wird vorteilhaft ein Reaktionsprodukt aus Glycerin oder Propylenglycol und einer halogenhaltigen Epoxidverbindung, wie Epichlorhydrin, oder das Reaktionsprodukt aus einem mehrwertigen Phenol, wie Hydrochinon, Bisphenol-A, und einem halogenhaltigen Epoxid verwendet. Wünschenswert ist ein Reaktionsprodukt aus einem Epoxidharz vom Bisphenol-A-Typ mit zwei endständigen Epoxidgruppen.

Zum Anbinden der Epoxidharze kann im Falle von Butadien-Polymeren oder Butadien-Acrylnitril-Copolymeren (sogenannte Nitrilkautschuke) ein drittes Monomer mit Säurefunktion - zum Beispiel Acrylsäure - mit einpolymerisiert werden, wodurch sogenannte carboxyterminierte-Nitrilkautschuke (CTBN) erhalten werden. In der Regel enthalten diese Verbindungen nicht nur an den Enden, sondern auch entlang der Hauptkette Säuregruppen. CTBN werden beispielweise unter dem Handelsnamen Hycar von der Firma B. F. Goodrich angeboten werden. Diese haben Molmassen zwischen 2000 und 5000 und Acrylnitrilgehalte zwischen 10 % und 30 %. Konkrete Beispiele sind Hycar CTBN $1300 \times 8$, $1300 \times 13$ oder $1300 \times 15$.

Entsprechend verläuft die Reaktion mit Butadien-Polymeren.

Durch Reaktion von Epoxidharzen mit CTBN werden sogenannte epoxy-terminierte-Nitrilkautschuke (ETBN) erhalten, die für diese Erfindung besonders bevorzugt verwendet werden. Kommerziell sind solche ETBN beispielsweise von der Firma Emerald Materials unter dem Namen HYPRO ETBN (vorher Hycar ETBN) — wie beispielsweise Hypro 1300X40 ETBN, Hypro 1300X63 ETBN und Hypro 1300X68 ETBN — erhältlich.

Ein Beispiel für einen epoxy-terminierten Butadienkautschuk ist Hypro 2000X174 ETB.

Weitere Beispiele für elastomer-modifizierte epoxy-funktionale Verbindungen sind ein Reaktionsprodukt eines Diglycidylethers von Neopentylalkohol und eines Butadien/Acrylnitril-Elastomers mit Carboxylenden (z. B. EPONTM Resin 58034 von Resolution Performance Products LLC), ein Reaktionsprodukt eines Diglycidylethers von Bisphenol-A und eines Butadien/Acrylnitril-Elastomers mit Carboxylenden (z. B. EPONTM Resin 58006 von Resolution Performance Products LLC), ein Butadien/Acrylnitril-Elastomer mit Carboxylenden (z. B. CTBN-1300X8 und CTBN-1300X13 von Noveon, Inc., Cleveland, Ohio) und ein Butadien/Acrylnitril-Elastomer mit Aminenden (z. B. ATBN-1300X16 und ATBN-1300X42 von Noveon, Inc.). Ein Beispiel für das elastomer-modifizierte Epoxidharzaddukt ist das Reaktionsprodukt eines Epoxidharzes auf Bisphenol-F-Basis und eines Butadien/Acrylnitril-Elastomers mit Carboxylenden (z. B. EPONTM Resin 58003 von Resolution Performance Products LLC).

Der Anteil der elastomer-modifizierten Epoxidharze bezogen auf die Gesamtmenge an Epoxidharzen kann zwischen 0 und 100 Gew.-% liegen. Für Verklebungen mit besonders hohen Verklebungsfestigkeiten und geringer Dehnung werden eher niedrigere Anteile - wie beispielsweise 0 bis 15 Gew.-% - gewählt. Im Gegensatz dazu werden

Klebstoffe mit hohen Dehnungswerten erhalten, wenn der Anteil größer 40 Gew.-%, insbesondere größer 60 Gew.-% ist. Für viele Anwendungen ist ein ausgewogenes Verhältnis zwischen Verklebungsfestigkeit und Dehnung gewollt. Hier sind Anteile zwischen 20 bis 60 Gew.-%, insbesondere 30 bis 50 Gew.-% bevorzugt. Je nach Anforderungsprofil kann es auch vorteilhaft sein, Klebstoffe mit einem Anteil bis 100 % zu realisieren.

Als weitere geeignete Vertreter für die Epoxidharze können sehr vorteilhaft silanmodifizierte Epoxidharze $E_s$ eingesetzt werden. Dabei kann ein einzelnes silanmodifiziertes Epoxidharz oder zwei, drei oder auch mehrere silanmodifizierte Epoxidharze $E_s$ in der härtbaren Zusammensetzung zugegen sein. Die härtbare Zusammensetzung kann auf das beziehungsweise die silanmodifizierbaren Epoxidharze als härtbare Reaktivharze beschränkt sein. Neben dem beziehungsweise den Epoxidharzen $E_s$ können aber auch weitere Epoxidharze zugegen sein, die nicht silanmodifiziert sind - beispielwiese elastomermodifizierte, insbesondere nitrilkautschukmodifizierte - Epoxidharze und/oder fettsäuremodifizierte Epoxidharze, wie im Einzelnen in dieser Schrift näher ausgeführt -, und/oder auch Reaktivharze, die keine Epoxidharze sind.

Der Anteil der silanmodifizierten Epoxidharze bezogen auf die Gesamtmenge an Epoxidharzen in der härtbaren Zusammensetzung kann zwischen 0 und 100 % liegen. Um das Aufziehen auf bestimmte silikonisierte Liner zu reduzieren, werden eher niedrigere Anteile - wie beispielsweise 5 bis 25 % - gewählt. Für eine ausgewogene Performance auch nach Feucht-Wärme-Lagerung haben sich Anteile zwischen 10 bis 50 Gew.-%, insbesondere 20 bis 40 Gew.-% als herausragend gezeigt.

Ist ein einziges silanmodifiziertes Epoxidharz zugegen, so kann dieses insbesondere ausgewählt werden aus den nachfolgend als bevorzugt beschriebenen silanmodifizierten Epoxidharzen. Sind mehrere silanmodifizierte Epoxidharze zugegen, so ist vorteilhaft zumindest eines der Epoxidharze eines der im Folgenden als bevorzugte silanmodifizierten Epoxidharze beschriebenen Verbindungen. Weiter bevorzugt sind alle silanmodifizierten Epoxidharze solche, wie sie im Folgenden als bevorzugt beschrieben sind.

Die chemische Modifizierung von Epoxidharzen kann zur Steuerung der Eigenschaften von Klebstoffen genutzt werden. Erfindungsgemäße modifizierte Epoxidharze sind insbesondere ausgewählt aus silanmodifizierten Epoxidharzen. Silangruppenmodifizierte Epoxidharze sind solche Epoxidharze, an die eine oder mehrere Silangruppen chemisch gebunden sind.

Prinzipiell gibt es verschiedene Wege, Silangruppen chemisch an Epoxidharze zu binden.

In einer bevorzugten Vorgehensweise wird als Epoxidharz ein solches silanmodifiziertes Epoxidharz eingesetzt, das durch Dealkoholisierungs-Kondensationsreaktion zwischen einem Bisphenol-Epoxidharz (1) und einem hydrolysierbaren Alkoxysilan (2) erhältlich ist. Derartige Epoxidharze sind beispielsweise in der EP 1114834 A beschrieben, deren Offenbarungsgehalt durch Referenz in die vorliegende Schrift einbezogen sein soll.

Das Bisphenol-Epoxidharz (1) kann in vorteilhafter Weise derart gewählt werden, dass es ein Epoxy-Äquivalentgewicht von mehr als 180 g/eq, und bevorzugt von weniger als 5000 g/eq, hat. Für Epoxidharze oder Epoxid-Vernetzer ist das Epoxid-Äquivalentgewicht (Abkürzung EEW) eine charakteristische und wichtige Größe. Nach DIN EN ISO 3001:1999-11 gibt das Epoxid-Äquivalentgewicht den pro Epoxid-Gruppe verbundenen Festkörper des betreffenden Stoffes in Gramm an. Es werden bevorzugt Epoxidharze mit einem EEW > 180 g/eq eingesetzt, da sonst gegebenenfalls nicht ausreichend Hydroxygruppen für die Kondensationsreaktion mit den Alkoxysilanen vorhanden sind.

In bevorzugter Weise werden als Bisphenol-Epoxidharz (1) Verbindungen entsprechend der folgenden Formel

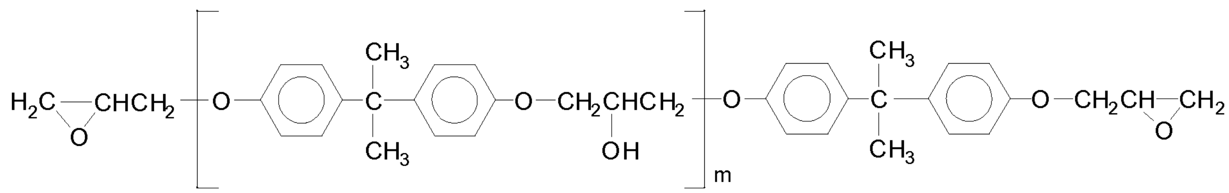

(I)

eingesetzt. In der Regel handelt es sich dabei um eine Mischung entsprechender Verbindungen der Formel (I) mit variierender Wiederholungszahl m der Einheit in der eckigen Klammer. Dabei wird das Bisphenol-Epoxidharz insbesondere derart gewählt, dass der Durchschnitt von m 0,07 bis 16,4, ist die zahlenmittleren Molmassen $M_n$ also zwischen etwa 350 g/mol und 4750 g/mol liegen.

In weiter bevorzugter Weise ist das hydrolysierbare Alkoxysilan (2) entweder eine Verbindung entsprechend der allgemeinen Formel

$R^X_pSi(OR^Y)_{4-p}$ (II)

wobei p 0 oder 1 ist, $R^X$ eine C-C Alkylgruppe, eine Arylgruppe oder eine ungesättigte aliphatische Kohlenwasserstoffgruppe ist, die eine direkt an ein Kohlenstoffatom gebundene funktionelle Gruppe aufweisen kann, $R^Y$ ein Wasserstoffatom oder eine Niederalkylgruppe darstellt, und die Reste $R^Y$ gleich oder verschieden sein können, oder das hydrolysierbare Alkoxysilan (2) ist ein partielles Kondensat der genannten Verbindung. Die direkt an ein Kohlenstoffatom gebundene funktionelle Gruppe kann beispielsweise eine Vinylgruppe, Mercaptogruppe, Epoxygruppe, Glycidoxygrupppe usw. sein. Die Niederalkylgruppe kann beispielsweise eine unverzweigte oder eine verzweigte Alkylgruppe mit 6 oder weniger Kohlenstoffatomen sein.

Beispiele des hydrolysierbaren Alkoxysilans (2) umfassen Tetramethoxysilan, Tetraethoxysilan, Tetrapropoxysilan, Tetraisopropoxysilan, Tetrabuthoxysilan und ähnliche Tetraalkoxysilane; Methyltrimethoxysilan, Methyltriethoxysilan, Methyltripropoxysilan, Methyltributhoxysilan, Ethyltrimethoxysilan, Ethyltriethoxysilan, n-Propyltrimethoxysilan, n-Propyltriethoxysilan, Isopropyltrimethoxysilan, Isopropyltriethoxysilan, Vinyltrimethoxysilan, Vinyltriethoxysilan, 3-Glycidoxypropyltrimethoxysilan, 3-Glycidoxypropyltriethoxysilan, 3-Mercaptopropyltrimethoxy-silan, 3-Mercaptopropyltriethoxysilan, Phenyltrimethoxysilan, Phenyltriethoxysilan, 3,4-Epoxy-cyclohexylethyltrimethoxysilan, 3,4-Epoxycyclohexylethyltrimethoxysilan und ähnliche Trialkoxysilane; oder partielle Kondensate dieser Verbindungen.
Unter diesen Verbindungen werden Tetramethoxysilan, Tetraethoxysilan und ähnliche Tetraalkoxysilane oder partielle Kondensate davon bevorzugt. Besonders bevorzugt ist Poly(tetramethoxysilan), das ein partielles Kondensat von Tetramethoxysilan ist, dargestellt durch die Formel

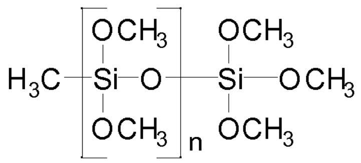

(III)

(wobei der Durchschnitt von n 1 bis 7 beträgt). Das Poly(tetramethoxysilan), das durch die Formel (III) dargestellt ist, kann ein Molekül enthalten, in dem n 0 ist, soweit der Durchschnitt von n 1 oder größer ist. Die zahlenmittlere Molmasse $M_n$ des Poly(tetramethoxysilans) beträgt vorzugsweise etwa 260 bis etwa 1200. Außerdem ist Poly(tetramethoxysilan) im Gegensatz zu Tetramethoxysilan nicht toxisch.

In einer weiteren bevorzugten Vorgehensweise wird als Epoxidharz ein solches silanmodifiziertes Epoxidharz eingesetzt, das durch Modifizierung von Bisphenol-Diglycidylether mit Alkoxysilanen, die eine Epoxidgruppe tragen, erhältlich ist. Derartige silanmodifizierte Epoxide sowie deren Herstellungsverfahren ist in der US 8,835,574 A beschrieben, deren Offenbarungsgehalt ebenfalls per Referenz in diese Schrift einbezogen wird. Bei dem dort geschilderten Verfahren wird zunächst das Epoxy-Alkoxysilan in Gegenwart von Wasser teilhydrolysiert und teilkondensiert. In einem zweiten Schritt wird ein Bisphenol-Diglycidylether zugegeben und an das Siloxan-Teilkondensat gebunden.

Eine nächste vorteilhafte Methode zum Erhalt erfindungsgemäß vorteilhaft einsetzbarer silanmodifizierter Epoxidharze zeigt die EP 2 799 509 A, deren Offenbarungsgehalt ebenfalls per Referenz in diese Schrift einbezogen wird. Im Gegensatz zu dem vorigen Prozess werden die Alkoxygruppen nicht in einem vorgelagerten Schritt teilkondensiert. Die Anbindung der Alkoxysilane erfolgt an aliphatische Hydroxygruppen der Epoxidharze. Diese Schrift nennt als kommerzielle Beispiele KSR-176, KSR-177, KSR-276, KSR-900 von Kukdo Chemical Co. Ltd. Diese Verbindungen sind im Rahmen der vorliegend dargestellten Erfindung hervorragend als silanmodifizierte Epoxidharze einsetzbar.

In einer weiteren Syntheseroute von erfindungsgemäß vorteilhaft einsetzbaren silanmodifizierten Epoxidharzen werden Alkoxysilane, die eine Isocyanatgruppe enthalten, an die aliphatischen Hydroxygruppen unter Ausbildung einer Urethangruppe gebunden.

Als Epoxidharze lassen sich erfindungsgemäß weiterhin sehr vorteilhaft fettsäuremodifizierte Epoxide einsetzen.

Als fettsäuremodifizierte Epoxidharze werden bevorzugt Epoxidharzester, auch als Epoxyester bezeichnet, eingesetzt, also die Veresterungsprodukte von Epoxidharzen (1) mit gesättigten oder ungesättigten Fettsäuren (2).

Es können ein einzelnes fettsäuremodifiziertes Epoxidharz oder zwei, drei oder auch mehrere fettsäuremodifizierte Epoxidharze in der härtbaren Zusammensetzung zugegen sein. Die härtbare Zusammensetzung kann auf das beziehungsweise die fettsäuremodifizierbaren Epoxidharze als härtbare Reaktivharze beschränkt sein. Neben dem beziehungsweise den fettsäuremodifizierten Epoxidharzen können aber auch weitere Epoxidharze zugegen sein, die nicht fettsäuremodifiziert sind - beispielwiese elastomermodifizierte, insbesondere nitrilkautschukmodifizierte - Epoxidharze und/oder silanmodifizierte Epoxidharze, wie im einzelnen in dieser Schrift näher ausgeführt -, und/oder auch Reaktivharze, die keine Epoxidharze sind.

Der Anteil der fettsäuremodifizierten Epoxidharze ($E_F$) bezogen auf die Gesamtmenge an insgesamt eingesetzten Reaktivharzen in der härtbaren Zusammensetzung kann bis zu 100 % betragen. Für Verklebungen mit besonders hohen Verklebungsfestigkeiten auch bei hohen Temperaturen werden eher niedrigere Anteile-wie beispielsweise 5 bis 25 Gew.-% - gewählt. Für eine gute Performance auch nach Feucht-Wärme-Lagerung haben sich Anteile zwischen 10 bis 50 Gew.-%, insbesondere 20 bis 40 Gew.-% als herausragend gezeigt. Bei den vorgenannten Anteilen ist es vorteilhaft, den Rest der Reaktivharze ebenfalls als Epoxidharze zu wählen, die dann aber nicht fettsäuremodifiziert sind.

Ist ein einziges fettsäuremodifiziertes Epoxidharz zugegen, so kann dieses insbesondere ausgewählt werden aus den nachfolgend als bevorzugt beschriebenen fettsäuremodifizierten Epoxidharzen. Sind mehrere fettsäuremodifizierte Epoxidharze zugegen, so ist vorteilhaft zumindest eines der Epoxidharze eines der im folgenden als bevorzugte fettsäuremodifizierten Epoxidharze beschriebenen Verbindungen. Weiter bevorzugt sind alle fettsäuremodifizierten Epoxidharze solche, wie sie im folgenden als bevorzugt beschrieben sind.

Die chemische Modifizierung von Epoxidharzen kann zur Steuerung der Eigenschaften von Klebstoffen genutzt werden. Erfindungsgemäße modifizierte Epoxidharze sind insbesondere ausgewählt aus fettsäuremodifizierten Epoxidharzen. Fettsäuregruppenmodifizierte Epoxidharze sind solche Epoxidharze, an die eine oder mehrere Fettsäuren insbesondere durch Veresterungsreaktionen chemisch gebunden sind.

Als Epoxidharz-Basis für die fettsäuremodifizierten Epoxidharze, insbesondere Epoxyester, können insbesondere Epoxidharze vom Typ Bisphenol A/Epichlorhydrin entsprechend der oben bereits eingeführten allgemeinen Formel

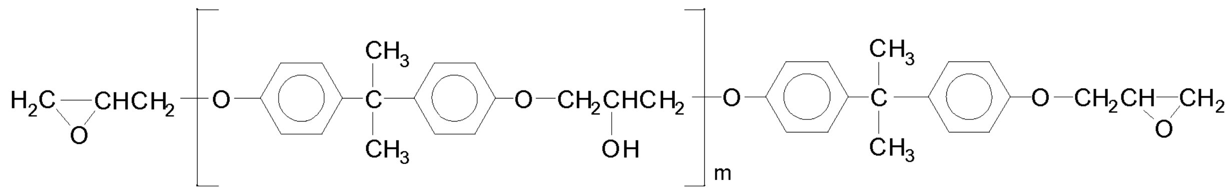

(I)

dienen. Als Basis für die fettsäuremodifizierten Epoxide wird das Bisphenol-Epoxidharz der Formel (I) insbesondere derart gewählt, dass der Durchschnitt von m = 0,07 bis 16,4 ist, die zahlenmittleren Molmassen $M_n$ also zwischen etwa 350 g/mol und 4750 g/mol liegen. Besonders bevorzugt werden Verbindungen der Formel 1 mit m = 2,3 bis m = 10 in reiner Form (mit ganzzahligen Werten für m) oder in Form von Mischungen eingesetzt (entsprechend zahlenmittlerer Molmassen $M_n$ zwischen etwa 1000 und etwa 3000 g/mol).

Sowohl die terminalen Epoxidgruppen, als auch die sekundären Hydroxygruppen von Bisphenol-basierten Epoxidharzen können mit Fettsäuren reagieren. Bei der Veresterung werden üblicherweise zunächst die beiden Epoxid-Ringe geöffnet, dann erfolgt die Reaktion der Hydroxy-Gruppen.

Hierbei ist jede Epoxygruppe äquivalent zu 2 Hydroxygruppen, da nach der Reaktion einer Säuregruppe mit einem Epoxid ein β-Hydroxyester entsteht. Diese β-Hydroxygruppen können auch mit Fettsäuren reagieren. Die Herstellung erfolgt typischerweise bei Temperaturen von 240 - 260°C unter Schutzgasatmosphäre, bevorzugt unter azeotropen Bedingungen, um das freiwerdende Reaktionswasser zu entfernen. Optional wird die Reaktion durch Zugabe von Katalysatoren wie beispielsweise Calcium oder Zinkseifen von zum Beispiel Fettsäuren wie Stearinsäure beschleunigt. Je nach gewünschter Eigenschaft werden 40 bis 80 % der verfügbaren funktionellen Gruppen des Epoxidharzes mit Fettsäuren umgesetzt.

Ein Epoxidharz vom Typ n (entspricht der Anzahl freier OH-Gruppen entlang der Kette) kann im Mittel theoretisch maximal n + 4 Fettsäure-Moleküle pro Epoxidharz-Molekül binden (Veresterungsgrad 100%). Demgemäß ist bei Epoxidharzestern die "Öllänge" wie folgt definiert:

kurzölig: Veresterungsgrad 30-50 %;
mittelölig: Veresterungsgrad 50-70%;
langölig: Veresterungsgrad 70-90%.

Als Fettsäuren für die Veresterung sind beispielsweise Kokosölfettsäure, Ricinenfettsäure (Fettsäure des dehydratisierten Ricinusöls), Leinölfettsäure, Sojaölfettsäure oder Tallölfettsäure erfindungsgemäß gut geeignet.

Weitere erfindungsgemäß vorteilhafte Fettsäuren sind α-Linolensäure, Stearidonsäure, Eicosapentaensäure, Docosahexaensäure, Linolsäure, γ-Linolensäure, Dihomogammlinolensäure, Arachidonsäure, Docosa-7,10,13,16-tetrain-1-Säure, Palmitoleinsäure, Vaccensäure, Ölsäure, Elaidinsäure, Gadoleinsäure, 13-Eicosensäure, Erucasäure,

Nervonsäure, Stearinsäure, Mead'sche Säure.

Auch Dimere und Oligomere von ungesättigten Fettsäuren sind einsetzbar, beispielweise die Dimeren von Tallölfettsäuren.

In der Regel wird nur ein Teil der Reaktivharze, die schlussendlich in der resultierenden Klebmasse als Teil des Reaktivklebstoffs vorliegen, zum Aufschluss der nicht-thermoplastischen Elastomere in der ersten Compoundierzone genutzt werden. Die Zugabe weiterer Mengen an Reaktivharzen im Verlaufe des Herstellverfahrens wird sich nur dann erübrigen, wenn das Verhältnis von Reaktivharzen zu Elastomeren in der in der ersten Compoundierzone hergestellten Compoundiermasse gerade demjenigen in der resultierenden Klebmasse entspricht.

Üblicherweise wird es aber erforderlich sein, zur Herstellung der schlussendlichen Klebmasse jedoch noch weitere Reaktivharze zuzumischen. Dies kann beispielsweise in einer oder in mehreren oder auch in allen der ersten Compoundierzone nachgeschalteten Compoundierzonen des Planetwalzenextruders geschehen - insbesondere bevorzugt ebenfalls jeweils kontinuierlich über weitere Einlassvorrichtungen -, so dass die Klebmasse bei Verlassen des Extruders bereits die gewünschte Zusammensetzung aufweist. Die Zudosierung weiterer Reaktivharzmengen kann alternativ oder zusätzlich auch in einem oder in mehreren dem Planetwalzenextruder nachgeschalteten Mischaggregaten zugegeben werden.

Grundsätzlich können die weiteren zuzusetzenden Reaktivharze dieselben sein, wie sie bereits zum Aufschluss verwendet worden sind, oder denselben Substanzklassen entnommen worden sein. Dies kann insbesondere interessant sein, wenn die Klebmasse beispielsweise nur eine Sorte an Epoxidharzen oder eine begrenzte Anzahl unterschiedlicher Epoxidharze aufweisen soll.

Nach dem Aufschluss ist die Verarbeitbarkeit der ursprünglich nicht-thermoplastischen Elastomere, insbesondere der Nitrilkautschuke, erheblich verbessert. Dies eröffnet die Möglichkeit, auch andere Epoxidharze oder gänzlich andere Reaktivharze zuzumischen, um der Klebmasse eine gewünschte Zusammensetzung zu geben. So können die in späteren Zugabeschritten beigemischten Reaktivharze sich komplett von denen unterscheiden, die zum Aufschluss in der ersten Compoundierzone eingesetzt wurden. Hierdurch lassen sich vielfältige Variationen der gewünschten Klebmasse realisieren, ohne das erfindungsgemäße Verfahren durch zu beeinträchtigen. Durch die Möglichkeit, die einzelnen Compoundierzonen des Planetwalzenextruder unabhängig voneinader auszugestalten und/oder zu temperieren, können in der ersten Compoundierzone nachgeschalteten Compoundierzonen gegebenenfalls auch Verarbeitungsbedingungen realisiert werden, die für einen Aufschluss nicht geeignet wären. Gleiches gilt für nachgeschaltete Mischaggregate. Hierdurch lassen sich beispielsweise gezielt Reaktivharze einmischen, die beispielsweise zur Justierung der Viskosität beziehungsweise der Kohäsion der resultierende Klebemasse dienen sollen, oder beispielsweise auch sehr reaktiver Reaktivharze, insbesondere wenn die vorherrschenden Compoundierungsbedingungen bei deren Beifügung moderat gewählt werden.

**Härter**

Die Klebemasse des erfindungsgemäßen Klebebandes enthält mindestens einen Härter. Erfindungsgemäß kann vorteilhaft mit Einsatz nur eines einzigen Härters - in Abwesenheit weiterer Härter und/oder Beschleuniger - gearbeitet werden, es können aber in anderer bevorzugter Vorgehensweise auch mehrere Härter eingesetzt werden. Werden mehrere Härter eingesetzt, ist der Übergang zwischen Co-Härter(n) und Beschleunigern fließend (siehe hierzu weiter unten).

Als Härter erfindungsgemäß geeignet sind beispielsweise aliphatische Amine, aromatische Amine, modifizierte Amine, Polyamidharze, Säureanhydride, sekundäre Amine, Mercaptane insbesondere Polymercaptane, Polysulfide, Dicyandiamid, organische Säurehydrazide oder Reaktionsprodukte aus Disäuren und multifunktionellen Aminen, insbesondere Reaktionsprodukte aus Pthalsäure und Diethylentriamin.

Besonders bevorzugt werden erfindungsgemäß aminische Härter, insbesondere Dicyandiamid, für die oben beschriebenen Reaktivkomponenten auf Epoxidbasis eingesetzt. In diesem Fall ist die Menge des Härters abhängig von der Epoxidmenge und den Epoxidäquivalenten des verwendeten Epoxides. Die Berechnung erfolgt analog zu der dem Fachmann bekannten Berechnung über Epoxyäquivalente und Aminäquivalente des Aktivators und ist beispielsweise in "Formulierung von Kleb- und Dichtstoffen" von Bodo Müller und Walter Rath (Kapitel 2.2.2) beschrieben. Für das hier verwendete Dicyandiamid Dyhard 100S wurde ein Aminäquivalent von 13 g/eq verwendet.

Initiatoren zur Initiation einer ringöffnenden Polymerisation von Epoxiden sind beispielsweise Imidazole, Bortrifluorid-Aminkomplexe, tertiäre Amine, amin- beziehungsweise ammoniumgeblockte thermische Säurespender wie Tetrabutylammonium triflat, Ammonium triflat, amingeblockte Dodecylbenzylsulfonsäure, Lanthanid Triflate wie Ytterbium (III), Samarium (III), Cer (III), Erbium (III), Lanthan (III) und Dysprosium (III) trifluoromethansulfonat

Unter den Initiatoren für eine kationische UV induzierte Härtung sind insbesondere Sulfonium, Iodonium und Metallocen basierende Systeme einsetzbar. Als Beispiele für Sulfonium basierende Kationen sei auf die Ausführungen in US 6,908,722 B1 (insbesondere Spalten 10 bis 21) verwiesen.

Als Beispiele für Anionen, die als Gegenionen für die oben genannten Kationen dienen, seien Tetrafluoroborat,

Tetraphenylborat, Hexafluorophosphat, Perchlorat, Tetrachloroferrat, Hexafluoroarsenat, Hexafluoroantimonat, Pentafluorohydroxyantimonat, Hexachloroantimonat, Tetrakispentafluorophenylborat, Tetrakis-(pentafluoromethylphenyl)-borat, Bi-(trifluoromethylsulfonyl)-amide und Tris-(trifluoromethylsulfonyl)-methide genannt. Ferner sind insbesondere für Iodonium-basierende Initiatoren auch Chlorid, Bromid oder Iodid als Anionen denkbar, wobei aber Initiatoren, die im Wesentlichen frei von Chlor und Brom sind, bevorzugt sind.

Konkreter zählen zu den einsetzbaren Systemen

- Sulfonium-Salze (siehe zum Beispiel US 4,231,951 A, US 4,256,828 A, US 4,058,401 A, US 4,138,255 A und US 2010/063221 A1) wie Triphenylsulfoniumhexafluoroarsenat, Triphenylsulfoniumhexafluoroborat, Triphenylsulfoniumtetrafluoroborat, Triphenylsulfoniumtetrakis-(pentafluorobenzyl)-borat, Methyldiphenylsulfoniumtetrafluoroborat, Methyldiphenylsulfoniumtetrakis-(pentafluorobenzyl)-borat, Dimethylphenylsulfoniumhexafluorophosphat, Triphenylsulfoniumhexafluorophosphat, Triphenylsulfoniumhexafluoroantimonat, Diphenylnaphthylsulfoniumhexafluoroarsenat, Tritolylsulfoniumhexafluorophosphat, Anisyldiphenylsulfoniumhexafluoroantimonat, 4-Butoxyphenyldiphenylsulfoniumtetrafluoroborat, 4-Chlorophenyldiphenylsulfoniumhexafluoroantimonat, Tris-(4-phenoxyphenyl)-sulfoniumhexafluorophosphat, Di-(4-ethoxyphenyl)-methylsulfonium-hexafluoroarsenat, 4-Acetylphenyldiphenylsulfoniumtetrafluoroborat, 4-Acetylphenyl-diphenylsulfoniumtetrakis-(pentafluorobenzyl)-borat, Tris-(4-thiomethoxyphenyl)-sulfoniumhexafluorophosphat, Di-(methoxysulfonylphenyl)-methylsulfoniumhexafluoroantimonat, Di-(methoxynaphthyl)-methylsulfoniumtetrafluoroborat, Di-(methoxynaphthyl)-methylsulfoniumetrakis-(penta-fluorobenzyl)-borat, Di-(carbomethoxyphenyl)-methylsulfoniumhexafluorophosphat, (4-Octyloxyphenyl)-diphenylsulfoniumtetrakis-(3,5-bis-trifluoromethylphenyl)-borat, Tris-[4-(4-acetylphenyl)-thiophenyl]-sulfoniumtetrakis-(pentafluorophenyl)-borat, Tris-(dodecylphenyl)-sulfoniumtetrakis-(3,5-bis-trifluoromethylphenyl)-borat, 4-Acetamidphenyldiphenylsulfoniumtetrafluoroborat, 4-Acetamidphenyldiphenylsulfoniumtetrakis-(pentafluoro-benzyl)-borat, Dimethylnaphthylsulfoniumhexafluorophosphat, Trifluoromethyldiphenylsulfoniumtetrafluoroborat, Trifluoromethyldiphenylsulfoniumtetrakis-(pentafluorobenzyl)-borat, Phenylmethylbenzylsulfoniumhexafluorophosphat, 5-Methylthianthreniumhexafluorophosphat, 10-Phenyl-9,9-dimethylthioxantheniumhexafluorophosphat, 10-Phenyl-9-oxothioxantheniumtetrafluoroborat, 10-Phenyl-9-oxothioxantheniumtetrakis-(pentafluorobenzyl)-borat, 5-Methyl-10-oxothianthreniumtetrafluoroborat, 5-Methyl-10-oxothianthreniumtetrakis-(pentafluorobenzyl)-borat und 5-Methyl-10,10-dioxothian-threniumhexafluorophosphat,

- Iodonium-Salze (siehe zum Beispiel US 3,729,313 A, US 3,741,769 A, US 4,250,053 A, US 4,394,403 A und US 2010/063221 A1) wie

  Diphenyliodoniumtetrafluoroborat,
  Di-(4-methylphenyl)-iodoniumtetrafluoroborat,
  Phenyl-4-methylphenyliodoniumtetrafluoroborat,
  Di-(4-chlorphenyl)-iodoniumhexafluorophosphat, Dinaphthyliodoniumtetrafluoroborat,
  Di-(4-trifluormethylphenyl)-iodoniumtetrafluoroborat,
  Diphenyliodoniumhexafluorophosphat,
  Di-(4-methylphenyl)-iodoniumhexafluorophosphat, Diphenyliodoniumhexafluoroarsenat,
  Di-(4-phenoxyphenyl)-iodoniumtetrafluoroborat,
  Phenyl-2-thienyliodoniumhexafluorophosphat,
  3,5-Dimethylpyrazolyl-4-phenyliodoniumhexafluorophosphat,
  Diphenyliodoniumhexafluoroantimonat,
  2,2'-Diphenyliodoniumtetrafluoroborat,
  Di-(2,4-dichlorphenyl)-iodoniumhexafluorophosphat,
  Di-(4-bromphenyl)-iodoniumhexafluorophosphat,
  Di-(4-methoxyphenyl)-iodoniumhexafluorophosphat,
  Di-(3-carboxyphenyl)-iodoniumhexafluorophosphat,
  Di-(3-methoxycarbonylphenyl)-iodoniumhexafluorophosphat,
  Di-(3-methoxysulfonylphenyl)-iodoniumhexafluorophosphat,
  Di-(4-acetamidophenyl)-iodoniumhexafluorophosphat,
  Di-(2-benzothienyl)-iodoniumhexafluorophosphat,
  Diaryliodoniumtristrifluormethylsulfonylmethid wie
  Diphenyliodoniumhexafluoroantimonat,
  Diaryliodoniumtetrakis-(pentafluorophenyl)-borat wie
  Diphenyliodoniumtetrakis-(pentafluorophenyl)-borat,,
  (4-n-Desiloxyphenyl)-phenyliodoniumhexafluoroantimonat,
  [4-(2-Hydroxy-n-tetradesiloxy)-phenyl]-phenyliodoniumhexafluoroantimonat,

[4-(2-Hydroxy-n-tetradesiloxy)-phenyl]-phenyliodoniumtrifluorosulfonat,
[4-(2-Hydroxy-n-tetradesiloxy)-phenyl]-phenyliodoniumhexafluorophosphat,
[4-(2-Hydroxy-n-tetradesiloxy)-phenyl]-phenyliodoniumtetrakis-(pentafluorophenyl)-borat,
Bis-(4-tert-butylphenyl)-iodoniumhexafluoroantimonat,
Bis-(4-tert-butylphenyl)-iodoniumhexafluorophosphat,
Bis-(4-tert-butylphenyl)-iodoniumtrifluorosulfonat,
Bis-(4-tert-butylphenyl)-iodoniumtetrafluoroborat,
Bis-(dodecylphenyl)-iodoniumhexafluoroantimonat,
Bis-(dodecylphenyl)-iodoniumtetrafluoroborat,
Bis-(dodecylphenyl)-iodoniumhexafluorophosphat,
Bis-(dodecylphenyl)-iodoniumtrifluoromethylsulfonat,
Di-(dodecylphenyl)-iodoniumhexafluoroantimonat,
Di-(dodecylphenyl)-iodoniumtriflat,
Diphenyliodoniumbisulfat,
4,4'-Dichlorodiphenyliodoniumbisulfat, 4,4'-Dibromodiphenyliodoniumbisulfat,
3,3'-Dinitrodiphenyliodoniumbisulfat, 4,4'-Dimethyldiphenyliodoniumbisulfat,
4,4'-Bis-succinimidodiphenyliodoniumbisulfat, 3-Nitrodiphenyliodoniumbisulfat, 4,4'-Dimethoxydiphenyliodoniumbisulfat,
Bis-(dodecylphenyl)-iodoniumtetrakis-(pentafluorophenyl)-borat,
(4-Octyloxyphenyl)-phenyliodoniumtetrakis-(3,5-bis-trifluoromethylphenyl)-borat und (Tolylcumyl)-iodoniumtetrakis-(pentafluorophenyl)-borat,

und

- Ferrocenium-Salze (siehe zum Beispiel EP 0 542 716 B1) wie η5-(2,4-cyclopentadien-1-yl)-[(1,2,3,4,5,6,9)-(1-methylethyl)-benzol]-eisen.

Beispiele für kommerzialisierte Photoinitiatoren sind Cyracure UVI-6990, Cyracure UVI-6992, Cyracure UVI-6974 und Cyracure UVI-6976 der Firma Union Carbide, Optomer SP-55, Optomer SP-150, Optomer SP-151, Optomer SP-170 und Optomer SP-172 der Firma Adeka, San-Aid SI-45L, San-Aid SI-60L, San-Aid SI-80L, San-Aid SI-100L, San-Aid SI-110L, San-Aid SI-150L und San-Aid SI-180L der Firma Sanshin Chemical, SarCat CD-1010, SarCat CD-1011 und SarCat CD-1012 der Firma Sartomer, Degacure K185 der Firma Degussa, Rhodorsil Photoinitiator 2074 der Firma Rhodia, CI-2481, CI-2624, CI-2639, CI-2064, CI-2734, CI-2855, CI-2823 und CI-2758 der Firma Nippon Soda, Omnicat 320, Omnicat 430, Omnicat 432, Omnicat 440, Omnicat 445, Omnicat 550, Omnicat 550 BL und Omnicat 650 der Firma IGM Resins, Daicat II der Firma Daicel, UVAC 1591 der Firma Daicel-Cytec, FFC 509 der Firma 3M, BBI-102, BBI-103, BBI-105, BBI-106, BBI-109, BBI-110, BBI-201, BBI, 301, BI-105, DPI-105, DPI-106, DPI-109, DPI-201, DTS-102, DTS-103, DTS-105, NDS-103, NDS-105, NDS-155, NDS-159, NDS-165, TPS-102, TPS-103, TPS-105, TPS-106, TPS-109, TPS-1000, MDS-103, MDS-105, MDS-109, MDS-205, MPI-103,, MPI-105, MPI-106, MPI-109, DS-100, DS-101, MBZ-101, MBZ-201, MBZ-301, NAI-100, NAI-101, NAI-105, NAI-106, NAI-109, NAI-1002, NAI-1003, NAI-1004, NB-101, NB-201, NDI-101, NDI-105, NDI-106, NDI-109, PAI-01, PAI-101, PAI-106, PAI-1001, PI-105, PI-106, PI-109, PYR-100, SI-101, SI-105, SI-106 und SI-109 der Firma Midori Kagaku, Kayacure PCI-204, Kayacure PCI-205, Kayacure PCI-615, Kayacure PCI-625, Kayarad 220 und Kayarad 620, PCI-061T, PCI-062T, PCI-020T, PCI-022T der Firma Nippon Kayaku, TS-01 und TS-91 der Firma Sanwa Chemical, Deuteron UV 1240 der Firma Deuteron, Tego Photocompound 1465N der Firma Evonik, UV 9380 C-D1 der Firma GE Bayer Silicones, FX 512 der Firma Cytec, Silicolease UV Cata 211 der Firma Bluestar Silicones und Irgacure 250, Irgacure 261, Irgacure 270, Irgacure PAG 103, Irgacure PAG 121, Irgacure PAG 203, Irgacure PAG 290, Irgacure CGI 725, Irgacure CGI 1380, Irgacure CGI 1907 und Irgacure GSID 26-1 der Firma BASF.

Dem Fachmann sind weitere Systeme bekannt, die ebenfalls erfindungsgemäß einsetzbar sind, beispielsweise Photoinitiatoren. Photoinitiatoren können unkombiniert oder als Kombination von zwei oder mehreren Photoinitiatoren eingesetzt werden.

Besonders lagerfähige Härter sind vom festen Dispersionstyp, die einen in einem Epoxidharz bei Raumtemperatur unlöslichen Feststoff darstellen und die durch Erhitzen löslich gemacht werden, um als Härter zu dienen. Beispiele dafür umfassen

- Imidazolverbindungen, die bei Raumtemperatur fest sind
- Aminaddukt-Typen, wie

  ◦ Reaktionsprodukte einer Verbindung umfassend zumindest eine cyclische Ethergruppe (zur weiteren Kennzeichnung Verbindung A) - insbesondere einer Verbindung umfassend zumindest eine Epoxidgruppe als cyclische Ethergruppe (zur weiteren Kennzeichnung Verbindung A') - mit einer Aminverbindung (zur weiteren Kennzeichnung Verbindung B) (Reaktionsprodukte des sogenannten Epoxy-Amin-Addukttyps)

◦ Reaktionsprodukte einer Isocyanatverbindung (zur weiteren Kennzeichnung Verbindung $X_1$) und/oder einer Harnstoffverbindung (zur weiteren Kennzeichnung Verbindung $X_2$) mit einer Aminverbindung (Verbindung B; siehe vorstehend) (Reaktionsprodukte des sogenannten Harnstoffaddukttyps).

Zu den erfindungsgemäß als Härter geeigneten Verbindungen gehören auch die Epoxy-Amin-Addukte, bei denen zwei oder mehr Verbindungen A und/oder zwei oder mehr Verbindungen B zur Herstellung des Reaktionsproduktes eingesetzt werden, sowie die harnstoffaddukte, bei denen zwei oder mehr Isocyanatverbindungen und/oder zwei oder mehr Harnstoffverbindungen und/oder zwei oder mehr Aminverbindungen zu ihrer Herstellung eingesetzt wurden.

Beispiele für die Imidazolverbindung, die bei Raumtemperatur fest ist und gemäß vorliegender Erfindung verwendet werden kann, umfassen 2-Heptadecylimidazol, 2-Phenyl-4,5-dihydroxymethylimidazol, 2-Undecylimidazol, 2-Phenyl-4-methyl-5-hydroxymethylimidazol, 2-Phenyl-4-benzyl-5-hydroxymethylimidazol, 2,4-Diamino-6-(2-methylimidazolyl-(1))-ethyl-S-triazin, 2,4-Diamino-6-(2'-methylimidazolyl-(1)'-ethyl-S-triazinisocyanursäureaddukt, 2-Methylimidazol, 2-Phenylimidazol, 2-Phenyl-4-methylimidazol, 1-Cyanoethyl-2-phenyl-imidazol, 1-Cyanoethyl-2-methylimidazoltrimellitat, 1-Cyanoethyl-2-phenylimidazoltrimellitat, N-(2-Methylimidazolyl-2-ethyl)harnstoff und N,N'-(2-Methylimidazolyl-(1)-ethyl)azipolydiamin. Kommerzielle Beispiele für die oben genannten Imidazolverbindungen sind beispielsweise von der Firma Shikoku oder Evonik (Airproducts) unter dem Namen Curezol erhältlich.

Eine erfindungsgemäß als Härter bevorzugte Gruppe von Imidazolverbindungen sind solche entsprechend der allgemeinen Formel

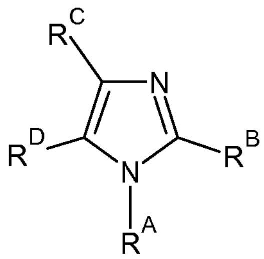

IV

wobei $R^A$, $R^B$, $R^C$ und $R^D$ unabhängig voneinander Wasserstoff oder funktionelle Gruppen oder organische Reste sind, mit der Maßgabe, dass zumindest einer der Reste $R^A$, $R^B$, $R^C$ und $R^D$ eine funktionelle Gruppe oder ein organischer Rest ist, der beziehungsweise die zumindest ein Heteroatom aufweist (die das Heteroatom umfassende funktionelle Gruppe beziehungsweise der das Heteroatom umfassende organische Rest werden im folgenden gemeinschaftlich als Rest $R^{Het}$ bezeichnet).

Die Reste $R^A$, $R^B$, $R^C$ beziehungsweise $R^D$, die keine Reste $R^{Het}$ sind, also diejenigen, die keine Reste sind, die weitere Heteroatome in sich haben, können sehr vorteilhaft jeweils unabhängig voneinander gewählt sein als Wasserstoff oder als ein aliphatischer oder aromatischer Kohlenwasserstoffrest mit 1 bis 15 Kohlenstoffatomen, der keine Heteroatome aufweist.

Die erfindungsgemäßen Imidazolverbindung können günstig in nicht weiter umgesetzter Form eingesetzt werden. In weiter günstiger Weise können die erfindungsgemäßen Imidazolverbindungen auch in Form von Imidazol-Säure-Addukten eingesetzt werden, um die Lagerfähigkeit weiter zu optimieren.

Als Imidazol-Säure-Addukt werden solche durch Bindungen oder Wechselwirkungen verbundenen Konglomerate bezeichnet, die durch geeignete Umsetzungen der betreffenden Imidazolverbindungen mit Carbonsäuren entstehen. Der Begriff ist nicht beschränkt auf kovalente gebildete Addukte. Imidazol-Säure-Addukte können beispielsweise auch ionisch beziehungsweise salzförmig aufgebaut sein, oder das Addukt kann durch andere Wechselwirkungen zwischen Imidazol und Säure entstehen. Die Adduktbildung stabilisiert die Imidazolverbindung insbesondere durch Herabsetzung dessen Reaktivität (etwa durch Blockierung), zur Bewirkung der Härterwirkung wird die herabgesetzte Reaktivität dann wieder erhöht; insbesondere wieder in den Ausgangszustand zurückgeführt.

Als Säuren lassen sich vorteilhaft Carbonsäuren einsetzen. Als Beispiele für Carbonsäuren, die zur Herstellung der Imidazol-Säure-Addukte geeignet sind, seien Trimellitsäure und Isocyanaursäure genannt.

Die Addukte können auch vorteilhaft in hydratisierter Form eingesetzt werden, etwa beispielsweise als Imidazol-Säure-Addukt Hydrat oder als Imidazol-Säure-Addukt Dihydrat.

Die erfindungsgemäßen Imidazolverbindung können günstig in nicht weiter umgesetzter Form eingesetzt werden. In weiter günstiger Weise können die erfindungsgemäßen Imidazolverbindungen auch in Form von Imidazol-Säure-Addukten eingesetzt werden, um die Lagerfähigkeit weiter zu optimieren.

Als Imidazol-Säure-Addukt werden solche durch Bindungen oder Wechselwirkungen verbundenen Konglomerate bezeichnet, die durch geeignete Umsetzungen der betreffenden Imidazolverbindungen mit Carbonsäuren entstehen. Der Begriff ist nicht beschränkt auf kovalente gebildete Addukte. Imidazol-Säure-Addukte können beispielsweise auch ionisch beziehungsweise salzförmig aufgebaut sein, oder das Addukt kann durch andere Wechselwirkungen zwischen Imidazol und Säure entstehen. Die Adduktbildung stabilisiert die Imidazolverbindung insbesondere durch Herabsetzung dessen Reaktivität (etwa durch Blockierung), zur Bewirkung der Härterwirkung wird die herabgesetzte Reaktivität dann wieder erhöht; insbesondere wieder in den Ausgangszustand zurückgeführt.
Als Säuren lassen sich vorteilhaft Carbonsäuren einsetzen. Als Beispiele für Carbonsäuren, die zur Herstellung der Imidazol-Säure-Addukte geeignet sind, seien Trimellitsäure und Isocyanaursäure genannt.

Die Addukte können auch vorteilhaft in hydratisierter Form eingesetzt werden, etwa beispielsweise als Imidazol-Säure-Addukt Hydrat oder als Imidazol-Säure-Addukt Dihydrat.

Als Härter sind weiterhin Verbindungen des Amminaddukt-Typs erfindungsgemäß hervorragend geeignet. Härter des Aminaddukt-Typs umfassen beispielweise die Reaktionsprodukte einer (oder mehrere) Aminverbindung(en) (Verbindung B) mit einer (oder mehreren) Verbindung(en) umfassend eine oder mehre cyclische Ethergruppen, insbesondere Epoxidgruppen, (Verbindung A beziehunsgsweise A'), oder mit einer (oder mehreren) Isocyanatverbindung(en) (Verbindung X).

Cyclische Ether sind Verbindungen, die eine oder mehrere Gruppen beinhalten, die eine Überbrückung einer oder mehrerer C-C-Bindungen durch die Gruppierung -O- darstellen (mit der Vorsilbe "Epoxy" zu bezeichnende Gruppen gemäß Definition der IUPAC, Regel C-212.2 und R-9.2.1.4) und somit einen Heterocyclus aus zwei oder mehreren Kohlenstoffatomen und einem Sauerstoffatom bilden. Für die Verbindung A als cyclische Ethergruppen erfindungsgemäß besonders vorteilhaft genutzt werden Epoxidgruppen, also heterocyclische Dreiringe mit zwei Kohlenstoffatomen und einem Sauerstoffatom.

Im Sinne der Aminverbindung (Verbindung B) als Ausgangsmaterial des latenten Härters vom Aminaddukt-Typ kann grundsätzlich jede beliebige Aminverbindung verwendet werden, sofern sie über einen oder mehr aktive Wasserstoffe, die eine Additionsreaktion mit einer Epoxygruppe beziehungsweise einer Isocyanatgruppe eingehen können, und über eine oder mehrere funktionelle Gruppen pro Molekül verfügt, die aus der aus primären Aminogruppen, sekundären Aminogruppen und tertiären Aminogruppen bestehenden Gruppe ausgewählt sind, wobei auch Imidazolgruppen umfasst sind.
Beispiele für solche Aminverbindungen B umfassen aliphatische Amine, wie etwa Diethylentriamin, Triethylentetramin, n-Propylamin, 2-Hydroxyethylaminopropylamin, Cyclohexylamin und 4,4'-Diaminodicyclohexylmethan; aromatische Aminverbindungen, wie etwa 4,4'-Diaminodiphenylmethan und 2-Methylanilin; und Stickstoffatom- hältige heterocyclische Verbindungen, wie etwa 2-Ethyl-4-methylimidazol, 2-Ethyl-4-methylimidazolin, 2,4-Dimethylimidazolin, Piperidin und Piperazin.

Davon können insbesondere eine (oder auch mehrere) Verbindung(en) mit mindestens einer tertiären Aminogruppe pro Molekül (Verbindung $B_t$; die Verbindungen $B_t$ bilden somit eine Teilgruppe der Verbindungen B) als Ausgangsmaterial verwendet werden, wodurch ein latenter Härter mit ausgezeichneter Härtungseffizienz erhalten wird; derartige Härter lassen sich auch vorteilhaft als Co-Härter (Beschleuniger) mit hervorragenden Härtungsbeschleunigungsfähigkeit einsetzen. In einer bevorzugten Ausführung der Erfindung weist die Verbindung mit mindestens einer tertiären Aminogruppe (Verbindung $B_t$) pro Molekül zusätzlich mindestens eine weitere Gruppe im Molekül auf, gewählt aus der Liste L bestehend aus -OH (Hydroxygruppe), -NH (sekundäre Aminogruppe), $-NH_2$ (primäre Aminogruppe), -SH (Sulfanylgruppe, synonym Mercaptogruppe), -COOH (Carboxygruppe), $-CONHNH_2$ (Säurehydrazidgruppe) (diese Verbindungen mit mindestens einer tertiären Aminogruppe und mindestens einer weiteren Gruppe aus der genannten Liste L im Molekül werden zur weiteren Kennzeichnung auch als Verbindung $B_t'$ bezeichnet; die Gruppe der Verbindungen $B_t'$ bildet somit eine Teilgruppe der Verbindungen $B_t$). In vorteilhafter Weise besteht die Komponente B ausschließlich aus Verbindungen $B_t$; weiter vorteilhaft ausschließlich aus Verbindungen $B_t'$. Beispiele für eine erfindungsgemäß geeignete Verbindungen $B_t'$ mit zumindest einer tertiären Aminogruppe sowie zumindest einer weiteren Gruppe aus der Liste L umfassen primäre oder sekundäre Amine mit einer tertiären Aminogruppe im Molekül, z.B. Aminverbindungen wie Dimethylaminopropylamin, Diethylaminopropylamin, Di-n-propylaminopropylamin, Dibutylaminopropylamin, Dimethylaminoethylamin, Diethylaminoethylamin und N-Methylpiperazin sowie Imidazolverbindungen wie 2-Methylimidazol, 2-Ethylimidazol, 2-Ethyl-4-methylimidazol und 2-Phenylimidazol; und Alkohole, Phenole, Thiole, Carbonsäuren und Hydrazide mit einer tertiären Aminogruppe im Molekül, wie etwa 2-Dimethylaminoethanol, 1-Methyl-2-dimethylaminoethanol, 1-Phenoxymethyl-2-dimethylaminoethanol, 2-Diethylaminoethanol, 1-Butoxymethyl-2-dimethylaminoethanol, 1-(2-Hydroxy-3-phenoxypropyl)-2-methylimidazol, 1-(2-Hydroxy-3-phenoxypropyl)- 2-ethyl-4-methylimidazol, 1-(2-Hydroxy-3-butoxypropyl)-2-methylimidazol, 1-(2-Hydroxy-3-butoxypropyl)- 2-ethyl-4-methylimidazol, 1-(2-Hydroxy-3-phenoxypropyl)-2-phenylimidazolin, 1-(2-Hydroxy-3-butoxypropyl)- 2-methylimidazolin, 2-(Dimethylaminomethyl)phenol, 2,4,6-Tris(dimethylaminomethyl)phenol, N-β-Hydroxyethylmorpholin, 2-Dimethylaminoethanthiol, 2-Mercaptopyridin, 2-Benzoimidazol, 2-Mercaptobenzoimidazol, 2-Mercaptobenzothiazol, 4-Mercaptopyridin, N,N-Dimethylaminobenzoesäure, N,N-Dimethylglycin, Nicotinsäure, Isonicotinsäure, Picolinsäure, N,N-Dimethylglycinhydrazid, N,N-Dimethylpropionsäurehydrazid, Nicotinsäurehydrazid und Isonicotinsäurehydrazid.

Cyclische Ether, insbesondere Epoxidverbindungen, die im Sinne der Verbindung A' als eines der Ausgangsmaterialien für Epoxy-Amin-Addukte verwendet werden können, um latente Härter vom festen Dispersions-Typ herzustellen, umfassen beispielsweise einen Polyglycidylether, der durch Umsetzung eines mehrwertigen Phenols, wie etwa Bisphenol A, Bisphenol F, Bisphenol AD, Katechin, Bisphenol S oder Resorcin, oder eines mehrwertigen Alkohols, wie etwa Glycerin oder Polyethylenglykol, mit Epichlorhydrin erhalten wurde; ein Glycidyletherester, der durch Umsetzen einer Hydroxycarbonsäure, wie etwa p-Hydroxybenzoesäure oder β-Hydroxynaphthoesäure, mit Epichlorhydrin erhalten wurde; ein Polyglycidylester, der durch Umsetzen einer Polycarbonsäure, wie etwa Phthalsäure oder Terephthalsäure, mit Epichlorhydrin erhalten wurde; eine Glycidylaminverbindung, die durch Umsetzung von 4,4'-Diaminodiphenylmethan oder m-Aminophenol mit Epichlorhydrin erhalten wurde; eine polyfunktionelle Epoxyverbindung, wie etwa ein epoxidiertes Phenolnovolakharz; ein epoxidiertes Kresolnovolakharze, ein epoxidiertes Bisphenol-A-Novolak; oder ein epoxidiertes Polyolefin; und eine monofunktionelle Epoxyverbindung, wie etwa Butylglycidylether, Phenylglycidylether oder Glycidylmethacrylat.

Um die Lagerstabilität der Epoxidharzzusammensetzung vorliegender Erfindung noch weiter zu verbessern, kann der Härter vom Epoxy-Amin-Typ (also das Addukt aus den Verbindungen A und B) weiter modifiziert werden, indem als optionales drittes Ausgangsmaterial bei dessen Herstellung eine stabilisierende Komponente (zur Kennzeichnung im weiteren auch als Komponente C bezeichnet, bestehend aus einer oder mehreren Verbindungen C) zugesetzt wird; wie insbesondere etwa eine oder mehrere aktive Wasserstoffverbindungen mit zwei oder mehr aktiven Wasserstoffen pro Molekül.

Beispiele für solche aktive Wasserstoffverbindungen umfassen mehrwertige Phenole - wie etwa Bisphenol A, Bisphenol F, Bisphenol S, Hydrochinon, Katechin, Resorcin, Pyrogallol und Phenolnovolakharze -; mehrwertige Alkohole - wie etwa Trimethylolpropan.

Als aktive Wasserstoffverbindungen für die stabilisierenden Komponente C können auch Carbonsäuren eingesetzt werden. Als Carbonsäuren als Vertreter der Verbindung C sind insbesondere mehrbasige Carbonsäuren erfindungsgemäß gut geeignet, wie etwa Adipinsäure und Phthalsäure; 1,2-Dimercaptoethan; 2-Mercaptoethanol; 1-Mercapto-3-phenoxy-2-propanol; Mercaptoessigsäure; Anthranilsäure; und/oder Milchsäure.

In einer vorteilhaften Ausführung der Erfindung wird die Komponente C in Gegenwart von 0,05 bis 5,0 Mol-Äquivalent Wasser pro Mol-Äquivalent an Epoxygruppen in Komponente A' eingesetzt; wobei weiter vorteilhaft das Verhältnis von Wassermolekülen zu Epoxygruppen der Komponente A' im Bereich von 1 : 1 angestrebt wird.

Beispiele für Isocyanatverbindungen (Verbindung X), die vorteilhaft als Ausgangsmaterialien des latenten Härters vom Harnstoffadukttyp verwendet werden können, umfassen beispielsweise monofunktionelle Isocyanatverbindungen, wie etwa n-Butylisocyanat, Isopropylisocyanat, Phenylisocyanat und Benzylisocyanat; polyfunktionelle Isocyanatverbindungen, wie etwa Hexamethylendiisocyanat, Toluylidendiisocyanat, 1,5-Naphthalindiisocyanat, Diphenylmethan-4,4'-diisocyanat, Isophorondiisocyanat, Xylylendiisocyanat, p-Phenylendiisocyanat, 1,3,6-Hexamethylentriisocyanat und Bicycloheptantriisocyanat; und endständige Isocyanatgruppen enthaltende Verbindungen, die durch Umsetzung einer dieser polyfunktionellen Isocyanate mit einer aktiven Wasserstoffverbindung erhalten werden. Beispiele für endständige Isocyanatgruppen enthaltende Verbindungen umfassen ein endständiges Isocyanatgruppen enthaltendes Addukt, das durch Umsetzung eines Toluylidendiisocyanats mit Trimethylolpropan erhalten wird, und ein endständiges Isocyanatgruppen enthaltendes Addukt, das durch Umsetzung eines Toluylidendiisocyanats mit Pentaerythrit erhalten wird.

Der gemäß vorliegender Erfindung verwendbare latente Härter vom festen Dispersionstyp kann beispielweise erhalten werden, indem die relevanten Ausgangsmaterialien in einer Kombination von (i) zwei Ausgangsmaterialien, nämlich einer Aminverbindung (Verbindung B) und einer Epoxyverbindung (Verbindung A), (ii) drei Ausgangsmaterialien, nämlich den zwei Ausgangsmaterialien (Verbindungen A und B) und der stabilisierenden Komponente (Verbindung(en) C), oder (iii) zwei oder drei Ausgangsmaterialien, nämlich einer Aminverbindung (Verbindung B) und einer Isocyanatverbindung (Verbindung $X_1$) und/oder einer Harnstoffverbindung (Verbindung $X_2$), vermischt werden, das Gemisch bei einer Temperatur in einem Bereich von Raumtemperatur bis 200°C umgesetzt wird, anschließend das Reaktionsgemisch abgekühlt, verfestigt und pulverisiert wird, oder indem die Ausgangsmaterialien in einem Lösungsmittel wie Methylethylketon, Dioxan oder Tetrahydrofuran umgesetzt werden, das Lösungsmittel entfernt und anschließend der Feststoff pulverisiert wird. Von den Verbindungsgruppen umfasst sind selbstredend auch die jeweiligen Teilgruppen.

Die erfindungsgemäßen Epoxy-Amin-.Addukte, insbesondere wie verstehend beschrieben erhaltenen Epoxy-Amin-Addukte, können in erfindungsgemäß vorteilhafter Weise stabilisiert werden, beziehungsweise - bei Anwesenheit der stabilisierenden Komponente C - zusätzlich stabilisiert werden, wenn nach der Herstellung des Aminadduktes eine oder mehrere Boratesterverbindungen und/oder eine oder mehrere Isocyanatverbindungen (zur weiteren Kennzeichnung im folgenden auch als Komponente D bezeichnet, bestehend aus den Verbindungen D) zugegeben und somit zur Deaktivierung freier Amingruppen verwendet werden. Bei der Aktivierung der Härter werden die Amingruppen dann wieder in die aktive Form überführt.

Das Epoxy-Amin-Addukt dient im alleinigen Einsatz als Härter für die Härtungsreaktion der härtbaren Zusammensetzung. Wird es zusammen mit weiteren, als Härter und/oder Beschleuniger dienenden chemischen Verbindungen eingesetzt, kann es selbst als Härter oder als Beschleuniger für die Härtungsreaktion der härtbaren Zusammensetzung dienen.

In besonders bevorzugter Form wird das Epoxy-Amin-Addukt, beziehungsweise werden bei Anwesenheit mehrerer Epoxy-Amin-Addukte alle Epoxy-Amin-Addukte, in partikulärer Form eingesetzt. Dies lässt sich beispielweise dadurch realisieren, dass das Epoxy-Amin-Addukt in keiner anderen Komponente des Klebebandes löslich ist, insbesondere nicht einmal teillöslich ist.

Der Einsatz des Härters in ungelöster beziehungsweise partikulärer Form führt zu einem zumindest zweiphasigen System und damit zu einer erhöhten Lagerstabilität der härtbaren Zusammensetzung.

In einer besonders bevorzugten Ausführungsform wird als Härter zumindest ein Epoxy-Amin-Addukt, das das Reaktionsprodukt aus

(a) einer polyfunktionellen Epoxidkomponente A',
(b) einer Verbindung Bt" mit sowohl einer OH-Gruppe, $NH_2$-Gruppe, NH-Gruppe oder SH-Gruppe als auch einer tertiären Aminogruppe im Molekül und
(c) einer stabilisierenden Komponente C'

umfasst oder ist, eingesetzt (im folgenden als Epoxy-Amin-Addukt vom Typ A'$B_t$"C' bezeichnet).

Die Verbindungen A' bilden dabei eine Teilgruppe der Verbindungen A, $B_t$" bilden eine Teilgruppe der Verbindungen $B_t$' und die Verbindungen C', die die Komponente C' darstellen, eine Teilgruppe der Verbindungen C. In vorteilhafter Weise wird eine einzige Verbindung C' als Komponente C' eingesetzt.

Wie vorstehend bereits ausgeführt können diese Epoxy-Amin-Addukte vom Typ A'$B_t$"C' nach ihrer Herstellung durch

(d) Boratesterverbindungen und/oder Isocyanatverbindungen (Verbindungen D) stabilisiert sein.

In einer vorteilhaften Ausführung umfassen der Verbindungen $B_t$" keine Säuregruppen und keine Säurehydrazidgruppen im Molekül.

Das Epoxy-Amin-Addukt vom Typ A'$B_t$"C' kann als alleiniger Härter, in Kombination mit weiteren Epoxy-Amin-Addukten - und zwar solchen, die ebenfalls das Reaktionsprodukt aus (a) einer polyfunktionellen Epoxidkomponente A', (b) einer Verbindung $B_t$" mit sowohl einer OH-Gruppe, NH2-Gruppe, NH-Gruppe oder SH-Gruppe als auch einer tertiären Aminogruppe im Molekül und (c) einer stabilisierenden Komponente C' (also ebenfalls vom Typ A'$B_t$"C') sind, und/oder mit solchen, die diese Bedingung nicht erfüllen (also nicht vom Typ A'$B_t$"C' sind, - und/oder in Kombination mit Härtern, die keine Epoxy-Amin-.Addukte sind, eingesetzt werden.

Das Epoxy-Amin-Addukt vom Typ A'$B_t$"C', bei mehreren anwesenden Epoxy-Amin-Addukten vom Typs A'$B_t$"C' eines, mehrere oder bevorzugt alle Epoxy-Amin-Addukte vom Typ A'$B_t$"C' können vorteilhaft in Form einer der nachfolgend als besonders vorteilhaft dargestellten Verbindungen eingesetzt werden, wobei bei Anwesenheit mehrerer Epoxy-Amin-Addukte vom Typ A'$B_t$"C' die einzelnen Vertreter unabhängig voneinander ausgewählt werden können.

Die polyfunktionelle Epoxidverbindung A' kann grundsätzlich wie oben definiert gewählt werden und kann beispielsweise ein Polyglycidylether, ein Polyglycidyletherester, ein Polyglycidylester, ein Glycidylamin ein epoxidierter Novolak oder ein epoxidiertes Polyolefin sein.

Als Verbindung $B_t$" lassen sich vorteilhaft Verbindungen der allgemeinen Formel

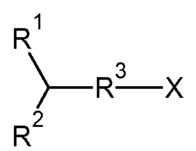

(V)

einsetzen, wobei

X gleich —OH, —$NH_2$, —NH oder —SH ist,
$R^1$ und $R^2$ unabhängig voneinander gewählt sind aus der Gruppe aus

- Wasserstoffatomen,
- $C_1$- bis $C_{20}$-Alkylgruppen,
- $C_2$- bis $C_{20}$-Alkenylgruppen,
- unsubstituierten aromatischen Kohlenwasserstoffgruppen
- substituierten aromatischen Kohlenwasserstoffgruppen, insbesondere substituiert mit Sauerstoff, Halogen, -OH, —$NH_2$, -NH und/oder-SH,

$R^3$ eine gesättigte oder ungesättigte, unverzweigte oder verzweigte Kohlenwasserstoffkette mit 1 bis 20 C-Atomen ist.

Weiter vorteilhaft lassen sich als Verbindung $B_t$" Verbindungen der allgemeinen Formel

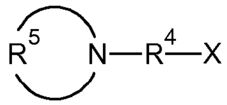

(VIa)

oder

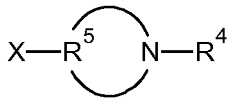

(VIb)

wählen, wobei

X gleich -OH, —$NH_2$, -NH oder-SH ist,
$R^4$ eine gesättigte oder ungesättigte, unverzweigte oder verzweigte Kohlenwasserstoffkette mit einem bis 20 C-Atomen ist,
$R^5$ ein cylischer, zweifach an das Stickstoffatom gebundener, aliphatischer oder aromatischer; gesättigter oder ungesättigter; unsubstituierter oder substituierter Kohlenwasserstoffrest mit 2 bis 20 C-Atomen, die teilweise durch Heteroatome substituiert sein können, ist.

Insbesondere vorteilhaft lassen sich als Verbindung $B_t$" Verbindungen der allgemeinen Formel

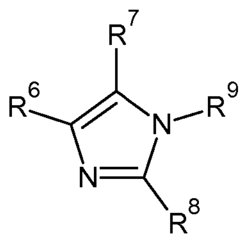

(VII)

einsetzen, wobei

$R^6$, $R^7$, $R^8$ und $R^9$ unabhängig voneinander gewählt sind aus der Gruppe aus

- Wasserstoffatomen,
- $C_1$- bis $C_{20}$-Alkylgruppen,
- $C_2$- bis $C_{20}$-Alkenylgruppen,
- unsubstituierten aromatischen Kohlenwasserstoffgruppen
- substituierten aromatischen Kohlenwasserstoffgruppen, insbesondere substituiert mit Sauerstoff, Halogen, -OH, —$NH_2$, -NH und/oder-SH,
- -OH, —$NH_2$, -NH und/oder -SH,

mit der Maßgabe, dass
$R^9$ = H oder dass mindestens eine der Gruppen $R^6$ bis $R^8$ eine der Gruppen -OH, -NH2, -NH oder-SH ist.

Als Verbindung $B_t$" lässt sich dabei beispielsweise eine Verbindung oder lassen sich mehrere Verbindungen aus der folgenden Liste vorteilhaft einsetzen: 2-Dimethylaminethanol, 1-Methyl-2-Dimethylaminoethanol, 1-Phenoxymethyl-2-dimethylaminoethanol, 2-Diethylaminoethanol, 1-Butoxymethyl-2-Dimethylaminoethanol, 1-(2-Hy-droxy-3-Phenoxypropyl)-2-Methylimidazol, 1-(2-Hydroxy-3-Phenoxypropyl)-2-Ethyl-4-Methylimidazol, 1-(2-Hydroxy-3-Butoxypropyl)-2-Methylimidazol, 1-(2-Hydroxy-3-Butoxypropyl)-2-Ethyl-4-Methylimidazol, 1-(2-Hydroxy-3-Phenoxypropyl)-2-Phenylimidazolin, 1-(2-Hydroxy-3-Butoxypropyl)-2-Methylimidazolin, 2-(Dimethylaminomethyl)phenol, 2,4,6-Tris(dimethylaminomethyl)phenol, N-β-Hydroxyethylmorpholin, 2-Dimethylaminoethylamin, 3-Dimethylamino-n-Propylamin, 2-Diethylaminoethylamin, 3-Diethylamino-n-Propylamin, N-Methylpiperazin, Imidazol, 2-Methylimidazol, 2-Ethylimidazol, 2-Ethyl-4-Methylimidazol, 2-Isopropylimidazol, 2-Undecylimidazol, 2-Octadecylimidazol, 2-Phenylimidazol, 2-Phenyl-4-Methylimidazol, 2-Dimethylaminoethanethiol, Methimidazol, 2-Mercaptobenzoimidazol, 2-Mercaptobenzothiazol.

Die stabilisierende Komponente C' dient zur Erhöhung der Lagerfähigkeit der mit dem Epoxy-Amin-Härter des Typs $A'B_t''C'$ versehenen Klebmasse. Sehr vorteilhaft ist es, wenn die Komponente C' in Gegenwart von 0,05 bis 5,0 Mol-Äquivalent Wasser pro Mol-Äquivalent an Epoxygruppen in Komponente A' eingesetzt wird; wobei weiter vorteilhaft das Verhältnis von Wassermolekülen zu Epoxygruppen der Komponente A' im Bereich von 1 : 1 angestrebt wird.

Als Verbindungen für die stabilisierende Komponente C' werden insbesondere vorteilhaft solche Verbindungen eingesetzt, die zwei oder mehr aktive Wasserstoffatome im Molekül aufweisen. In einer bevorzugten Ausführungsform enthält die stabilisierende Komponente C' entweder mindestens eine primäre Aminogruppe ($-NH_2$) oder mindestens eine HydrazidGruppe ($-CONHNH_2$) oder mindestens 2 funktionelle Gruppen, ausgewählt aus OH-Gruppe, SH-Gruppe, NH-Gruppe und COOH-Gruppe, wobei Epoxidgruppen und tertiäre Aminogruppen jeweils nicht enthalten sind.
Vorteilhafte Beispiele für Vertreter der stabilisierenden Komponente C' sind Amine mit mindestens zwei aktiven Wasserstoffatomen, wie Piperazin, Anilin, Cyclohexylamin; mehrfachfunktionelle Carbonsäuren, wie Adipinsäure, Phthalsäure, 3-[9-(2-carboxyethyl)-2,4,8,10-tetraoxaspiro[5.5]undecan-3-yl] propansäure CAS: 3058-05-7; Polyvalente Thiole, wie 1,2-dimercaptoethan and 2-mercaptoethyl ether; Hydrazide, wie Phenyl essigsäurehydrazid; Aminosäuren, wie Alanin und Valin; Verbindungen mit 2 oder mehr verschiedenen funktionellen Gruppen, wie 2-mercaptoethanol, 1-mercapto-3-phenoxy-2-propanol, Mercaptoessigsäure, N-methyl ethanol amin, diethanol amin, Hydroxyaniline, N-methyl-o-aminobenzoesäure, Anthranilsäure, Sarkosin, Hydroxybenzoesäure and Milchsäure; mehrwertige Alkohole, wie Pentaaerythrit, Sorbitol, Trimethylolpropan, Trimethylolethan und Isocyanursäure tris-(2-hydroxyethyl)ester; und mehrwertige Phenole wie Bisphenol A, Bisphenol F, Bisphenol S, Hydrochinon, Benzcatechin, Resorcin, Benzol-1,2,3-triol, Phenol Novolak Harze, Cresol Novolak Harze und Bisphenol-A-Novolak Harze.

Weitere vorteilhafte Beispiele für Vertreter der stabilisierenden Verbindungen C' sind Carbonsäuren. Umfasst die stabilisierende Komponente C' eine Carbonsäure oder wird ausschließlich aus einer oder mehreren Carbonsäuren gebildet, so werden insbesondere Mono- und Dicarbonsäuren, in untergeordneten Mengen auch Tricarbonsäuren, wie sie z.B. als Nebenprodukt in Dimerfettsäuren auftreten, eingesetzt. Geeignete Monocarbonsäuren können 2 bis 24, vorzugsweise 10 bis 18 Kohlenstoffatome enthalten. Diese Monocarbonsäuren konnen gesättigt oder ungesättigt sein. Außerdem können sie auch verzweigt sein, sowie aromatische und cycloaliphatische Ringe aufweisen. Als spezielle Beispiele seien Capryl-, Caprin-, Stearin-Säure sowie Linol- und Linolensäure genannt.
Als Dicarbonsäuren eignen sich im allgemeinen solche mit 3 - 38, vorzugsweise 4 - 36 Kohlenstoffatomen. Erfindungsgemäß vorteilhaft geeignet sind beispielsweise Adipinsaure, Sebazinsaure, Nonan-, Decan-Dicarbonsäure, Dimerfettsäuren, wie z.B. Pripol® 1014 (= dimerisierte Fettsäure der Fa. Unilever) sowie aromatische oder cycloaliphatische Dicarbonsäuren wie Phthalsäure und Terephthalsäure. Es können auch Gemische der obengenannten Carbonsäuren eingesetzt werden. Bevorzugt sind Dimerfettsäuren.

Als stabilisierende Verbindungen C' für Epoxy-Amin-Härter des Typs $A'B_t''C'$, insbesondere für solche ohne Carbonsäuregruppen und ohne Säurehydrazidgruppen in der Verbindung $B_t''$, können vorteilhaft auch Carbonsäureanhydride eingesetzt werden. Carbonsäureanhydride können in vorteilhafter Weise gewählt werden aus der Liste, die aus Bernsteinsäureanhydrid, Phthalsäureanhydrid, Tetrahydrophthalsäureanhydrid, Methyltetra-hydrophthalsäureanhydrid, Hexahydrophthalsäureanhydrid, Methylhexahydro-phthalsäureanhydrid, Methyl-5-norbornen-2,3-dicarbonsäureanhydrid, Dodecenylbernstein-säureanhydrid, Pyromellitsäure-dianhydrid oder 5- (2, 5-Diketo-tetrahydrofuryl)-3-methyl-3-cyclohexen-1,2-dicarbonsäure-anhydrid gebildet ist.

Typische und vorteilhaft verwendbare Beispiele für am Markt erhältliche latente Härter vom festen Dispersionstyp umfassen Epoxy-Amin-Adukttypen (Aminadukttypen), wie etwa "Ajicure PN-23", "Ajicure PN-50", "Ajicure MY-25" (Handelsnamen von Ajinomoto Co., Inc. hergestellten Produkten), "Hardener-X-3661S", "Hardener- X-3670S" (Handelsnamen von A.C.R.K.K. hergestellten Produkten), verkapselte Epoxy-Amin-Adukttypen "Novacure HX-3742" und "Novacure HX-3721" (Handelsnamen von Asahi Chemical Industry Co., Ltd. hergestellten Produkten), und Harnstoffadukttypen wie "Fujicure FXE-1000" und "Fujicure FXR-1030" (Handelsnamen von Fuji Kasei K.K. hergestellten Produkten).

Optional können weitere stabilisierende Komponenten eingesetzt werden, im Rahmen dieser Schrift als Verbindungen D beziehungsweise Komponente D bezeichnet. Diese Komponente wird nach Herstellung des Epoxy-Amin-Addukts zugegeben, insbesondere gemeinsam mit Wasser, siehe weiter oben. Sie dient insbesondere zur Verbesserung der Lagerstabilität des Härters und somit auch der mit einem solchen Härter versetzten, zu härtenden Epoxidzusammensetzung. Es wird angenommen, dass die Funktionalität einem Mechanismus folgt, der die Verbindung mit der Oberfläche von Teilchen des latenten Härtungsbeschleunigers vom festen Dispersionstyp reagieren lässt, um diesen für die Einkapselung zu modifizieren. Vorteilhaft geeignet sind beispielsweise Boratesterverbindungen. Typische Beispiele für erfindungsgemäß geeignete Boratesterverbindungen umfassen Trimethylborat, Triethylborat, Tri-n-propylborat, Triisopropylborat, Tri-n-butylborat, Tripentylborat, Triallylborat, Trihexylborat, Tricyclohexylborat, Trioctylborat, Trinonylborat, Tridecylborat, Tridodecylborat, Trihexadecylborat, Trioctadecylborat, Tris(2-ethylhexyloxy)boran,

Bis(1,4,7,10-tetraoxaundecyl)(1,4,7,10,13-pentaoxatetradecyl)(1,4,7-trioxaundecyl) boran, Tribenzylborat, Triphenylborat, Tri-o-tolylborat, Tri-m-tolylborat und Triethanolaminborat. Davon wird Triethylborat bevorzugt.

**Beschleuniger**

Wie vorstehend bereits ausgeführt sind Beschleuniger solche chemischen Verbindungen, die in zusätzlichem Einsatz zu einem oder mehreren Härtern die Reaktionsgeschwindigkeit der Härtungsreaktion und/oder die Geschwindigkeit der Aktivierung der Härtungsreaktion - im Vergleich zum Ablauf in Abwesenheit des/der Beschleuniger(s) - erhöhen.

Die Klebemasse des erfindungsgemäßen Klebebandes kann erfindungsgemäß einen oder mehrere Beschleuniger enthalten. Ein Beschleuniger bewirkt etwa insbesondere, dass die Starttemperatur für die Vernetzungsreaktion des Reaktivharzes und/oder die Reaktionstemperatur, bei der die Härtungsreaktion fortschreitet, verringert wird. Damit wird die Handhabung bei der Verklebung verbessert. Dabei ist zu beachten, dass die durch die Zugabe eines Beschleunigers gesenkte Starttemperatur als Nachteil mit einer verringerten Lagerstabilität einhergeht, da die Senkung der Starttemperatur auch eine ungewünschte erhöhte Reaktion während der Lagerung bewirkt. Trotzdem sind die erfindungsgemäßen Klebebänder in ihrer Lagerstabilität den mit Epoxidklebstoffen getränkten Prepregs des Standes der Technik weit überlegen.
Will man den genannten Effekt jedoch vermeiden, kann auf Beschleuniger auch ganz verzichtet werden.

Als Beschleuniger sind insbesondere modifizierte und unmodifizierte Imidazole, Harnstoffderivate, Säureanhydride, tertiäre Amine, Polyamine und deren Kombination geeignet, etwa derart, wie sie beispielsweise von Alzchem (Dyhard-Serie), Huntsman (Aradur-Serie) von Threebond oder wie als Härter beschriebene Epoxy-Amin-Addukte wie sie von Airproducts, Shikoku oder Ajinomoto vertrieben werden.
Als Beschleuniger können grundsätzlich und erfindungsgemäß besonders vorteilhaft die Verbindungen eingesetzt werden, wie sie vorstehend als Härter beschrieben werden; die dort gemachten Ausführungen sind entsprechend übertragbar. Bei der Wahl des Beschleunigers wird dessen Reaktivität insbesondere vorteilhaft mit derjenigen des beziehungsweise der eingesetzten Härter(s) abgestimmt, um den Beschleunigereffekt zu erzielen. So kann etwa der Härter beziehungsweise können die Härter derart ausgewählt werden, dass die Härtungsreaktion möglichst effektiv und/oder vollständig abläuft, während der Beschleuniger beziehungsweise die Beschleuniger derart gewählt ist beziehungsweise sind, dass die Reaktionsgeschwindigkeit und/oder die Geschwindigkeit der Aktivierung erhöht sind, insbesondere die Reaktionstempertur der Härtung und/oder die Starttemperatur der Härtungsreaktion gesenkt werden.

**Weitere Komponenten und Additive**

Optional kann die Klebemasse weitere Additive, Rheologiemodifizierer, Schäumungsmittel, Füllstoffe, Farbstoffe, Alterungsschutzmittel, Flammschutzmittel, Vernetzer oder Adhäsionsvermittler enthalten; insbesondere zur Einstellung der optischen und klebtechnischen Eigenschaften als weitere Komponenten, insbesondere Festkomponenten. In bestimmten Ausführungsformen sind Füllstoffe und/oder Rheologiemodifizierer enthalten. Überraschend wurde festgestellt, dass diese unterstützend auf das Aufschließen wirken können, wenn die Zugabe bereits in der Füllzone oder der ersten Compoundierzone erfolgt, diese also beim Aufschluss in der ersten Compoundierzone anwesend sind. Besonders bewährt hat sich hier beispielsweise die Zugabe pyrogener Kieselsäuren, beispielsweise solche, die unter dem Namen Aerosil kommerziell erhältlich sind, insbesondere Aerosil R202, Talkum oder auch Kreide.

Als Füllstoffe sind beispielhaft zu nennen Farbstoffe und Pigmente, abrasive und verstärkende Füllstoffe, wie z.B. Kreiden ($CaCO_3$)—zum Beispiel Mikrosöhl-Kreide-Titandioxide, Zinkoxide und Ruße, weiterhin schwerentflammbare Füllstoffe - wie beispielsweise Ammoniumpolyphosphat -, elektrisch leitfähige Füllstoffe - wie beispielsweise Leitruß, Kohlenstofffasern und/oder silberbeschichtete Kugeln -, weiterhin thermisch leitfähige Materialien - wie beispielsweise Bornitrid, Aluminiumoxid, Siliciumcarbid -, weiterhin ferromagnetische Additive - wie beispielsweise Eisen-(III)-oxide) —, weiterhin Additive zur Volumenerhöhung, insbesondere zur Herstellung geschäumter Schichten - wie beispielsweise Blähmittel, Glasvollkugeln, Glashohlkugeln, Mikrokugeln aus anderen Materialien, expandierbare Microballons, Kieselsäure, Silikate, organisch nachwachsende Rohstoffe, beispielsweise Holzmehl, organische und/oder anorganische Nanopartikel, Fasern -, weiterhin Alterungsschutzmitteln, Lichtschutzmitteln, Ozonschutzmitteln, Compoundierungsmittel, Plastifizierungsmittel, primäre Antioxidantien, sekundäre Antioxidantien, Prozessstabilisatoren - wie zum Beispiel C-Radikalfänger —,Verarbeitungshilfsmittel, Blähmittel oder dergleichen.

Füllstoffe werden beispielsweise zur Steigerung der Kohäsion einer Haftklebemasse eingesetzt. Füllstoffe können auch den Aufschluss der eingesetzten Polymere verbessern. Füllstoffe werden auch zur Gewichts- beziehungsweise Volumenerhöhung beigemischt. Die Füllstoffzugabe verbessert oftmals die technische Verwendbarkeit der Produkte und hat Einfluss auf deren Qualität, zum Beispiel Festigkeit, Härte usw. Die natürlichen, anorganischen und organischen Füllstoffe wie Calciumcarbonat, Kaolin, Dolomit und dergleichen werden mechanisch hergestellt. Auch bei nicht-thermoplastischen Elastomeren beziehungsweise Kautschuk kann man durch geeignete Füllstoffe die Qualität

verbessern, so beispielsweise Härte, Festigkeit, Elastizität und Dehnung. Viel gebrauchte Füllstoffe sind Carbonate, insbesondere Calciumcarbonat, aber auch Silicate (Talk, Ton, Glimmer), Kieselerde, Calcium- und Bariumsulfat, Aluminiumhydroxid, Glasfasern und -kugeln sowie Ruße. Man kann anorganische und organische Füllstoffe auch nach ihrer Dichte unterscheiden. So erhöhen die oft in Klebemassen verwendeten anorganischen Füllstoffe wie Kreide, Titandioxid, Calcium- und Bariumsulfat die Dichte des Composites.

Insbesondere gibt es Füllstoffe, die die Gesamtdichte des Composites reduzieren können. Hierzu zählen Mikrohohlkugeln, sehr voluminöse Leichtfüllstoffe. Die Kugeln sind beispielsweise mit Luft, Stickstoff oder Kohlendioxid gefüllt, die Kugelschalen bestehen häufig aus Glas.

Bei den als Festkomponente eingesetzten Mikrohohlkugeln kann es sich alternativ auch um Mikroballons handeln. Unter "Mikroballons" werden erfindungsgemäß elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind.

Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, welche sich im Wesentlichen über ihre Größe (6 bis 45 $\mu$m Durchmesser im unexpandierten Zustand) und ihre zur Expansion benötigten Starttemperaturen (75 bis 220 °C) differenzieren. Ein Beispiel für kommerziell erhältliche Mikroballons sind die Expancel® DU-Typen (DU = dry unexpanded) von der Firma Akzo Nobel.

Unexpandierte Mikroballontypen sind auch als wässrige Dispersion mit einem Feststoffbeziehungsweise Mikroballonanteil von ca. 40 bis 45 Gew.-% erhältlich, weiterhin auch als polymergebundene Mikroballons (Masterbatche), zum Beispiel in Ethylvinylacetat mit einer Mikroballonkonzentration von ca. 65 Gew.-%.

Erfindungsgemäß können auch sogenannte vorexpandierte Mikroballons eingesetzt werden. Bei dieser Gruppe findet die Expansion schon vor der Einmischung in die Polymermatrix statt. Vorexpandierte Mikroballons sind beispielsweise unter der Bezeichnung Dualite® oder mit der Typenbezeichnung Expancel xxx DE (Dry Expanded) von der Firma Akzo Nobel kommerziell erhältlich.

Wird mittels Mikroballons geschäumt, dann können die Mikroballons als Batch, Paste oder als unverschnittenes oder verschnittenes Pulver der Formulierung zugeführt werden. Des Weiteren können sie in Lösungsmittel suspendiert vorliegen.

Bei den Alterungsschutzmitteln handelt es sich insbesondere um Antiozonantien, primäre Antioxidantien wie zum Beispiel sterisch gehinderte Phenole, sekundäre Antioxidantien wie zum Beispiel Phosphite oder Thioether, oder um Lichtschutzmittel wie zum Beispiel UV-Absorber oder sterisch gehinderte Amine.

Im erfindungsgemäßen Verfahren können den - insbesondere festen - nicht-thermoplastischen Elastomeren, wie insbesondere den Nitrilkautschuken - zur Verbesserung der Verarbeitbarkeit thermoplastische Elastomere wie beispielsweise Synthesekautschuke mit einem Anteil von bis zu 5 Gew.-% zugesetzt werden, bezogen auf das Gesamtgewicht der letztlich herzustellenden Haftklebemasse. Stellvertretend genannt seien an dieser Stelle vor allem die besonders verträglichen Styrol-Isopren-Styrol(SIS)- und Styrol-Butadien-Styrol(SBS)-Typen.

Außerdem können den - insbesondere festen - nicht-thermoplastischen Elastomeren, wie insbesondere den Nitrilkautschuken. - inerte Trennhilfsmittel wie Talkum, Silicate (Talk, Ton, Glimmer), Zinkstearat und PVC-Puder zugesetzt werden, und zwar insbesondere in einer Größenordnung von 3 Gew. %.

Füllstoffe können insbesondere als Feststoff - insbesondere pulver- oder granulatförmig - eingesetzt werden. Sie sollten derart gewählt werden, dass sie mit der Klebmasse kompatibel sind.

Als Rheologiemodifizierungsmittel lassen sich grundsätzlich alle geeigneten Rheologiemodifizierungsmittel, wie sie im Stand der Technik beschrieben sind, einsetzen. Auf Kompatibilität mit dem Klebstoff sollte dabei geachtet werden. Die einsetzbaren Rheologiemodifizierungsmittel können organischer oder anorganischer Natur sein und flüssig oder insbesondere fest vorliegen. Als Rheologiemodifizierungsmittel eignen sich erfindungsgemäß insbesondere Polyamidwachse, Tonmineralien, Schichtsilikate, pyrogene Kieselsäuren, präzipitierte Kieselsäure und/oder synthetischen Rheologieadditiven, wie Rizinusölderivate, modifizierte Rizinusölderivate, Polyolefine sowie Hybride aus den vorgenannten.

Einsetzbar sind auch Polymere als Rheologiemodifizierungsmittel, wie beispielweise Polymere olefinischer Natur - wie beispielsweise Polymere auf Basis von Ethylen, Butylen, Propylen oder einem höheren Kohlenwasserstoff -, styrolbasierte Polymere -wie beispielsweise Styrol-Butydien-Polymere. Grundsätzlich einsetzbar sind auch Polymere auf Basis von Acrylsäure, Methacrylsäure oder anderen ungesättigten Carboxylsäuren oder auf Basis der Ester der

vorgenannten Säuren - wie beispielsweise Acrylate, Methycrylate, Mischungen von Acrylaten und Methacrylaten -, Polymere auf Basis von Acetaten — wie beispielweise Ethylenvinylacetat. Werden mehrere Rheologiemodifizierungsmittel eingesetzt, können diese grundsätzlich unabhängig voneinander aus den vorgenannten Gruppen von Verbindungen und/oder weiteren Verbindungsklassen ausgewählt werden.

Detaillierte Beschreibung des erfindungsgemäß-en Verfahrens

Der Aufschluss der nicht-thermoplastischen Elastomere, einschließlich des oder der Nitrilkautschuke, erfolgt erfindungsgemäß in einem Planetwalzenextruder.

Planetwalzenextruder als kontinuierlich arbeitendes Aggregat sind seit längerer Zeit bekannt und fanden zuerst Einsatz in der Verarbeitung von Thermoplasten wie zum Beispiel PVC, wo sie hauptsächlich zum Beschicken der Folgeeinheiten wie zum Beispiel Kalander oder Walzwerke verwendet wurden. Durch ihren Vorteil der großen Oberflächenerneuerung für Material- und Wärmeaustausch, mit dem sich die über Friktion eingebrachte Energie rasch und effektiv abführen lässt, sowie der geringen Verweilzeit und des engen Verweilzeitspektrums hat sich ihr Einsatzgebiet in letzter Zeit u.a. auch auf Compoundierprozesse erweitert, die eine besonders temperaturkontrollierte Fahrweise erfordern.

Planetwalzenextruder bestehen aus mehreren Teilen, nämlich einer umlaufenden Zentralspindel, einem die Zentralspindel im Abstand umgebenden Gehäuse mit einer Innenverzahnung und Planetspindeln, welche in dem Hohlraum zwischen Zentralspindel und innen verzahntem Gehäuse wie Planeten um die Zentralspindel umlaufen. Soweit im Folgenden von einer Innenverzahnung des Gehäuses gesprochen wird, so schließt das auch ein mehrteiliges Gehäuse mit einer Buchse ein, welches die Innenverzahnung des Gehäuses bildet. Im Planetwalzenextruder kämmen die Planetspindeln sowohl mit der Zentralspindel als auch mit dem innen verzahnten Gehäuse. Zugleich gleiten die Planetspindeln mit dem in Förderrichtung weisenden Ende an einem Anlaufring. Die Planetwalzenextruder besitzen im Vergleich zu allen anderen Extruderbauarten eine extrem gute Mischwirkung, jedoch eine viel geringere Förderwirkung.

Planetwalzenextruder gibt es je nach Hersteller in verschiedenen Ausführungen und Größen. Je nach gewünschter Durchsatzleistung liegen die Durchmesser der Walzenzylinder typischerweise zwischen 70 mm und 400 mm.

Planetwalzenextruder haben in der Regel einen Füllteil und einen Compoundierteil.

Der Füllteil, in der Regel entsprechend einer Füllzone, besteht aus einer Förderschnecke, auf die sämtliche Feststoffkomponenten - vorliegenden insbesondere die nicht-thermoplastischen Elastomere und gegebenenfalls weitere Komponenten - kontinuierlich dosiert werden. Die Förderschnecke übergibt das Material dann dem Compoundierteil. Der Bereich des Füllteils mit der Schnecke ist vorzugsweise gekühlt, um Anbackungen von Materialien auf der Schnecke zu vermeiden. Es gibt aber auch Ausführungsformen ohne Schneckenteil, bei denen das Material direkt zwischen Zentral- und Planetenspindeln aufgegeben wird. Für die Wirksamkeit des erfindungsgemäßen Verfahrens ist dies aber nicht von Bedeutung. Auch die Zentralspindel kann vorzugsweise gekühlt sein.

Der Compoundierteil besteht üblicherweise aus einer angetriebenen Zentralspindel und mehreren Planetenspindeln, die innerhalb eines Walzenzylinders mit Innenschrägverzahnung um die Zentralspindel umlaufen. Die Drehzahl der Zentralspindel und damit die Umlaufgeschwindigkeit der Planetenspindeln kann variiert werden und ist damit ein wichtiger Parameter zur Steuerung des Compoundierprozesses. Der Compoundierteil kann durch eine einzige Compoundierzelle oder durch eine Abfolge mehrerer - insbesondere durch Anlaufringe und gegebenenfalls zusätzliche Einspritz- oder Dispergierringe - voneinander getrennter Compoundierzonen gebildet werden. Zahl und Anordnung der Planetenspindeln kann dabei von Compoundierzone zu Compoundierzone variieren. Typischerweise wird der Compoundierteil vorzugsweise zumindest aus zwei, besonders bevorzugt aber aus drei oder vier gekoppelten Walzenzylindern bestehen, wobei jeder Walzenzylinder einen oder mehrere separate Temperierkreise aufweisen kann.

Das umgebende Gehäuse hat in zeitgemäßer Ausbildung einen Doppelmantel. Der Innenmantel wird durch eine Buchse, die mit der Innenverzahnung versehen ist, gebildet. Zwischen Innen- und Außenmantel ist die wichtige Kühlung des Planetwalzenextruders vorgesehen.

Die Planetenspindeln bedürfen keiner Führung in Umfangsrichtung. Durch die Verzahnung ist gewährleistet, dass der Abstand der Planetenspindeln in Umfangsrichtung gleich bleibt. Es kann von einer Eigenführung gesprochen werden

Die Materialien werden zwischen Zentral- und Planetenspindeln beziehungsweise zwischen Planetenspindeln und Schrägverzahnung des Walzenteils umgewälzt, so dass unter Einfluss von Scherenergie und äußerer Temperierung die Dispergierung der Materialien zu einem homogenen Compound erfolgt.

Die Anzahl und Art der in jedem Walzenzylinder umlaufenden Planetenspindeln kann variiert und somit den Erfordernissen des Prozesses angepasst werden. Die Spindelanzahl und -art beeinflusst das freie Volumen innerhalb des Planetwalzenextruders, die Verweilzeit des Materials im Prozess und bestimmt zudem die Flächengröße für den Wärme- und Materialaustausch. Die Anzahl und Art der Planetenspindeln hat über die eingeleitete Scherenergie Einfluss auf das Compoundierergebnis. Bei konstantem Walzenzylinderdurchmesser lässt sich mit größerer Spindelanzahl eine bessere Homogenisier- und Dispergierleistung beziehungsweise ein größerer Produktdurchsatz erzielen. Zum Erzielen

eines guten Verhältnisses von Compoundiergüte zu Produktrate sind vorzugsweise mindestens die Hälfte oder sogar mindestens 3/4 der möglichen Anzahl an Planetenspindeln einzusetzen.

Die maximale Anzahl an Planetenspindeln, die sich zwischen Zentralspindel und Walzenzylinder einbauen lässt, ist abhängig vom Durchmesser des Walzenzylinders und vom Durchmesser der verwendeten Planetenspindeln. Selbstverständlich kann jeder Walzenzylinder hinsichtlich Anzahl und Art der Planetenspindeln unterschiedlich bestückt sein und so den jeweiligen rezepturiellen und verfahrenstechnischen Anforderungen angepasst sein.

Bevorzugt wird das zumindest eine nicht-thermoplastische Elastomer in einem Planetwalzenextruder aufgeschlossen, der mehrere hintereinander angeordnete Compoundierzonen - insbesondere in Form mehrere hintereinander geschalteter Walzenzylinder - aufweist, die jeweils mit der aus der davor liegenden Compoundierzone austretenden Compoundiermasse - beziehungsweise in der ersten Compoundierzone mit der aus der Füllzone geförderten, gegebenenfalls additivierten Elastomerkomponente - befüllt werden können, in die aber durch geeignete Einlassvorrichtungen separat weitere Komponenten der Klebmasse eingegeben werden können. Dabei werden die nicht-thermoplastischen Elastomere kontinuierlich in die erste Compoundierzone und durch diese hindurch gefördert und der zum Aufschluss der nicht-thermoplastischen Elastomere verwendete Teil der Epoxidharze wird kontinuierlich in die erste der Compoundierzonen derart eingebracht, dass in der ersten Compoundierzone eine Compoundiermasse resultiert, in der das Verhältnis V der Menge an Epoxidharzen $M_{Epoxid}$ zur Menge an nicht-thermoplastischen Elastomeren $M_{Elast}$ den Wert $V = M_{Epoxid} / M_{Elast} = 2$ zu keiner Zeit überschreitet, dass also die Menge an Epoxidharzen maximal doppelt so hoch ist wie die Menge an nicht-thermoplastischen Elastomeren.

Der Beschreibung dieses Prozessschrittes als "kontinuierlich Förderung" durch die erste Compoundierzone soll es nicht entgegenstehen, dass die Compoundiermasse am Ende dieser Zone aufgestaut wird - etwa durch einen dort vorgesehenen Anlaufring, gegebenenfalls auch ein Dispergierring -, solange Zulauf in und Ablauf aus dieser ersten Compoundierzone sich im Wesentlichen die Waage halten. Der Beschreibung als "kontinuierlich" sollen ebenfalls nicht die üblichen Anlauf- und Abschlussphasen des Prozesses entgegenstehen.

Als "erste Compoundierzone" wird diejenige Compoundierzone bezeichnet, in der die nicht-thermoplastischen Elastomere und der der zum Aufschluss der nicht-thermoplastischen Elastomere verwendete Teil der Epoxidharze zusammengeführt werden. Dies wird regelmäßig auch die zuvorderst im Planetwalzenextruder angeordnete Compoundierzone sein. Der Bezeichnung "erste Compoundierzone" steht es jedoch nicht entgegen, wenn vor dieser ersten Compoundierzone weitere Compoundierzonen angeordnet sind, die leer bleiben oder die nur eine der Komponenten ohne weitere Vermischung durchgeführt werden.

Im Verfahren gemäß vorliegender Erfindung können die Festkomponenten als separate Komponenten, als gemeinsamer Premix oder als Teilvormischungen auf- beziehungsweise zugegeben werden. Die Dosierung der Komponenten als Premix eignet sich besonders, wenn die Komponenten ähnliche Darreichungsformen beziehungsweise ähnliche Schüttdichten aufweisen, so dass sich auf diese Weise die Anzahl der Dosiersysteme gering halten lässt. Premixe lassen sich auf einfache Weise zum Beispiel in Pulvermischern herstellen. Vorzugsweise werden die Festkomponenten über mindestens ein volumetrisch oder gravimetrisch arbeitendes Dosiersystem wie zum Beispiel einen Trichter in den Füllteil des Planetwalzenextruders aufgegeben. Auch die Flüssigkomponenten können als separate Komponenten, als gemeinsamer Premix oder als Teilvormischungen auf- beziehungsweise zugegeben werden.

Es ist vorteilhaft, einen Planetwalzenextruder zu verwenden, dessen Compoundierteil durch Zusammenschalten von mindestens zwei Walzenzylindern verlängert ist. Als vorteilhaft hat sich die Verwendung eines Planetwalzenextruders herausgestellt, dessen Compoundierteil aus zwei bis acht gekoppelten Walzenzylindern, vorzugsweise aus drei oder vier gekoppelten Walzenzylindern besteht, wobei jeder Walzenzylinder einen oder mehrere separate Temperierkreise aufweisen kann.

Zum einen ist durch die Verwendung von mehr als einem Walzenzylinder trotz Anwesenheit friktionsreduzierender Komponenten zur Vermeidung des Molmassenabbaus ein vollständiges Aufschließen der Elastomerkomponenten sowie die gewünschte Homogenisier- und Dispergierleistung bei wirtschaftlichen Durchsatzraten möglich; zum anderen ermöglicht das Zusammenschalten vorzugsweise separat temperierter Walzenzylinder eine ausgewogene Temperaturführung des Prozesses, die die Verwendung von thermisch sensiblen Stoffen wie beispielsweise thermisch aktivierbaren Vernetzer- oder Initiatorsystemen erlaubt.

Der mehrere hintereinander angeordnete Compoundierzonen aufweisende Planetwalzenextruder kann insbesondere derart aufgebaut sein, dass eine erste Zone den Füllteil mit der Füllzone sowie die erste Compoundierzone umfasst. Die Füllzone weist dabei in der Regel eine Förderschnecke als Zentralspindel auf und dient dazu, die ersten Rohstoffe - insbesondere die Elastomere sowie gegebenenfalls vorhandene Additive - in die erste Compoundierzone zu fördern. Hier werden die zum Aufschluss verwendeten Reaktivharze zugeführt, so dass das vorstehend angegebene Mischungsverhältnis eingehalten wird.

Im Sinne der Erfindung sollten der Füllteil des Planetwalzenextruders und die Zentralspindel vorzugsweise nicht beheizt, sondern gekühlt werden, um ein Anbacken von Material auf der Füllschnecke zu vermeiden sowie einen effektiven Wärmeaustausch zu gewährleisten.

Zwischen zwei Compoundierzonen - insbesondere zusammengeschalteten Walzenzylindern - befindet sich im

Allgemeinen ein Anlaufring, durch dessen freien Querschnitt die Zentralspindel führt und der die Planetenspindeln eines Walzenzylinders ortsfest hält. Durch an den Anlaufringen zusätzlich eingesetzte Dispergierringe kann der freie Querschnitt beim Übergang zwischen zwei Walzenzylindern reduziert werden. Damit kann der Rückstau des Produkts und damit der Füllgrad und die Verweilzait beziehungsweise das Ausmaß an Scherenergie variiert und an die Prozessanforderungen angepasst werden. Dies bewirkt eine verstärkte Knetleistung.
Der Planetwalzenextruder kann beispielweise vier Compoundierzonen besitzen, die jeweils durch Anlaufringe voneinander getrennt sind. Jede Compoundierzone kann eine individuelle Anzahl und Ausgestaltung an Planetwalzen aufweisen und ist unabhängig temperierbar Das Ende der ersten Compoundierzone wird dementsprechend durch den Beginn des ersten Anlaufrings definiert.

Zusätzlich können die Anlaufringe mit radialen Bohrungen versehen sein, über die Flüssigkeiten wie zum Beispiel Weichmacheröle oder auch Schutzgase wie Stickstoff, Argon, Kohlendioxid o.ä. dem Compoundierteil des Planetwalzenextruders zugeführt werden können. Insbesondere können über die Anlaufringe flüssige Komponenten wie zum Beispiel Weichmacheröle, Weichharze oder Harzschmelzen zugegeben werden. Über die Menge an Flüssigkeit, die bereits vor Einfluss an Scherenergie zugegeben wird, lassen sich sowohl Abbaugrad der Elastomere wie auch Compoundierungstemperatur der druckempfindlichen Klebemasse beeinflussen. Beispielsweise wird ein besonders geringer Molmassenabbau der Elastomeren erhalten, wenn ein flüssiger Weichmacher bereits dann zugegeben wird, wenn noch keinerlei Einfluss von Friktionsenergie erfolgte, also dieser entweder einem Feststoffpremix zugegeben wird, oder das Weichmacheröl zwischen Füllschnecke und erstem Walzenzylinder kontinuierlich zudosiert wird. Auch ein Aufteilen der Komponenten als sogenannter split-feed über die Verfahrenslänge ist möglich und ist ein weiterer Parameter zur Steuerung des Prozesses hinsichtlich Elastomerabbau und Produkttemperatur.

Die dargelegten Verfahrensschritte können optional unter einer Schutzgasatmosphäre zur Vermeidung von oxidativem Polymerabbau durchgeführt werden.

Zum Zwecke erhöhter Gasblasenfreiheit der beschichteten Klebmasse kann zwischen Planetwalzenextruder und Auftragswerk eine Vakuumentgasung, zum Beispiel eine Vakuumkammer, ein Entgasungsextruder oder ähnliches installiert sein.

Im Unterschied zu sonst üblichen Herstellungsverfahren wird davon ausgegangen, dass im Planetwalzenextruder gemäß dem Verfahren der vorliegenden Erfindung allenfalls eine geringfügige Mastikation der nicht-thermoplastischen Elastomere, insbesondere des Nitrilkautschuks stattfindet, da dieser hier nicht separat dem Einfluss hoher Scherenergie unterworfen wird, sondern zusammen mit einer oder mehreren flüssigen Komponenten verarbeitet wird. Das Ausmaß an Friktionsenergie konnte derartig limitiert werden, dass die Mastikation des Kautschuks, d. h. der Molmassenabbau der Elastomeren, gering gehalten sowie hohe resultierende Compoundierungstemperaturen vermieden werden können.

Zudem weisen Planetwalzenextruder außerordentlich große Flächen auf, an denen es zum Materialabtausch und Oberflächenerneuerung kommt, mit der die über Friktion eingebrachte Scherenergie schnell abgeführt werden kann und auf diese Weise unerwünscht hohe Produkttemperaturen vermieden werden.

Die Anzahl und Art der Planetenspindeln hat über die eingeleitete Scherenergie Einfluss auf das Compoundierergebnis. Bei konstantem Walzenzylinderdurchmesser lässt sich mit größerer Spindelanzahl eine bessere Homogenisier- und Dispergierleistung beziehungsweise ein größerer Produktdurchsatz erzielen. Gemäß vorliegender Erfindung sind zum Erzielen eines guten Verhältnisses von Compoundiergüte zu Produktrate vorzugsweise mindestens die Hälfte, besonders bevorzugt sogar mindestens ¾ der möglichen Anzahl an Planetenspindeln einzusetzen. Selbstverständlich kann jeder Walzenzylinder hinsichtlich Anzahl und Art der Planetenspindeln unterschiedlich bestückt sein und so den jeweiligen rezepturiellen und verfahrenstechnischen Anforderungen angepasst sein.

Über die Wandungstemperatur der Walzenzylinder lässt sich insbesondere der Eintrag an Prozesswärme steuern. Bei den genannten Wandungstemperaturen lassen sich Haftklebemassen herstellen, die typischerweise besonders homogen sind und gleichzeitig allenfalls einer geringfügigen Mastikation unterliegen.

Der Energieeintrag wird außerdem durch die Konfiguration des Planetwalzenextruders beeinflusst. Über die Drehzahl der Zentralspindel des Planetwalzenextruders lassen sich wiederum insbesondere der Eintrag von Scherenergie und die Gesamtverweildauer der Masse im Planetwalzenextruder steuern. Neben der Wandungstemperatur der Walzenzylinder und dem eingesetzten Extrudertyp wird der Energieeintrag daher auch durch die Drehzahl der Zentralspindel beeinflusst. Erfindungsgemäß kann einer Verringerung beziehungsweise Erhöhung der Wandungstemperatur der Walzenzylinder typischerweise durch eine gegenläufige Veränderung der Drehzahl der Zentralspindel begegnet werden, um eine Haftklebemasse mit einem vergleichbaren Eigenschaftsprofil zu erhalten.

Insbesondere wird die Drehzahl aber beim Übergang von kleineren zu größeren Maschinen und Durchsätzen verändert, wobei charakteristischerweise eine kleinere Maschine (also eine solche mit kleinerem Innendurchmesser der Walzenzylinder von 70 mm) mit einer höheren Drehzahl betrieben wird (z.B. bei 90 Umdrehungen pro Minute), um ein vergleichbares Ergebnis zu erhalten zu einer größeren Maschine (also einer mit einem größeren Innendurchmesser der Walzenzylinder von 150 mm) mit einer niedrigeren Drehzahl (z.B. 35 Umdrehungen pro Minute). Dem Fachmann sind solche Scale-Up Anpassungen in Bezug auf Maschinengröße und Materialdurchsatz geläufig.

Charakteristisch für den Planetwalzenextruder ist aber auch, dass die Temperaturkontrolle der verarbeiteten Masse sehr gut über die eingestellten Gehäusetemperaturen gelingt, und regelmäßig besser als beispielsweise mit einem Doppelschneckenextruder. Bei einem Planetwalzenextruder kann deshalb oft auch bei einem Scale-Up-Schritt mit ähnlichen Wandungstemperaturen gearbeitet werden, selbst wenn die Drehzahl deutlich geändert wird.

Das erfindungsgemäße Verfahren kann insbesondere folgende Prozessschritte aufweisen:

- das zumindest eine nicht-thermoplastische Elastomer wird in einer Füllzone des Planetwalzenextruders vorgelegt und von dort kontinuierlich mit einem mittleren Massestrom $q_{El}$ in die erste Compoundierzone transportiert,
- ein Teil der Epoxidharze wird kontinuierlich mit einem mittleren Massestrom $q_{RH1}$ über die Füllzone und/oder in einer ersten Einlassvorrichtung in die erste Compoundierzone zugegeben ("erster Reaktivharzzufluss"), so dass das Verhältnis V der Masse an Epoxidharzen $M_{Epoxid}$ zur Masse an nicht-thermoplastischen Elastomeren $M_{Elast}$ den Wert $V = M_{Epoxid} / M_{Elast} = 2$ zu keiner Zeit überschreitet; mit anderen Worten, dass also die Massenanteil an Epoxidharzen $M_{Epoxid}$ in der ersten Compoundierzone jederzeit maximal 66,66 Gew.-% der Gesamtmasse $M_G$ an Epoxidharzen und nicht-thermoplastischen Elastomern ($M_G = M_{Epoxid} + M_{Elast}$) beträgt;
- das zumindest eine nicht-thermoplastische Elastomer und das Reaktivharz des ersten Reaktivharzzuflusses werden in der ersten Compoundierzone kontinuierlich innig miteinander vermengt.

Wird die Menge an Epoxidharzen derart gewählt, dass sie die Menge an nicht-thermoplastischen Elastomeren $M_{Elast}$ um das Doppelte überschreitet, kann es dazu kommen, dass gar kein Aufschluss des Nitrilkautschuks stattfindet, so dass keine homogene Vermischung der Komponenten eintritt.

Je nach Prozessführung können mit dem Massestrom aus der Füllzone oder über die erste oder gegebenfalls andere Einlassvorrichtungen weitere Zusatzstoffe in die erste Compoundierzone eingegeben werden.
Die Compoundiermasse wird aus der ersten Compoundierzone kontinuierlich in die zweite Compoundierzone weitergeführt.

Als vorteilhaft hat es sich weiter herausgestellt, wenn das Verhältnis V der Masse an Epoxidharzen $M_{Epoxid}$ zur Masse an nicht-thermoplastischen Elastomeren $M_{Elast}$ in der Compoundiermasse der ersten Compoundierzone den Wert $V = M_{Epoxid}/M_{Elast} = 1/9$, bevorzugt 1/5, nicht unterschreitet, dass also die Masse an Epoxidharzen $M_{Epoxid}$ nicht weniger als ein Neuntel, bevorzugt nicht weniger als ein Fünftel, der Masse an nicht-thermoplastischen Elastomeren $M_{Elast}$ beträgt; beziehungsweise gleichbedeutend dass der Massenanteil an Epoxidharzen in der ersten Compoundierzone jederzeit minimal 10 Gew.-%, bevorzugt minimal 16,66 Gew.-%, der Gesamtmasse $M_G$ an Epoxidharzen und nicht-thermoplastischen Elastomern ($M_G = M_{Epoxid} + M_{Elast}$) (Gesamtmasse $M_G$ = 100 %) beträgt. Es hat sich gezeigt, dass es bei einer geringeren Menge an Epoxidharzen als Aufschlussmittel wegen der eingetragenen Scherenergie zu einer Überhitzung der Elastomere und zu deren thermischem Abbau (Verbrennung) kommen kann.
Insbesondere vorteilhaft liegt das Verhältnis V der Masse an Epoxidharzen $M_{Epoxid}$ zur Masse an nicht-thermoplastischen Elastomeren $M_{Elast}$ in der Compoundiermasse der ersten Compoundierzone im Bereich $1/3 \leq V \leq 3/2$; mit anderen Worten gilt insbesondere vorteilhaft für den Masseanteil der Epoxidharze in der ersten Compoundierzone jederzeit, dass er im Bereich zwischen 25 und 60 Gew.-%, bezogen auf die Gesamtmasse $M_G$ an Epoxidharzen und nicht-thermoplastischen Elastomern ($M_G = M_{Epoxid} + M_{Elast}$) als 100 %, liegt.
"Jederzeit" - beziehungsweise entsprechend "zu keiner Zeit" - bezieht sich hier und bei der Prozessbeschreibung im Rahmen dieser Schrift auf den kontinuierlich laufenden Prozess, so dass gegebenenfalls auftretende Abweichungen während der üblichen Anlauf- und Abschlussphasen des Prozesses den gemachten Angaben nicht entgegenstehen.

Während im vorderen Compoundierteil des Planetwalzenextruders die Walzenzylinder vorteilhafterweise mit Temperaturen - zumindest bei der Verwendung von Festharzen - oberhalb des Schmelzpunkts der verwendeten Harze beheizt werden, wird der hintere Compoundierteil vorteilhafterweise zum Absenken der Produkttemperatur gekühlt. Dadurch wird die Verweilzeit der Selbstklebemasse bei höheren Temperaturen möglichst kurz gehalten, so dass eine Aktivierung oder Schädigung der in der Selbstklebemasse enthaltenen thermisch sensiblen Substanzen vermieden wird.

Insbesondere kann es vorteilhaft sein, einen Temperaturgradienten senkrecht zur Förderrichtung vorzusehen, insbesondere nach innen abnehmend, indem die Zentralspindel bei niedrigeren Temperaturen gefahren wird als die Wandungstemperaturen.

Als besonders bevorzugt hat sich herausgestellt, wenn die Temperatur eines Walzenzylinders vom ersten bis zum letzten Walzenzylinder sinkt, d.h. die Temperatur eines Walzenzylinders liegt unterhalb des vorigen, insbesondere mindestens 5 °C besonders bevorzugt 10 °C weniger. In anderen Ausführungen kann es sich bewähren, zwei oder mehrere aufeinander folgende Walzenzylinder mit der gleichen Temperatur zu betreiben.

Vorteilhaft ist der Füllteil über die gekühlte Zentralspindel temperiert. Bevorzugt betragen die Wandungstemperaturen der Compoundierzonen mindestens 50 °C, insbesondere mindestens 60 °C und besonders bevorzugt mindestens 70 °C. Bevorzugt betragen die Wandungstemperaturen der Compoundierzonen maximal 150 °C, bevorzugt maximal 130 °C, insbesondere maximal 110 °C.

Als Temperaturprofile seien nur beispielhaft und ohne einschränkende Bedeutung folgende Abfolgen genannte,

wobei jeweils wie folgt angegeben ist:
[Temperatur erste Compoundierzone / Temperatur zweite Compoundierzone / Temperatur dritte Compoundierzone / Temperatur vierte Compoundierzone]; alle Angaben jeweils in °C.

Profil 1: [80 / 70 / 60 / 50] ; Zentralspindel 30 °C
Profil 2: [90 / 80 / 60 / 50] ; Zentralspindel 50 °C
Profil 3: [70 / 60 / 60 / 50] ; Zentralspindel 20 °C

Der zumindest eine Härterwird vorteilhaft in einer oder mehreren der ersten Compoundierzone nachfolgenden Compoundierzonen und/oder in einer dem Planetwalzenextruder unmittelbar oder mittelbar nachgeschalteten Einheit zugegeben. Die Zugabe erfolgt dabei vorteilhaft möglichst spät im Herstellungsprozess, um eine vorzeitige Härtungsreaktion auszuschließen und das zur Verfügung stehende Temperaturfenster bei der Compoudierung möglichst flexibel nutzen zu können.

Bevorzugt erfolgt die Zugabe des Härters bei einer Temperatur der Compoundiermasse unterhalb der Aktivierungstemperatur des Reaktivsystems, bevorzugt bei einer Temperatur der Compoundiermasse, die mindestens 10 °C unter der Aktivierungsenergie des Reaktivsystems liegt. Die Aktivierungstemperatur ist erfindungsgemäß definiert als die Onsettemperatur $T_{RO}$ des DDK-Diagramms nach DSC gemäß DIN 53765:1994.

In einer oder mehreren der ersten Compoundierzone nachfolgenden Compoundierzonen und/oder in einer dem Planetwalzenextruder unmittelbar oder mittelbar nachgeschalteten Einheit können außerdem ein oder mehrere Beschleuniger für das Reaktivsystem zugegeben werden. Diese Zugabe erfolgt in einer vorteilhaften Vorgehensweise gemeinsam mit der Zugabe des oder der Härter.

In einer bevorzugten Ausführungsform des erfindungsgemäßen Verfahrens ist zwischen Planetwalzenextruder und der eingesetzten Beschichtungsvorrichtung eine Schmelzepumpe oder ein Extruder zur Klebmasseförderung, insbesondere ein Entgasungsextruder wie beispielsweise ein Doppelschneckenextruder, angeordnet, der drehzahl- oder druckgeregelt, vorzugsweise druckgeregelt betrieben wird. Um beim Beschichten einen definierten, vollflächigen Masseauftrag auf dem bahnförmigen Material, d.h. bahnförmigen Träger, zu erhalten, ist es vorteilhaft, wenn die Haftklebemasse vor Eintritt in eine Beschichtungsdüse und/oder einen Kalander einer Entgasung unterworfen wird, was besonders wichtig ist im Falle der Verwendung von Schutzgasen während des Compoundierprozesses im Planetwalzenextruder. Gemäß dem Verfahren der vorliegenden Erfindung erfolgt die Entgasung unter Einfluss von Vakuum vorzugsweise in Schneckenmaschinen, die zugleich die Druckverluste der Rohrleitungen und Beschichtungsdüse überwinden können.

Je nach schlussendlich gewünschter Klebmassenzusammensetzung und/oder den zum Aufschluss verwendeten Epoxidharzen kann es vorteilhaft sein, bestimmte Verfahrensabläufe einzuhalten.

Für die Herstellung solcher Klebemassen, bei denen der Massenanteil der Elastomere an der Gesamtmasse von Reaktivharzen, insbesondere Epoxidharzen, plus Elastomeren (Gesamtmasse als 100 %, also ohne Berücksichtigung eventueller weiterer Komponenten, wie Füllstoffe und dergleichen) in der resultieren haftklebrigen Klebemasse mindestens 20 Gew.-% beträgt, kann man erfindungsgemäß vorteilhaft derart vorgehen, dass der zum Aufschluss verwendete Teil der Reaktivharze in der ersten Compoundierzone ausschließlich Epoxidharze mit einer Erweichungstemperatur von mindestens 40 °C und/oder Epoxidharze mit einer Viskosität von mehr als 50 Pa·s bei Raumtemperatur umfasst.

Für die Herstellung solcher Klebmassen, bei denen der Masse-Anteil der Elastomere an der Gesamtmasse von Reaktivharzen - insbesondere Epoxidharzen - und Elastomeren (Gesamtmasse als 100 %, also ohne Berücksichtigung eventueller weiterer Komponenten, wie Füllstoffe und dergleichen) in der resultieren haftklebrigen Klebemasse weniger als 20 Gew.-% beträgt, ist es in der Regel erforderlich, aufgrund der hohen Harzmenge in der resultierenden Klebmasse, aber der erfindungsgemäß begrenzt möglichen Harzmenge in der ersten Compoundierzone während der weiteren Prozessschritte noch weitere Mengen an Reaktivharz zuzugeben. Soll dies im Planetwalzenextruder geschehen, so ist die Füllmenge der ersten Compoundierzone zunächst insgesamt gering, was einem erfolgreichen Aufschluss entgegenstehen kann. Dem kann dadurch entgegengewirkt werden, dass die weiteren Reaktivharzmengen oder zumindest ein wesentlicher Teil davon erst in einem zweiten Aggregat zugegeben werden, dass von dem Massestrom durch die erste Compoundierzone des Planetwalzenextruders unabhängig betrieben werden kann.

Man kann vorteilhaft auch so vorgehen, dass der zum Aufschluss verwendete Teil der Reaktivharze in der ersten Compoundierzone ausschließlich Epoxidharze mit einer Erweichungstemperatur von mindestens 40 °C und/oder Epoxidharze mit einer Viskosität von mehr als 50 Pa·s bei Raumtemperatur umfasst, wobei der Massenanteil an Epoxidharzen an der Gesamtmasse von Epoxidharzen und nicht-thermoplastischen Elastomeren in der ersten Compoundierzone nicht über 50 % liegt, insbesondere im Bereich von 25 bis 50 % liegt, und wobei in der ersten Compoundierzone weiterhin mindestens 10 Gew.-% Füllstoffe in die Compoundiermasse eingebracht werden, bezogen auf die dann vorliegende gesamte Compoundiermasse in der ersten Compoundierzone.

In einer vorteilhaften Vorgehensweise kann das erfindungsgemäße Verfahren auch derart geführt werden, wobei zumindest die nicht-thermoplastischen Elastomere und der zum Aufschluss verwendete Teil der Reaktivharze in

die erste der Compoundierzonen wie bereits dargelegt eingebracht werden. Umfasst der zum Aufschluss verwendete Teil der Reaktivharze in der ersten Compoundierzone dabei jedoch ausschließlich Epoxidharze mit einer Viskosität von weniger als 50 Pa·s bei Raumtemperatur, so können die Reaktivharze auch in einem Überschuss eingesetzt werden, bei dem das Verhältnis V der Masse an Epoxidharzen $M_{Epoxid}$ zur Masse an nicht-thermoplastischen Elastomeren $M_{Elast}$ in der Compoundiermasse der ersten Compoundierzone über 3 zu 2 liegt (bei dem der Massenanteil der Epoxidharze in der ersten Compoundierzone also oberhalb von 60 Gew.-%, bezogen auf die Gesamtmasse $M_G$ an Epoxidharzen und nicht-thermoplastischen Elastomern ($M_G = M_{Epoxid} + M_{Elast}$) als 100 % liegt), wenn in der ersten Compoundierzone weiterhin mindestens 10 Gew.-% Füllstoffe in die Compoundiermasse eingebracht werden, bezogen auf die dann vorliegende gesamte Compoundiermasse.

Das erfindungsgemäße Verfahren ist insbesondere auch zur Herstellung solcher Klebmassen geeignet, bei denen als Matrixpolymerkomponente ein Nitrilkautschuk oder eine Mischung mehrerer Nitrilkautschuke, oder Elastomere umfassend einen oder mehrere Nitrilkautschuke verwendet werden, sowie als Reaktivsystem einerseits ein Epoxidharz oder eine Mischung mehrerer Epoxidharze, oder Reaktivharze umfassend ein oder mehrere Epoxidharze sowie andererseits mindestens einen Initiator für eine Epoxidharzhärtung oder Härter für Epoxidharze eingesetzt werden, und bei denen das Verhältnis von Reaktivharzen zu Elastomeren in der Klebemasse mindestens 1 : 1 beträgt, also für solche Klebmassen, die einen hohen Reaktivharzanteil aufweisen. Eine solche Klebmasse, enthaltend mindestens ein Polymer, das bevorzugt Nitrilkautschuk ist, weiterhin enthaltend mindestens ein Reaktivharz, wobei die Klebemasse auf 100 Teile Polymer und Klebharz mindestens 104 Teile des mindestens einen Reaktivharzes enthält, sowie mindestens einen Initiator und/oder Härter beschreibt beispielsweise die eingangs genannte DE 10 2015 217 860 A. Wie bereits angedeutet, bietet sich das erfindungsgemäße Verfahren insbesondere dann an, wenn auf die Anwesenheit von Klebharzen verzichtet werden soll.

Mit den erfindungsgemäß hergestellten Klebemassen werden - wie bereits dargestellt - bevorzugt Klebebänder hergestellt, wobei sich auch Klebebänder mit dicken Klebebandschichten realisieren lassen. Dazu wird die Klebemasse auf ein bahnförmiges Material aufgetragen (permanentes oder ein temporär verwendetes Trägermaterial; siehe oben).

Vorteilhaft wird die resultierende haftklebrige Klebemasse nach der Zugabe des Härters unterhalb der Aktivierungstemperatur des Reaktivsystems zu einer Klebemassenschicht ausgeformt, insbesondere auf das bahnförmige Material aufgetragen, bevorzugt bei einer Temperatur der Klebmasse, die mindestens 10 °C unter der Aktivierungsenergie des Reaktivsystems liegt.

Die Beschichtung des bahnförmigen Materials erfolgt bevorzugt lösemittelfrei, beispielsweise mittels Düsenbeschichtung oder mit einem Mehrwalzenauftragswerk. Besonders effektiv und vorteilhaft kann dies mit einem 2- bis 5-Walzenauftragswerk erfolgen. Besonders effektiv kann dies mit einem 4-Walzenauftragswerk erfolgen, so dass die Selbstklebemasse bei Durchgang durch ein oder mehrere Walzenspalte vor Übergabe auf das bahnförmige Material auf die gewünschte Dicke ausgeformt wird. Die Walzen des Auftragswerkes können dabei einzeln auf Temperaturen von 20 °C bis 150 °C eingestellt werden.

Die Aushärtung der erfindungsgemäßen Klebstoffe beziehungsweise Klebebänder nach Applikation kann vorteilhaft bei Temperaturen zwischen 120 °C und 200 °C für 10 bis 120 Minuten erfolgen. Die exakten Bedingungen richten sich nach dem verwendeten Härter und dem gegebenenfalls verwendeten Beschleuniger und der verwendeten Menge an Beschleuniger. Typischerweise werden Beschleuniger zwischen 0.5 phr und 5 phr eingesetzt, wobei phr sich auf die Menge an verwendeten Epoxidharzen bezieht. Beispielhafte Aushärtebedingungen sind 30 Minuten bei 180 °C, 30 Minuten bei 160 °C, 35 Minuten bei 145 °C, 60 Minuten bei 130 °C, 120 Minuten bei 120 °C.

Das beschriebene Verfahren erlaubt die Herstellung von hochleistungsfähigen haftklebrigen Reaktivklebemassen und insbesondere im Verbund mit einer nachgeschalteten Beschichtungseinheit die Herstellung von hochleistungsfähigen Klebebändern unter Erlangung besonderer Kostenvorteile.

In den Beispielen des experimentellen Teils wurde ein Planetwalzenextruder der Firma ENTEX Rust&Mitschke verwendet. Die Planetwalzenextruder-Konfiguration, die in den Beispielen verwendet wird, zeigt Figur 1, die Figur dient gleichzeitig dazu, den grundsätzlichen Aufbau eines Planetwalzenextruders beispielhaft zu illustrieren.

Der Planetwalzenextruder hat einen Füllteil (2) und einen Compoundierteil (5), der aus vier hintereinander geschalteten Walzenzylindern (5a bis 5d), jeweils entsprechend einer Compoundierzone, besteht. Der Walzenzylinder 5a entspricht dabei der ersten Compoundierzone. Innerhalb eines Walzenzylinders tauschen die durch die Umdrehung der Zentralspindel (6) angetriebenen Planetenspindeln (7) die Materialien zwischen Zentralspindel (6) und Planetenspindeln (7) beziehungsweise zwischen Planetenspindeln (7) und der Wandung (10) des Walzenzylinders (5a bis 5d) ab.

Am Ende jedes Walzenzylinders (5a bis 5d) befindet sich ein Anlaufring (8a bis 8d), der die Planetenspindeln (7) ortsfest hält. Optional befinden sich an diesen Stellen zusätzlich Dispergierringe.

Über die Füllöffnung (1) können Komponenten wie zum Beispiel Elastomere, Füllstoffe, Antioxidantien usw. auf die Förderschnecke (3) des Füllteils (2) des Planetwalzenextruders dosiert werden. Die Förderschnecke (3) übergibt die Materialien danach auf die Zentralspindel (6) des ersten Walzenzylinders, also der ersten Compoundierzone (5a). Zur Verbesserung des Materialeinzugs zwischen Zentralspindel (6) und Planetenspindeln (7) werden bei den Experimenten im ersten Walzenzylinder (5a) vier lange und drei kurze Planetenspindeln (7) verwendet, generell sind auch

andere Anordnungen realisierbar.

Die innen hohle Förderschnecke (3) und Zentralspindel (6) sind kraftschlüssig miteinander verbunden und besitzen einen gemeinsamen Temperierkreis. Jeder Walzenzylinder (5a bis 5d) des Compoundierteils (5) verfügt über eine unabhängige Temperierung. Über einen weiteren Temperierkreis kann das Füllteil (2) gekühlt werden. Als Temperiermedium kann Wasser verwendet werden.

Die Dosierung insbesondere der zum Aufschluss verwendeten Epoxidharze, aber auch anderer Komponenten kann beispielsweise über den Einspritzring (4) vor dem ersten Walzenzylinder (5a) beziehungsweise über die mit Bohrungen versehenen Anlaufringe (8a bis 8d) oder in Kombination beider Möglichkeiten erfolgen. Die Walzenzylinder (5a bis 5d) sind in ungefähr der Mitte der Zylinder mit einer Öffnung für Seitenbeschickung versehen. Über diese können bei Bedarf über Seitenbeschicker (9a bis 9d) flüssige oder feste Komponenten - wie insbesondere weitere Reaktivharze und Vernetzer — zugegeben werden. Ebenso geeignet und bevorzugt sind alternativ Seitenbeschicker nach ungefähr einem Viertel der Länge eines jeweiligen Zylinders.

Die Temperatur der Haftklebemasse wird mittels Einstechfühler im Produktaustritt (11) ermittelt.

## Referenzmethoden

Die jeweiligen Parameterangaben im Rahmen dieser Schrift beziehen sich auf die nachfolgenden Referenz-Bestimmungsmethoden, sofern im Einzelnen nichts anderes spezifiziert oder angegeben ist.

### Viskosität

Ein Maß für die Fließfähigkeit des fluiden Beschichtungsmaterials ist dynamische Viskosität. Die dynamische Viskosität wird nach DIN 53019 bestimmt. Als Fluid wird eine Viskosität von weniger als $10^8$ Pa·s bezeichnet. Die Viskosität wird in einem Zylinderrotationsviskosimeter mit einer Standardgeometrie nach DIN 53019-1 bei einer Messtemperatur von 23 °C und einer Schergeschwindigkeit 1 $s^{-1}$ gemessen.

### Molmasse

Angaben zur zahlenmittleren Molmasse $M_n$ beziehungsweise zur gewichtsmittleren Molmasse $M_w$ beziehen sich auf die Messung mittels Gelpermeationschromatographie (GPC) wie folgt: Als Eluent wurde THF (Tetrahydrofuran) mit 0,1 Vol.-% Trifluoressigsäure eingesetzt. Die Messung erfolgte bei 25 °C. Als Vorsäule wurde PSS-SDV, 5 μ, $10^3$ Å, ID 8,0 mm x 50 mm verwendet. Zur Auftrennung wurden die Säulen PSS-SDV, 5 μ, 103 sowie $10^5$ und $10^6$ mit jeweils ID 8,0 mm x 300 mm eingesetzt. Die Probenkonzentration betrug 4 g/l, die Durchflussmenge 1,0 ml pro Minute. Es wurde gegen Polystyrol-Standards gemessen.

### Erweichungstemperaturen von Polymeren beziehungsweise Harzen

Die Erweichungstemperatur wird nach der einschlägigen Methodik durchgeführt, die als ‚Ring and Ball' bekannt ist und nach ASTM E28 standardisiert ist.

Zur Bestimmung der Erweichungstemperatur der Harze kommt ein Ring-Kugel-Automat HRB 754 der Firma Herzog zum Einsatz. Harzmuster werden zunächst fein gemörsert. Das resultierende Pulver wird in einen Messingzylinder mit Bodenöffnung (Innendurchmesser am oberen Teil des Zylinders 20 mm, Durchmesser der Bodenöffnung des Zylinders 16 mm, Höhe des Zylinders 6 mm) gefüllt und auf einem Heiztisch geschmolzen. Die Befüllmenge wird so gewählt, dass das Harz nach dem Schmelzen den Zylinder ohne Überstand voll ausfüllt. Der resultierende Probekörper wird samt Zylinder in die Probehalterung des HRB 754 eingelegt. Zur Befüllung des Temperierbads wird Glycerin verwendet, sofern die Erweichungstemperatur zwischen 50 °C und 150 °C liegt. Bei niedrigeren Erweichungstemperaturen kann auch mit einem Wasserbad gearbeitet werden. Die Prüfkugeln haben einen Durchmesser von 9,5 mm und wiegen 3,5 g. Entsprechend der HRB 754 Prozedur wird die Kugel oberhalb des Probekörpers im Temperierbad angeordnet und auf dem Probekörper abgelegt. 25 mm unter dem Zylinderboden befindet sich eine Auffangplatte, 2 mm über dieser eine Lichtschranke. Während des Messvor-gangs wird die Temperatur mit 5 °C/min erhöht. Im Temperaturbereich der Erweichungstemperatur beginnt sich die Kugel durch die Bodenöffnung des Zylinders zu bewegen, bis sie schließlich auf der Auffangplatte zum Stehen kommt. In dieser Position wird sie von der Lichtschranke detektiert und zu diesem Zeitpunkt die Temperatur des Temperierbads registriert. Es findet eine Doppelbestimmung statt. Die Erweichungstemperatur ist der Mittelwert aus den beiden Einzelmessungen.

Weitere Referenzmethoden ergeben sich aus den Testmethoden im Experimentellen Teil

Experimenteller Teil

Testmethoden

A. Klebkraft

Für die nicht ausgehärteten Klebemassen beziehungsweise Klebebänder wurden die Klebkräfte auf Stahl analog ISO 29862 (Methode 3) bei 23 °C und 50 % relativer Luftfeuchte bei einer Abzugsgeschwindigkeit von 300 mm/min und einem Abzugswinkel von 180° bestimmt. Als Verstärkungsfolie wurde eine geätzte PET-Folie mit einer Dicke von 36 µm verwendet, wie sie von der Firma Coveme (Italien) erhältlich ist. Die Verklebung des Messtreifens wurde dabei mittels einer Anrollmaschine mit 4 kg bei einer Temperatur von 23 °C vorgenommen. Die Klebebänder wurden eine Stunde nach der Applikation abgezogen. Wird eine Klebkraft von mindestens 1 N/cm (Mittelwert aus drei Einzelmessungen) erzielt, gilt die Klebmasse als haftklebrig.

B. Verklebungsfestigkeit: Zugscherversuch

Als Kenngröße für die Qualität der erzielten Verklebung wurde die Verklebungsfestigkeit eines nach dem erfindungsgemäßen Verfahren hergestellten, ausgehärteten Verbunds für die unterschiedlichen Klebebänder ermittelt. Es wurde die Verklebungsfestigkeit in einem dynamischen Zugscherversuch in Anlehnung an DIN-EN 1465 bei 23 °C und 50 % rF für eine Prüfgeschwindigkeit von 10 mm/min jeweils quantitativ bestimmt (Ergebnisse in $N/mm^2$=MPa). Als Prüfstäbe kamen solche aus Stahl zum Einsatz, welche vor der Verklebung mit Aceton gereinigt wurden. Die Schichtdicken der Klebebänder entsprachen jeweils 100 µm ± 10 µm. Angegeben ist der Mittelwert aus drei Messungen. Gemessen wurden Verklebungen mit ausgehärteten Klebstoffen. Die Aushärtung erfolgte bei 180 °C ± 2 °C für 30 Minuten.

C. Lagerfähigkeit

Die Lagerfähigkeit (Lf) der (nicht ausgehärteten) Klebebänder wurde über DSC bestimmt. Dazu wird die Reaktionswärme von Mustern, die 10d bei 40°C ($\Delta H_{10d40}$) gelagert wurden, bestimmt und in Vergleich zur Reaktionswärme einem frisch hergestellten Musters ($\Delta H_{frisch}$) gesetzt.

$$Lf_{40} = \Delta H_{10d40} / \Delta H_{frisch}$$

Die Lagerfähigkeit entspricht somit der prozentualen Restreaktivität der reaktiven Klebebänder.

D. Löslichkeitstest

Ob es zu einer Vorreaktion (und somit zu einer Vorvernetzung beziehungsweise Teilvernetzung) zwischen dem nicht-thermoplastischen Elastomer und den Reaktivharzen kommt, wurde über einen Löslichkeitstest bestimmt.

Es wurden 2g der zu bewertenden Klebmasse direkt am Ausgang des PWE entnommen und in einem Glas in 20 mL Butanon bei Raumtemperatur für 24h gerührt. Keine Vorvernetzung liegt vor, wenn eine klare Lösung ohne Schlieren entsteht. Sind leichte Schlieren beziehungsweise aufgequollene vernetzte Klebmasseteile sichtbar, so liegt eine Vorvernetzung vor.

E. Thermoplastizität

Die Bestimmung der Thermoplastizität beziehungsweise Nicht-Thermoplastizität erfolgte auf einer Laborheizplatte der Firma Ikamag. Auf die Heizplatte wurde eine quadratische Stahlplatte entsprechend der Spezifizierung gemäß ISO 29862:2007, Abschnitt 5.3.3, aber mit eine Kantenlänge, dass die Heizplatte komplett abgedeckt war, und einer Dicke von 1,1 mm gelegt. Die Temperatur der der Heizplatte abgewandten Oberfläche der Stahlplatte wird mit einem Temperaturfühler gemessen.

Das zu testende Polymer (ein Würfel von ca. 2 cm x 2 cm x 2 cm Höhe, Breite, Tiefe) oder im Falle von Granulaten ein Granulatkügelchen wurde mittig auf die freie Oberfläche der Stahlplatte gelegt.

Es wurden drei Testreihen mit jeweils identischen Mustern des zu testenden Polymers gefahren, bei denen die Stahlplatte bei einer Testreihe auf eine Temperatur von 150 °C, bei der zweiten Testreihe auf eine Temperatur von

200 °C und bei der dritten Testreihe auf eine Temperatur von 250 °C erhitzt wurde (Heizrate jeweils ca. 1 °C pro Sekunde, Bestimmung der Temperatur mittels des Temperaturfühlers). Die Probe wurde für 1 Minute auf der jeweiligen Endtemperatur gehalten und die Stahlplatte dann auf einen Winkel von 60 ° (bezogen auf den planaren, horizontalen Untergrund) geneigt.

Die gemessene Probe gilt als nicht thermoplastisch zumindest bis zu der jeweiligen Temperatur, wenn sie bei der Neigung von selbst von der Platte fällt/rollt.

Für die gemessene Probe gilt, dass sie thermoplastisches Verhalten bereits unterhalb einer jeweiligen Temperatur aufweist, wenn sie bei dem Test zu der jeweiligen Temperatur für mindestens 2 Sekunden an der Platte anhaftet - und somit durch ein zumindest teilweises Aufschmelzen aufgeflossen ist—, wenn sie also innerhalb des Zeitraums von 2 Sekunden also nicht von selbst von der Platte fällt/rollt.

Verwendete Rohstoffe

| | |
|---|---|
| Breon N41H80 | Heißpolymerisierter Nitril-Butadien-Kautschuk mit einem Acrylnitrilanteil von 41 Gew.-%. Mooney Viskosität laut technischem Datenblatt 70 - 95. Nicht-thermoplastisch bis 250 °C nach Testmethode E für Thermoplastizität. Hersteller/Anbieter Zeon Chemicals. |
| Araldite ECN 1273 | Festes Epoxy-Cresol-Novolak mit einer Erweichungstemperatur 68 bis 78 °C und einem EEW von 217 - 233 g/eq. Hersteller/Anbieter Huntsman. |
| Epon 828 | Difunktionelles Bisphenol-A / Epichlorhydrin Flüssigepoxid mit einem Gewicht pro Epoxid von 185 bis 192 g/eq. Viskosität bei 25 °C von 12 bis 14 Pa s. Hersteller/Anbieter Momentive. |
| Struktol PolyDis 3611 (= Struktol PD3611) | Nitrilkautschukmodifiziertes Epoxidharz auf der Basis von Bisphenol-F-diglycidylether mit einem Elastomergehalt von 40 Gew.-% und einem Gewicht pro Epoxid von 550 g/eq.. Viskosität bei 25 °C von 10000 Pa s. Hersteller/Anbieter Schill + Seilacher. |
| Dyhard 100S | Latenter Härter der Firma AlzChem für Epoxidsysteme bestehend aus mikronisiertem Dicyandiamid bei dem 98 % der Partikel kleiner 10 μm sind. AEW = 12 — 14 g/eq. Hersteller/Anbieter AlzChem |
| Dyhard UR500 | Latenter Uronbeschleuniger für Epoxidsysteme, bei dem 98 % der Partikel kleiner 10 μm sind. |
| Ajicure PN-50 | Epoxy-Imidazol-Addukt mit einer Erweichungstemperatur von 100 °C bis 125 °C (verwendet wurde ein Charge mit 116°C) und einer mittleren Partikelgröße von 7,5 bis 16,5 μm. Reaktionsprodukt aus einem Epoxidharz, einem Imidazol und einer Carbonsäure (gemäß Sicherheitsdatenblatt des Herstellers). Hersteller/Anbieter Ajinomoto. |
| Ajicure MY-25 | Reaktionsprodukt aus einem Amin und einem Epoxidharz (Epoxy-Amin-Addukt), mit einer Erweichungstemperatur von 110 °C bis 150 °C (verwendet wurde eine Charge mit 128°C) und einer mittleren Partikelgröße von 7,5 bis 17,5μm. Hersteller/Anbieter Ajinomoto. |
| Curezol 2MA-OK | 2,4 Diamino-6-[2'-methylimidazolyl-(1')]-ethyl-s-triazin isocyanursäure Addukt Dihydrat. CAS: 68490-66-4. Hersteller/Anbieter Shikoku. |
| Kreide | Calciumcarbonat rein |

Massenzusammensetzung K1

| **K1** | |
|---|---|
| **Gew.- Teile** | **Rohstoff** |
| 30 | Breon N41H80 |
| 50 | Araldite ECN1273 |
| 20 | Epon 828 |
| 4,39 | Dyhard 100S |
| 0,35 | Dyhard UR500 |

Massenzusammensetzung K2

| K2 | |
|---|---|
| **Gew.- Teile** | **Rohstoff** |
| 30 | Breon N41H80 |
| 50 | Araldite ECN1273 |
| 20 | Epon 828 |
| 4,39 | Dyhard 100S |
| 1,4 | Ajicure PN-50 |

Massenzusammensetzung K3

| K3 | |
|---|---|
| **Gew.- Teile** | **Rohstoff** |
| 20 | Breon N41H80 |
| 40 | Araldite ECN1273 |
| 40 | Epon 828 |
| 4,39 | Dyhard 100S |
| 2,1 | Ajicure MY-25 |

Massenzusammensetzung K4

| K4 | |
|---|---|
| **Gew.- Teile** | **Rohstoff** |
| 20 | Breon N41H80 |
| 40 | Araldite ECN1273 |
| 40 | Epon 828 |
| 4,39 | Dyhard 100S |
| 2,1 | Curezol 2MA-OK |

Massenzusammensetzung K5

| K5 | |
|---|---|
| **Gew.- Teile** | **Rohstoff** |
| 25 | Breon N41H80 |
| 35 | Araldite ECN1273 |
| 20 | Epon 828 |
| 20 | Struktol PD3611 |
| 4,08 | Dyhard 100S |
| 2,25 | Ajicure MY-25 |

Massenzusammensetzung K6

| K6 | |
|---|---|
| **Gew.- Teile** | **Rohstoff** |
| 15 | Breon N41H80 |
| 40 | Araldite ECN1273 |
| 20 | Epon 828 |
| 25 | Struktol PD3611 |
| 5 | Kreide |
| 4,51 | Dyhard 100S |
| 2,55 | Ajicure MY-25 |

Massenzusammensetzung **K5ª** entspricht der Massenzusammensetzung K5, aber mit zusätzlichem Zusatz von Kreide als Aufschlusshilfe.

Extrusionsprozess

Verwendet wurde ein Planetwalzenextruder der Firma Entex Rust & Mitschke mit vier gekoppelten Walzenzylindern, die einen Innendurchmesser von 70 mm aufwiesen. Die ersten beiden Walzenzylinder waren mit jeweils 7 Planetenspindeln bestückt, die zwei nachfolgenden mit jeweils 6 Planetenspindeln. Der Dispergierring nach dem ersten Walzenzylinder hatte einen freien Querschnitt von 38 mm, der Dispergierring nach dem zweiten Walzenzylinder einen von 34,5 mm und der Dispergierring nach dem dritten Walzenzylinder einen von 34 mm. In der vorliegenden Ausführungsform des Planetwalzenextruders weist das Füllteil eine Förderschnecke auf, auf die das Material dosiert werden kann. Die verwendeten Prozessparameter sind im Folgenden detailliert beschrieben.

Stromabwärts des Planetwalzenextruders wurde ein Doppelschneckenextruder (DSE) als Entgasungsextruder eingesetzt (KraussMaffei Berstorff, 42 mm Schneckendurchmesser, 36 L/D), wobei in einer Entgasungszone ein Vakuum von 200 mbar angelegt wurde. Der Entgasungsextruder wurde durchgehend mit 60 °C temperiert, bei einer Drehzahl von 90 U/min.

Experimente

Experimente **E1 bis E3** erfolgten unter Einsatz der Klebmasse K1.

| **Experiment** | **Massestrom Zone 1 [kg/h]** | | **Massestrom Zone 2 [kg/h]** | **Massestrom Zone 3 [kg/h]** | | **Massestrom Entgasungs DSE [kg/h]** |
|---|---|---|---|---|---|---|
| | Breon N41H80 | Araldite ECN 1273 | Araldite ECN 1273 | Araldite ECN 1273 | Epon 828 | Dyhard 100S / Beschleuniger Batch |
| E1 | 7,5 | 7,5 | 5 | | 5 | 1,19 |
| E2 | 7,5 | 2,5 | 10 | | 5 | 1,19 |
| E3 | 7,5 | 5 | 7,5 | | 5 | 1,19 |
| V1 | 7,5 | | 7,5 | 5 | 5 | - |
| V2 | | | 5 | 7,5 | 5 | - |
| V3 | | | 2,5 | 10 | 5 | - |

Für die obigen Beispiele wurden folgende Verfahrensparameter gewählt:

| | **Zone 1** | **Zone 2** | **Zone 3** | **Zone 4** |
|---|---|---|---|---|
| **Anzahl Planeten** | 7 | 7 | 6 | 6 |

(fortgesetzt)

| | Zone 1 | Zone 2 | Zone 3 | Zone 4 |
|---|---|---|---|---|
| **$T_{Walzenzylinder}$ / °C** | 80 | 70 | 60 | 50 |
| **$T_{Zentralspindel}$ / °C** | 30 | 30 | 30 | 30 |
| **Durchmesser Dispergierring / mm** | | 38 | 34,5 | 34 |
| **Drehzahl / U/min** | 70 | | | |

Die Austrittstemperatur der Klebmasse aus dem Planetwalzenextruder lag im Bereich von 85 °C und 95 °C. Nach Durchgang durch den nachgeschalteten Doppelschneckenextruder lagen die Temperaturen auf vergleichbaren Niveau.

Für weitere Experimente **E4 bis E8** wurden die Extrusionsbedingungen und Masseströme wie oben bei E1 angegeben gefahren; jedoch teilweise abgewandelte Verfahrensparameter wie folgt gewählt.
In E4 wurde der Durchmesser des 1. Dispergierrings auf 46 mm erhöht.
Bei E5 wurde in allen Zonen mit 6 Planeten gefahren.
Für E6 wurde das Temperaturprofil der Walzenzylinder im vorderen Aufschlussbereich leicht erhöht: 90 - 80 - 60 - 50; für E7 leicht erniedrigt: 70 - 60 - 60 - 50.
E8 wurde nach den gleichen Parametern wie E1 hergestellt, jedoch wurde die Klebmasse K2, die anstelle von Dyhard UR500 ein Epoxy-Amin-Addukt als Beschleuniger enthält, verwendet.

Experimente **E9** - **E11** wurden nach dem gleichen Parametern (siehe oben "Extrusionsprozess") wie E1 durchgeführt, jedoch wurden die Klebmassenzusammensetzungen K3, K4 und K5 verwendet. Die Masseströme und Zugabepunkte waren wie folgt:

| **Experiment** | **Massestrom Zone 1 [kg/h]** | | **Massestrom Zone 2 [kg/h]** | **Massestrom Zone 3 [kg/h]** | | **Massestrom Entgasungs DSE [kg/h]** |
|---|---|---|---|---|---|---|
| | Breon N41H80 | Araldite ECN 1273 | Araldite ECN 1273 | Araldite ECN 1273 | Epon 828 | Dyhard 100S / Beschleuniger Batch |
| E9 (K3) | 5 | 5 | 5 | | 10 | 1,62 |
| E10 (K4) | 5 | 5 | 5 | | 10 | 1,62 |
| | Breon N41H80 | Struktol PD3611 | Araldite ECN 1273 | | Epon 828 | Dyhard 100S / Beschleuniger Batch |
| E11 (K5) | 6,25 | 5 | 8,75 | | 5 | 1,58 |

**E11** zeigt für K5, dass der Aufschluss auch mit viskosen Epoxidharzen gelingt.

| **Experiment** | **Massestrom Zone 1 [kg/h]** | | | **Massestrom Zone 2 [kg/h]** | **Massestrom Zone 3 [kg/h]** | | **Massestrom Entgasungs DSE [kg/h]** |
|---|---|---|---|---|---|---|---|
| | Breon N41H80 | Epon 828 | Kreide | Araldite ECN 1273 | | Struktol PD3611 | Dyhard 100S / Beschleuniger Batch |
| V4 (K5) | 6,25 | 5 | 0 | 8,75 | | 5 | 1,58 |
| E12 (K5[a]) | 6,25 | 5 | 1,25 | 8,75 | | 5 | 1,58 |

Werden die Rohstoffe von K5 in anderer Reihenfolge und entgegen des erfindungsgemäßen Verfahrens dosiert, so lässt sich der Kautschuk nicht homogen aufschließen (V4). Hier wurde K5 wie in E11 verarbeitet, jedoch wurde der Dosierpunkt des niedrigviskosen Epoxidharzes (Epon 828) in Zone 1 verschoben. Das viskose Harz (Struktol PD3611) wurde dafür in Zone 3 zudosiert. E12 zeigt, wie auch mit Hilfe von Füllstoffen in Zone 1 der Aufschluss des Kautschuks gelingt.

| Experiment | Massestrom Zone 1 [kg/h] | | | Massestrom Zone 2 [kg/h] | | Massestrom Zone 3 [kg/h] | | Masse-strom Entgasungs-. DSE [kg/h] |
|---|---|---|---|---|---|---|---|---|
| | Breon N41H80 | Kreide | Struktol PD3611 | Araldite ECN 1273 | Kreide | Struktol PD3611 | Epon 828 | Dyhard 100S / Beschleuniger Batch |
| E13 (K6) | 3,75 | 1,25 | 3 | 10 | 0 | 3,25 | 5 | 1,77 |
| V5 (K6) | 3,75 | 0 | 3 | 10 | 1,25 | 3,25 | 5 | 1,77 |

Masse K6 lässt sich nur homogen aufschließen, wenn in Zone 1 zusätzlich mindestens 10 Gew.-% Füllstoff (hier Kreide) eingemischt werden und der Masseanteil der Epoxidharze an der Gesamtmasse aus Epoxidharzen und Elastomeren in Zone 1 nicht über 50% liegt. Dies zeigt sich beim Vergleich von E13 und V5.

In V4 wurde versucht, die Klebmasse K1 in einem Doppelschneckenextruder (KraussMaffei Berstorff, 42 mm Schneckendurchmesser, 36 L/D) zu verarbeiten. Die Dosierpunkte waren in der Zugabereihenfolge analog zu E2 gewählt, wobei die Komponenten über Sidefeeds dosiert wurden.

Obwohl das Reaktivharz gleich zu Beginn im ersten Zugabepunkt - entsprechend dem erfindungsgemäßen Verfahren im PWE - zugegeben wurde, konnte kein Aufschluss des nicht-thermoplastischen Elastomers erreicht werden. Im Gegenteil, der Extruder verblockte, da der Kautschuk nicht aufgeschlossen wurde. Auch eine Erhöhung der Harzmenge (vergleichbar mit den Einstellungen von E1) führte zu einem Verblocken des Extruders. Die Zugabe von flüssigem Reaktivharz Epon 828 im ersten Zugabepunkt mit 2,5 kg/ h bis 5 kg/h verhinderte zwar die Verblockung, jedoch wurde der Nitrilkautschuk nicht aufgeschlossen. Aufgrund der großen Menge an Reaktivharz schien es so, als ob die Kautschukpartikel in der flüssigen Reaktivharzschmelze durch den Extruder "schwammen" und somit nicht ausreichend Scherung zum Aufschließen erfahren konnten.

Verwendet man einen PWE und dosiert die Reaktivharze an den falschen Dosierpunkten zu, wie in V1 bis V3, so kommt es aufgrund der enorm hohen Scherung in Zone 1 zu starker thermischer Belastung und Degradation des Nitrilkautschukes. Das extrudierte Material war tiefbraun bis schwarz gefärbt und roch sehr verkohlt. Das Material ist so stark geschädigt beziehungsweise schlecht aufgeschlossen, dass der Aufschlusstest nicht durchgeführt werden konnte. Beim Strecken reißt das Material.

Die nach dem erfindungsgemäßen Verfahren hergestellten Klebemassen E1 bis E13 wurden zwischen zwei silikonisierten PET-Linern bei 90 °C und 200 bar für 3 Minuten in einer Vakuumpresse zu 100μm dicken Filmen gepresst. Die erhaltenen Transferklebebänder zeigten folgende Verklebungseigenschaften.

| | E1 | E2 | E3 | E4 | E5 | E6 | E7 |
|---|---|---|---|---|---|---|---|
| Klebmasse | K1 | K1 | K1 | K1 | K1 | K1 | K1 |
| Klebkraft (Stahl) / N $cm^{-1}$ (haftklebrig?) | > 1 (ja) | > 1 (ja) | > 1 (ja) | > 1 (ja) | > 1 (ja) | > 1 (ja) | > 1 (ja) |
| Verklebungsfestigkeit /MPa | 12,1 | 11,7 | 12,0 | 12,4 | 11,9 | 11,9 | 12,3 |
| $Lf_{40}$ / %* | 54 | 57 | 51 | 55 | 54 | 56 | 52 |
| Aufschlusstest / Partikel pro 100 $cm^2$ | 0 | 1 | 0 | 0 | 0 | 0 | 1 |
| Vorvernetzung** | Nein | Nein | Nein | Nein | Nein | Nein | Nein |
| DSC $T_{onset}$/ °C | 156 | 155 | 157 | 155 | 155 | 156 | 156 |
| * gemessen mit dem oben beschriebenen Test zur Lagerfähigkeit<br>** gemessen mit dem oben beschriebenen Löslichkeitstest | | | | | | | |

| | E8 | E9 | E10 | E11 | E12 | E13 |
|---|---|---|---|---|---|---|
| Klebmasse | K2 | K3 | K4 | K5 | K5[a] | K6 |
| $Lf_{40}$ / %* | 99 | 100 | 91 | 98 | 100 | 99 |
| Aufschlusstest[#]/ Partikel pro 100 $cm^2$ | 0 | 1 | 0 | 0 | 2 | 1 |

(fortgesetzt)

| | E8 | E9 | E10 | E11 | E12 | E13 |
|---|---|---|---|---|---|---|
| Vorvernetzung** | Nein | Nein | Nein | Nein | Nein | Nein |
| DSC $T_{onset}$/ °C | 146 | 148 | 151 | 147 | 147 | 145 |
| # "Prüfung auf Homogenität" gemäß obiger Beschreibung: Biaxiale Streckung einer zunächst 75 μm dicken Probenschicht der Klebmasse bis zu einer resultierenden Dicke von 50 μm; dann optische Auswertung bei Durchleuchtung | | | | | | |

Die Beispiele E1 bis E7 zeigen die gleiche Klebemasse, die mit unterschiedlichen Verfahrensparametern hergestellt wurde. In allen Fällen ist der Aufschluss des Nitrilkautschukes hervorragend mit 0 bis 1 Partikel pro 100 $cm^2$ im Aufschlusstest und keiner Vorvernetzung im Löslichkeitstest. Überraschend wurde festgestellt, dass E8 bis E11 mit der Klebmasse K2 bis K5 trotz niedrigeren $T_{onset}$, das heißt die Starttemperatur der Reaktivkomponente liegt näher an den Temperaturen im Extrusionsprozess, eine deutlich stabilere Klebmasse im Lagerfähigkeitstest mit einem $Lf_{40}$ von 91 % bis 100 % erhalten wird. Ohne sich an diese Theorie binden zu wollen, wird eine positive Wechselwirkung dieses speziellen Beschleunigers mit den im Planetwalzenextruder herrschenden Scherungen und Temperaturbelastungen vermutet. Für eine besonders lange Lagerfähigkeit ist es besonders gut, wenn sich der Beschleuniger während des Herstellprozesses nicht im Klebstoff löst. Vermutlich sind diese vorreagierten Epoxy-Amin-Addukte (E8, E9, E11) und die mit Säuren stabilisierten Epoxy-Imidazol-Addukte bzw. Imidazol-Derivate "härter" und somit den Scherkräften widerstandfähiger.

## Patentansprüche

**1.** Verfahren zur Herstellung von haftklebrigen Klebemassen umfassend zumindest eine Elastomerkomponente sowie zumindest einen Reaktivklebstoff umfassend ein oder mehrere Reaktivharze, von denen zumindest ein Reaktivharz ein Epoxidharz ist, sowie zumindest einen Härter für Epoxidharze,

ausgehend von einem oder mehreren nicht-thermoplastischen Elastomeren,
**dadurch gekennzeichnet, dass**
die nicht-thermoplastischen Elastomere in einem Planetwalzenextruder mit zumindest einem Teil der Epoxidharze aufgeschlossen werden.

**2.** Verfahren nach Anspruch 1, **dadurch gekennzeichnet, dass**
sich das Reaktivsystem sich chemisch inert zu den nicht-thermoplastischen Elastomeren verhält.

**3.** Verfahren nach einem der vorangehenden Ansprüche, **dadurch gekennzeichnet, dass** als nicht-thermoplastische Elastomere teilweise oder ausschließlich ein oder mehrere Nitrilkautschuke eingesetzt werden.

**4.** Verfahren nach Anspruch 3, **dadurch gekennzeichnet, dass**
als Nitrilkautschuke teilweise oder ausschließlich solche mit einem Acrylnitrilantreil von mindestens 25 %, bevorzugt von mindestens 30 %, sehr bevorzugt von mindestens 40 % eingesetzt werden.

**5.** Verfahren nach einem der vorangehenden Ansprüche, **dadurch gekennzeichnet, dass**

der Planetwalzenextruder mehrere hintereinander angeordnete Compoundierzonen umfasst,
die nicht-thermoplastischen Elastomere kontinuierlich durch die erste Compoundierzone gefördert werden und der zum Aufschluss der nicht-thermoplastischen Elastomere verwendete Teil der Epoxidharze kontinuierlich in die erste der Compoundierzonen derart eingebracht werden,
dass in der ersten Compoundierzone eine Compoundiermasse resultiert, in der der Massenanteil an Epoxidharzen an der Gesamtmasse von Epoxidharzen und nicht-thermoplastischen Elastomeren maximal 66,66 % ist.

**6.** Verfahren nach einem der vorangehenden Ansprüche, **dadurch gekennzeichnet, dass**

die nicht-thermoplastischen Elastomere kontinuierlich durch die erste Compoundierzone gefördert werden und der zum Aufschluss der nicht-thermoplastischen Elastomere verwendete Teil der Epoxidharze kontinuierlich in die erste der Compoundierzonen derart eingebracht werden,

dass in der ersten Compoundierzone eine Compoundiermasse resultiert, in der der Massenanteil an Epoxidharzen an der Gesamtmasse von Epoxidharzen und nicht-thermoplastischen Elastomeren nicht weniger als 10 % ist, bevorzugt nicht weniger als 16,66 % ist.

**7.** Verfahren nach einem der vorangehenden Ansprüche, **dadurch gekennzeichnet, dass**

die nicht-thermoplastischen Elastomere kontinuierlich durch die erste Compoundierzone gefördert werden und der zum Aufschluss der nicht-thermoplastischen Elastomere verwendete Teil der Epoxidharze kontinuierlich in die erste der Compoundierzonen derart eingebracht werden,
dass in der ersten Compoundierzone eine Compoundiermasse resultiert, in der der Massenanteil an Epoxidharzen an der Gesamtmasse von Epoxidharzen und nicht-thermoplastischen Elastomeren im Bereich zwischen 25 % und 60 % liegt.

**8.** Verfahren nach einem der vorangehenden Ansprüche, **gekennzeichnet durch** die Abwesenheit von Klebharzen in der ersten Compoundierzone.

**9.** Verfahren nach einem der vorangehenden Ansprüche, **dadurch gekennzeichnet, dass**

• der Elastomer-Massenanteil an der Gesamtmasse von Reaktivharzen und Elastomeren in der resultieren haftklebrigen Klebemasse mindestens 20 Gew.-% beträgt,
• der zum Aufschluss verwendete Teil der Epoxidharze in der ersten Compoundierzone ausschließlich Epoxidharze mit einer Erweichungstemperatur von mindestens 40 °C und/oder Epoxidharze mit einer Viskosität von mehr als 50 Pa·s bei Raumtemperatur umfasst.

**10.** Verfahren nach einem der Ansprüche 1 bis 8, **dadurch gekennzeichnet, dass**

• der Elastomer-Massenanteil an der Gesamtmasse von Reaktivharzen und Elastomeren in der resultieren haftklebrigen Klebemasse weniger als 20 Gew.-% beträgt,
• der zum Aufschluss verwendete Teil der Epoxidharze in der ersten Compoundierzone ausschließlich Epoxidharze mit einer Erweichungstemperatur von mindestens 40 °C und/oder Epoxidharze mit einer Viskosität von mehr als 50 Pa·s bei Raumtemperatur umfasst,
• der Massenanteil an Epoxidharzen an der Gesamtmasse von Epoxidharzen und nicht-thermoplastischen Elastomeren in der ersten Compoundierzone nicht über 50 % liegt, insbesondere im Bereich von 25 bis 50 % liegt,
• in der ersten Compoundierzone weiterhin mindesten 10 Gew.-% Füllstoffe in die Compoundiermasse zugemischt sind, bezogen auf die dann vorliegende gesamte Compoundiermasse.

**11.** Verfahren nach einem der vorangehenden Ansprüche, **dadurch gekennzeichnet, dass**

• der Planetwalzenextruder mehrere hintereinander angeordnete Compoundierzonen umfasst,
• zumindest die Gesamtheit der nicht-thermoplastischen Elastomere und der zum Aufschluss verwendete Teil der Epoxidharze kontinuierlich in die erste der Compoundierzonen eingebracht werden,
• der zum Aufschluss verwendete Teil der Epoxidharze in der ersten Compoundierzone ausschließlich Epoxidharze mit einer Viskosität von weniger als 50 Pa·s bei Raumtemperatur umfasst,
• der Massenanteil an Epoxidharzen an der Gesamtmasse von Epoxidharzen und nicht-thermoplastischen Elastomeren in der ersten Compoundierzone nicht über 60 % liegt, insbesondere im Bereich von 25 bis 60 % liegt,
• in der ersten Compoundierzone weiterhin mindestens 10 Gew.-% Füllstoffe in die Compoundiermasse zugemischt sind, bezogen auf die dann vorliegende gesamte Compoundiermasse.

**12.** Verfahren nach einem der vorangehenden Ansprüche, **dadurch gekennzeichnet, dass**
der zum Aufschluss verwendete Teil der Epoxidharze in der ersten Compoundierzone Epoxidharze mit einer Erweichungstemperatur von mindestens 40 °C umfasst und die Temperatur der Compoundiermasse der ersten Compoundierzone höher ist als die Erweichungstemperatur des dort anwesenden Epoxidharzes mit der höchsten Erweichungstemperatur.

**13.** Verfahren nach Anspruch 7, **dadurch gekennzeichnet, dass**
die in einer oder mehreren der ersten Compoundierzone nachfolgenden Compoundierzonen zugegebenen Reaktivharze, insbesondere Epoxidharze, sich von den in der ersten Compoundierzone zugegebenen Reaktivharzen chemisch unterscheiden.

**14.** Verfahren nach einem der vorangehenden Ansprüche, **dadurch gekennzeichnet, dass** der zumindest eine Härter in einer oder mehreren der ersten Compoundierzone nachfolgenden Compoundierzonen und/oder in einer dem Planetwalzenextruder unmittelbar oder mittelbar nachgeschalteten Einheit zugegeben wird.

**15.** Verfahren nach einem der vorangehenden Ansprüche, **dadurch gekennzeichnet, dass** der überwiegende Teil der insgesamt eingesetzten Reaktivharze Epoxidharze sind.

## Claims

**1.** Method for producing pressure-sensitive adhesives comprising at least one elastomer component and also at least one reactive adhesive comprising one or more reactive resins, of which at least one reactive resin is an epoxy resin, and also at least one hardener for epoxy resins,

starting from one or more non-thermoplastic elastomers,
**characterized in that**
the non-thermoplastic elastomers are digested in a planetary roller extruder with at least a part of the epoxy resins.

**2.** Method according to Claim 1, **characterized in that** the reactive system is chemically inert to the non-thermoplastic elastomers.

**3.** Method according to either of the preceding claims, **characterized in that** non-thermoplastic elastomers used comprise partially or exclusively one or more nitrile rubbers.

**4.** Method according to Claim 3, **characterized in that** nitrile rubbers used comprise partially or exclusively those having an acrylonitrile fraction of at least 25%, preferably of at least 30%, very preferably of at least 40%.

**5.** Method according to any of the preceding claims, **characterized in that**

the planetary roller extruder comprises a plurality of serial compounding zones,
the non-thermoplastic elastomers are conveyed continuously through the first compounding zone, and the part of the epoxy resins used for digesting the non-thermoplastic elastomers is introduced continuously into the first of the compounding zones in such a way
as to result, in the first compounding zone, in a compounding composition in which the mass fraction of epoxy resins within the total mass of epoxy resins and non-thermoplastic elastomers is not more than 66.66%.

**6.** Method according to any of the preceding claims, **characterized in that**

the non-thermoplastic elastomers are conveyed continuously through the first compounding zone, and the part of the epoxy resins used for digesting the non-thermoplastic elastomers is introduced continuously into the first of the compounding zones in such a way
as to result, in the first compounding zone, in a compounding composition in which the mass fraction of epoxy resins within the total mass of epoxy resins and non-thermoplastic elastomers is not less than 10%, preferably not less than 16.66%.

**7.** Method according to any of the preceding claims, **characterized in that**

the non-thermoplastic elastomers are conveyed continuously through the first compounding zone, and the part of the epoxy resins used for digesting the non-thermoplastic elastomers is introduced continuously into the first of the compounding zones in such a way
as to result, in the first compounding zone, in a compounding composition in which the mass fraction of epoxy resins within the total mass of epoxy resins and non-thermoplastic elastomers is in the range between 25% and 60%.

**8.** Method according to any of the preceding claims, **characterized by** the absence of tackifier resins in the first compounding zone.

**9.** Method according to any of the preceding claims, **characterized in that**

• the elastomer mass fraction within the total mass of reactive resins and elastomers in the resultant pressure-sensitive adhesive is at least 20 wt%,
• the part of the epoxy resins used for digestion in the first compounding zone comprises exclusively epoxy resins having a softening temperature of at least 40°C and/or epoxy resins having a viscosity of more than 50 Pa-s at room temperature.

**10.** Method according to any of Claims 1 to 8, **characterized in that**

• the elastomer mass fraction within the total mass of reactive resins and elastomers in the resultant pressure-sensitive adhesive is less than 20 wt%,
• the part of the epoxy resins used for digestion in the first compounding zone comprises exclusively epoxy resins having a softening temperature of at least 40°C and/or epoxy resins having a viscosity of more than 50 Pa-s at room temperature,
• the mass fraction of epoxy resins within the total mass of epoxy resins and non-thermoplastic elastomers in the first compounding zone is not above 50%, more particularly is in the range from 25% to 50%,
• in the first compounding zone, additionally, at least 10 wt% of fillers are admixed to the compounding composition, based on the total compounding composition then present.

**11.** Method according to any of the preceding claims, **characterized in that**

• the planetary roller extruder comprises a plurality of serial compounding zones,
• at least the entirety of the non-thermoplastic elastomers and the part of the epoxy resins used for digestion are introduced continuously into the first of the compounding zones,
• the part of the epoxy resins used for digestion in the first compounding zone comprises exclusively epoxy resins having a viscosity of less than 50 Pa·s at room temperature,
• the mass fraction of epoxy resins within the total mass of epoxy resins and non-thermoplastic elastomers in the first compounding zone is not above 60%, more particularly is in the range from 25% to 60%,
• in the first compounding zone, additionally, at least 10 wt% of fillers are admixed to the compounding composition, based on the total compounding composition then present.

**12.** Method according to any of the preceding claims, **characterized in that** the part of the epoxy resins used for digestion in the first compounding zone comprises epoxy resins having a softening temperature of at least 40°C, and the temperature of the compounding composition of the first compounding zone is higher than the softening temperature of the epoxy resin present therein that has the highest softening temperature.

**13.** Method according to Claim 7, **characterized in that** the reactive resins, more particularly epoxy resins, added in one or more compounding zones following the first compounding zone differ chemically from the reactive resins added in the first compounding zone.

**14.** Method according to any of the preceding claims, **characterized in that** the at least one hardener is added in one or more compounding zones following the first compounding zone and/or in a unit directly or indirectly downstream of the planetary roller extruder.

**15.** Method according to any of the preceding claims, **characterized in that** the predominant part of the reactive resins employed overall are epoxy resins.

**Revendications**

**1.** Procédé de fabrication de masses adhésives de contact comprenant au moins un composant élastomère ainsi qu'au moins un adhésif réactif comprenant une ou plusieurs résines réactives, parmi lesquelles au moins une résine réactive est une résine époxyde, ainsi qu'au moins un durcisseur pour résines époxydes,

à partir d'un ou plusieurs élastomères non thermoplastiques,
**caractérisé en ce que**
les élastomères non thermoplastiques sont décomposés avec au moins une partie des résines époxydes dans une extrudeuse à vis planétaires.

2. Procédé selon la revendication 1, **caractérisé en ce que** le système réactif présente un comportement chimiquement inerte vis-à-vis des élastomères non thermoplastiques.

3. Procédé selon l'une des revendications précédentes, **caractérisé en ce que** en tant qu'élastomères non thermoplastiques, on utilise en partie ou en totalité un ou plusieurs caoutchoucs nitriles.

4. Procédé selon la revendication 3, **caractérisé en ce qu'**on utilise en tant que caoutchoucs nitriles, en totalité ou en partie, ceux ayant une proportion d'acrylonitrile d'au moins 25 %, de préférence d'au moins 30 %, tout spécialement d'au moins 40 %.

5. Procédé selon l'une des revendications précédentes, **caractérisé en ce que** l'extrudeuse à vis planétaires comprend plusieurs zones de compoundage disposées les unes derrière les autres,

   les élastomères non thermoplastiques sont transportés en continu à travers la première zone de compoundage, et la partie des résines époxydes utilisée pour décomposer les élastomères non thermoplastiques est introduite en continu dans la première des zones de compoundage,
   de telle sorte que l'on obtienne dans la première zone de compoundage une masse de compoundage dans laquelle la proportion en masse des résines époxydes, par rapport à la masse totale des résines époxydes et des élastomères non thermoplastiques, est au maximum de 66,66 %.

6. Procédé selon l'une des revendications précédentes, **caractérisé en ce que**

   les élastomères non thermoplastiques sont transportés en continu à travers la première zone de compoundage, et la partie des résines époxydes utilisée pour décomposer les élastomères non thermoplastiques est introduite en continu dans la première des zones de compoundage,
   de telle sorte que l'on obtienne dans la première zone de compoundage une masse de compoundage dans laquelle la proportion en masse des résines époxydes, par rapport à la masse totale des résines époxydes et des élastomères non thermoplastiques, n'est pas inférieure à 10 %, de préférence n'est pas inférieure à 16,66 %.

7. Procédé selon l'une des revendications précédentes, **caractérisé en ce que**

   les élastomères non thermoplastiques sont transportés en continu à travers la première zone de compoundage, et la partie des résines époxydes utilisée pour décomposer les élastomères non thermoplastiques est introduite en continu dans la première zone de compoundage,
   de telle sorte que l'on obtienne dans la première zone de compoundage une masse de compoundage dans laquelle la proportion en masse des résines époxydes, par rapport à la masse totale des résines époxydes et des élastomères non thermoplastiques, est comprise dans la plage de 25 % à 60 %.

8. Procédé selon l'une des revendications précédentes, **caractérisé par** l'absence de résines adhésives dans la première zone de compoundage.

9. Procédé selon l'une des revendications précédentes, **caractérisé en ce que**

   • la proportion en masse des élastomères par rapport à la masse totale des résines réactives et des élastomères dans la masse adhésive de contact obtenue est d'au moins 20 % en poids,
   • la partie des résines époxydes utilisée pour la décomposition dans la première zone de compoundage comprend exclusivement des résines époxydes ayant une température de ramollissement d'au moins 40 °C et/ou des résines époxydes ayant une viscosité supérieure à 50 Pa·s à la température ambiante.

10. Procédé selon l'une des revendications 1 à 8, **caractérisé en ce que**

   • la proportion en masse des élastomères par rapport à la masse totale des résines réactives et des élastomères dans la masse adhésive de contact obtenue est inférieure à 20 % en poids,
   • la partie des résines époxydes utilisée pour la décomposition dans la première zone de compoundage comprend exclusivement des résines époxydes ayant une température de ramollissement d'au moins 40 °C et/ou des résines époxydes ayant une viscosité supérieure à 50 Pa·s à la température ambiante,
   • la proportion en masse des résines époxydes par rapport à la masse totale des résines époxydes et des élastomères non thermoplastiques dans la première zone de compoundage n'est pas supérieure à 50 %, en

particulier est comprise dans la plage de 25 à 50 %,
• dans la première zone de compoundage, on ajoute en outre au moins 10 % en poids de charges à la masse de compoundage, par rapport à la masse de compoundage totale alors obtenue.

**11.** Procédé selon l'une des revendications précédentes, **caractérisé en ce que**

• l'extrudeuse à vis planétaires comprend plusieurs zones de compoundage disposées les unes derrière les autres,
• au moins la totalité des élastomères non thermoplastiques et la partie des résines époxydes utilisée pour la décomposition sont introduites en continu dans la première des zones de compoundage,
• la partie des résines époxydes utilisée pour la décomposition dans la première zone de compoundage comprend exclusivement des résines époxydes ayant une viscosité inférieure à 50 Pa·s à la température ambiante,
• la proportion en masse des résines époxydes par rapport à la masse totale des résines époxydes et des élastomères non thermoplastiques dans la première zone de compoundage n'est pas supérieure à 60 %, en particulier est comprise dans la plage de 25 à 60 %,
• dans la première zone de compoundage, on ajoute en outre au moins 10 % en poids de charges à la masse de compoundage, par rapport à la masse de compoundage totale alors obtenue.

**12.** Procédé selon l'une des revendications précédentes, **caractérisé en ce que** la partie des résines époxydes utilisée pour la décomposition dans la première zone de compoundage comprend des résines époxydes ayant une température de ramollissement d'au moins 40 °C et la température de la masse de compoundage de la première zone de compoundage est supérieure à la température de ramollissement de la résine époxyde, qui s'y trouve, ayant la température de ramollissement la plus élevée.

**13.** Procédé selon la revendication 7, **caractérisé en ce que**
les résines réactives introduites dans une ou plusieurs des zones de compoundage suivant la première zone de compoundage, en particulier les résines époxydes, se distinguent d'un point de vue chimique des résines réactives introduites dans la première zone de compoundage.

**14.** Procédé selon l'une des revendications précédentes, **caractérisé en ce que**
l'au moins un durcisseur est ajouté à une ou plusieurs des zones de compoundage suivant la première zone de compoundage et/ou à une unité montée directement ou indirectement en aval de l'extrudeuse à vis planétaires.

**15.** Procédé selon l'une des revendications précédentes, **caractérisé en ce que** la majeure partie des résines réactives utilisées en totalité sont des résines époxydes.

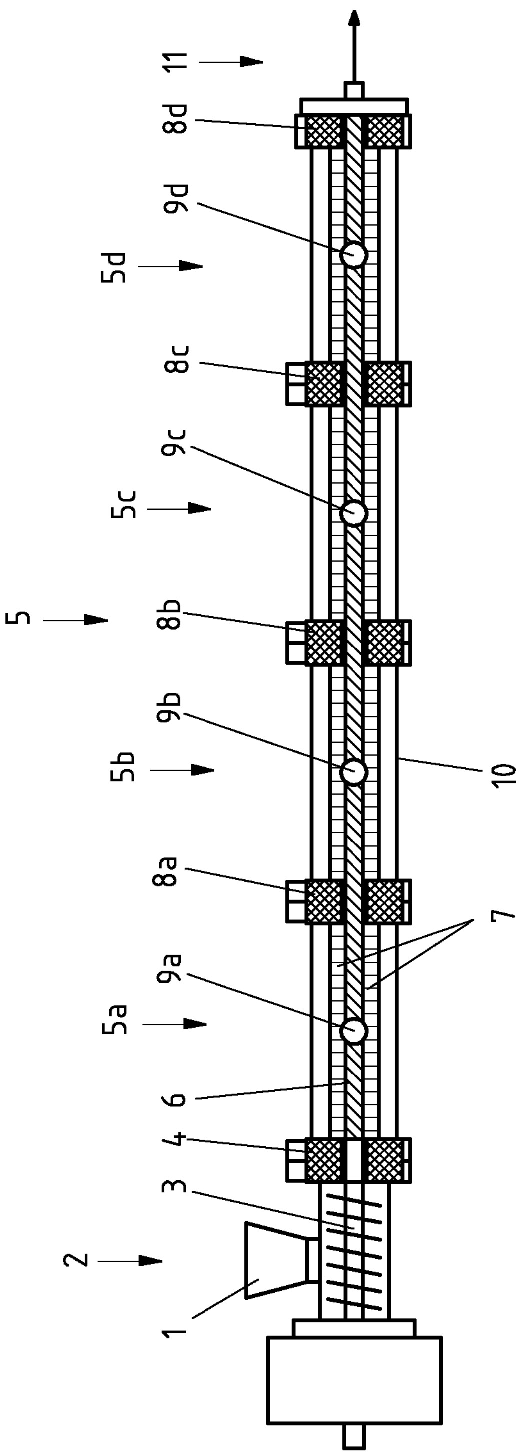


FIG.1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2007093318 A
- DE 102015217860 A
- DE 19806609 A
- DE 102009025641 A
- US 8741094 B
- EP 1819794 A
- WO 2006131214 A
- EP 2098354 A1
- US 3117099 A
- US 3018262 A
- EP 1114834 A
- US 8835574 A
- EP 2799509 A
- US 6908722 B1
- US 4231951 A
- US 4256828 A
- US 4058401 A
- US 4138255 A
- US 2010063221 A1
- US 3729313 A
- US 3741769 A
- US 4250053 A
- US 4394403 A
- EP 0542716 B1


### In der Beschreibung aufgeführte Nicht-Patentliteratur


- *CHEMICAL ABSTRACTS,* 3058-05-7
- *CHEMICAL ABSTRACTS,* 68490-66-4